# EUROPÄISCHE PATENTSCHRIFT

(11) **EP 1 692 149 B1**
(45) Veröffentlichungstag und Bekanntmachung des Hinweises auf die Patenterteilung: **22.07.2009**
(21) Anmeldenummer: 04820077.8
(22) Anmeldetag: 10.12.2004
(51) Int. Cl.: C07F 9/48, C07F 17/02

(54) **VERFAHREN ZUR HERSTELLUNG VON ORTHOMETALLIERTEN UND ORTHOSUBSTITUIERTEN AROMATISCHEN VERBINDUNGEN**
METHOD FOR PRODUCING ORTHOMETALATED AND ORTHOSUBSTITUTED AROMATIC COMPOUNDS
PROCEDE DE PRODUCTION DE COMPOSES AROMATIQUES ORTHOMETALLES ET ORTHOSUBSTITUES

(30) Priorität: 12.12.2003 CH 213403
(43) Veröffentlichungstag der Anmeldung: 23.08.2006
(73) Patentinhaber: Solvias AG, 4057 Basel (CH)
(72) Erfinder: PFALTZ, Andreas, CH-4102 Binningen (CH); LOTZ, Matthias, CH-4054 Basel (CH); SCHÖNLEBER, Marc, CH-4053 Basel (CH); PUGIN, Benoît, CH-4142 Münchenstein (CH); KESSELGRUBER, Martin, CH-4052 Basel (CH); THOMMEN, Marc, CH-4412 Nuglar (CH)
(74) Vertreter: Pommerenke, Alexander
(86) Internationale Anmeldenummer: PCT/EP2004/053388
(87) Internationale Veröffentlichungsnummer: WO 2005/056566

(56) Entgegenhaltungen:
- EP-A- 0 803 510
- EP-B- 0 842 140
- WO-A-02/083695
- WO-A-03/031456
- WO-A-03/048107
- WO-A-03/076451
- WO-A-03/093285
- DE-A1- 10 052 391
- DREWELIES K ET AL: "o- and m- Phenylene- bis(dichlorophosphane)-versatile, useful synthetic building blocks" ANGEWANDTE CHEMIE. INTERNATIONAL EDITION, VERLAG CHEMIE. WEINHEIM, DE, Bd. 21, Nr. 8, 1982, Seiten 638-639, XP002192246 ISSN: 0570-0833 in der Anmeldung erwähnt
- MEHRING, MICHAEL ET AL: "The First Rigid O,C,O-Pincer Ligand and Its Application for the Synthesis of Penta- and Hexacoordinate Organotin(IV) Compounds" ORGANOMETALLICS , 17(6), 1227-1236 CODEN: ORGND7; ISSN: 0276-7333, 1998, XP002323768
- REETZ M T ET AL: "New non-C2-symmetric phosphine-phosphonites as ligands in asymmetric metal catalysis" TETRAHEDRON: ASYMMETRY, ELSEVIER SCIENCE PUBLISHERS, AMSTERDAM, NL, Bd. 10, Nr. 11, 4. Juni 1999 (1999-06-04), Seiten 2129-2137, XP004174097 ISSN: 0957-4166
- KOTTSIEPER K W ET AL: "Synthesis of enantiopure C1 symmetric diphosphines and phosphino-phosphonites with ortho-phenylene backbones" TETRAHEDRON: ASYMMETRY, ELSEVIER SCIENCE PUBLISHERS, AMSTERDAM, NL, Bd. 12, Nr. 8, 21. Mai 2001 (2001-05-21), Seiten 1159-1169, XP004245864 ISSN: 0957-4166
- DAVIS M ET AL: "The synthesis of certain chelating ditertiary phosphines" JOURNAL OF THE CHEMICAL SOCIETY, CHEMICAL SOCIETY. LETCHWORTH, GB, 1964, Seiten 3786-3790, XP002160687 ISSN: 0368-1769
- ALMENA PEREA J J ET AL: "Synthesis and application of C2-symmetric diamino FERRIPHOS as ligands for enantioselective Rh-catalyzed preparation of chiral alpha-amino acids" TETRAHEDRON: ASYMMETRY, ELSEVIER SCIENCE PUBLISHERS, AMSTERDAM, NL, Bd. 10, Nr. 2, 29. Januar 1999 (1999-01-29), Seiten 375-384, XP004158858 ISSN: 0957-4166

## Beschreibung

Die vorliegende Erfindung betrifft ein Verfahren zur Herstellung von in Orthostellung zu einer sekundären, zwei O-P-, zwei N-P-Bindungen oder eine O-P- und eine N-P-Bindung enthaltenden Phosphingruppe oder deren Boranaddukte, metallierten Metallocenen unter direkter Substitution des ortho-Wasserstoffatoms mit einer Litium- oder Magnesium-organischen Verbindung und gegebenenfalls anschliessender Ummetallierung; die mit dem Verfahren erhältlichen orthometallierten Metallocen-Phosphine; ein Verfahren zur Herstellung orthosubstituierter Metallocen-Phosphine mit einer sekundären, zwei O-P-, zwei N-P-Bindungen oder einer O-P- und einer N-P-Bindung enthaltenden Phosphingruppen durch Umsetzung eines entsprechenden orthometallierten Metallocen-Phosphins mit elektrophilen Verbindungen; und bei diesem Verfahren erhaltene Zwischenprodukte.

In Orthostellung substituierte aromatische Mono- und Diphosphine mit sekundären Phosphinogruppen wie zum Beispiel aus der Gruppe der Di(sekundärphosphino)ferrocene und der 1,2-Di(sekundärphosphino)benzole haben sich als wertvolle Liganden für Katalysatoren insbesondere zur enantioselektiven Hydrierung prochiraler organischer Verbindungen erwiesen. Liganden solcher Art sind vielfach in der Literatur beschrieben. Ferrocenyldiphosphine sind zum Beispiel beschrieben in Tetrahedron: Asymmetry 9 (1998), Seiten 2377-2407 (C.J. Richards, A.J. Locke), WO 00/37478. Angew. Chem., 114 (2002) 24, Seiten 4902-4905 (M. Lotz, K. Polborn, P. Knochel), EP-A1-0 564 406, EP-A1-0 612 758 und EP-A1-0 646 590. 1,2-Diphosphinbenzole sind zum Beispiel in EP-A1-0 592 552 und EP-A1-0 889 048 beschrieben.

Zur Substitution von aromatischen Verbindungen in Orthostellung enthalten aromatische Verbindungen oft orthodirigierende Substituenten, die über ein Kohlenstoffatom, Sauerstoffatom oder Stickstoffatom an den aromatischen Grundkörper gebunden sind. Solche Substituenten können nicht unter milden Reaktionsbedingungen ausgetauscht werden, um zum Beispiel in Folgeschritten aromatische 1,2-Diphosphine herzustellen. Phosphingruppen werden daher oft in oder mit den orthodirigierenden Substituenten eingeführt, um zu Diphosphinliganden zu gelangen, wie dies unter anderem in der zuvor genannten Literatur beschrieben ist. Aromatische Orthodiphosphine mit direkt an den aromatischen Grundkörper gebundenen Phosphingruppen, sowie andere mehrzähnige Phosphinliganden, welche in Orthostellung zur Phosphingruppe einen nicht orthodirigierenden Substituenten besitzen, können auf diesem Weg nicht synthetisiert werden.

Eine Synthesemethode für Ferrocenyl-1,2-diphosphine mit einer abspaltbaren Sulfoxylgruppe ist von F. Rebière in Angew. Chem. (1993), Seite 105 beschrieben. Die Sulfoxylgruppe bewirkt bei der Umsetzung mit Lithiumbutyl orthodirigierend und mit der weiteren Umsetzung mit einem sekundären Phosphinhalogenid erhält man 1-Toluylsulfoxyl-2-sekundärphosphino-ferrocene. Die Sulfoxylgruppe kann dann substituiert werden, um zu Ferrocenyl-1,2-diphosphinen zu gelangen. Diese Synthesemethode ist zum einen sehr aufwendig und man erhält die gewünschten Verbindungen auch in nur geringen Ausbeuten. Ein erstes Problem ist die Herstellung des chiralen und optisch reinen Ferrocen-Sulfoxids, die über Ferrocen-Zinnverbindungen erfolgen muss, welche nur aufwendig herzustellen sind. Ausgehend von Ferrocen-Lithium und optisch reinem Menthyl-p-Tolylsulfinat ist die Racemisierung ein Problem. Das chirale Ferrocenyl-Sulfoxid wird mit nur 83% ee erhalten. Das Produkt muss nach chromatographischer Reinigung noch 2 mal umkristallisiert werden, um ein optisch reines Produkt (ee 99.3%, Ausbeute 49%) zu erhalten. Ein zweites Problem ist der Austausch der Sulfoxidgruppe, nachdem über eine ortho-Lithüerung durch Umsetzung mit einer elektrophilen Verbindung ein Substituent in Orthostellung eingeführt wurde. Die Abspaltung der Sulfoxidgruppe erfolgt üblicherweise mit t-Butyl-Lithium, die resultierenden Lithium-Ferrocenyle zersetzen sich sehr leicht und sie besitzen auch bei tiefen Temperaturen eine nur sehr kurze Lebensdauer. Das Verfahren ist daher nicht für einen industriellen Massstab geeignet.

K. Drewelies et al. beschreiben in Angew. Chem. (1982), 94(8), Seite 642 die Herstellung von 1,2-Bis(dichlorophosphin)-benzol, bei der das Bromatom in 1-Bis(dimethylamino)phosphin-2-brom-benzol mittels Umsetzung mit Lithiumbutyl durch Lithium ersetzt wird, anschliessend mit Bis(dimethylamino)phosphinchlorid zum 1,2-Bis(dimethylamino)phosphin-benzol umsetzt, aus dem man durch Einwirkung von HCI in Diethylether 1,2-Bis(dichlorophosphin)-benzol erhält. Die Orthosubstitution wird bei dieser Methode durch die Anwesenheit des Bromatoms erzwungen. Die Bereitstellung bromierter Ausgangsprodukte bedeutet auch einen erhöhten synthetischen Aufwand.

Aus der WO 031031456A2 ist bekannt, dass 3-(Dimethylamino)phosphin-thiophen nach Umsetzung mit Lithiumbutyl ohne Isolierung der Zwischenstufe weiter mit Bis(dimethylamino)-phosphinchlorid zu 2,3-Bis(dimethylamino)phosphin-thiophen umgesetzt werden kann. Die Substitution in Orthostellung ist durch die Aktivierung des Wasserstoffatoms in α-Stellung zum S-Atom bedingt.

Eine direkte Metallierung nicht-aktivierter Wasserstoffatome in Orthostellung zu einem P(III)-Substituenten von Metallocenen ist noch nicht bekannt. Es besteht ein Bedarf an einer solchen synthetischen Methode, um insbesondere Metallocen-1,2-diphosphine auf einfachere Weise auch in grösserem Massstab herstellen zu können.

Es wurde nun überraschend gefunden, dass man mit organischen Lithium- oder Magnesiumverbindungen in Metallocenen das nicht-aktivierte Wasserstoffatom in Orthostellung zur Phosphingruppe dann in hohen Ausbeuten regioselektiv metallieren kann, wenn die Phosphingruppe Amino- und/oder Oxysubstituenten enthält. Die Reaktion verläuft dann besonders gut, wenn am P-Atom zusätzlich Boran der Formel BH₃ gebunden ist. Diese metallierten Verbindungen können dann mit einer Vielzahl elekrophiler Verbindungen unter Substitution des Metalls in wertvolle Zwischenprodukte umgewandelt werden, aus denen man insbesondere Liganden für homogene Metallkatalysatoren erhalten kann, indem man in an sich bekannter Weise die Phosphingruppe mit Amino- und/oder Oxysubstituenten in eine sekundäre Phosphingruppe mit Kohlenwasserstoffsubstituenten überführt. Mit diesem Gesamtverfahren: können Diphosphinliganden und andere mehrzähnige Liganden mit wenigstens einer Phosphingruppe wesentlich wirtschaftlicher und in höheren Gesamtausbeuten selbst in grösserem Massstab hergestellt werden.

In Metallocenen, zum Beispiel Ferrocen, wird mit der Metallierung eine planare Chiralität erzeugt. Es wurde zusätzlich überraschend gefunden, dass die Metallierung dann hoch stereoselektiv verläuft, wenn an die N- beziehungsweise O-Atome in der Phosphingruppe chirale Reste gebunden sind, die insbesondere in α-Stellung zu den N- beziehungsweise O-Atomen ein chirales C-Atom enthalten. Auf diese Weise werden mit der Synthese direkt Diastereomere in hohen optischen Ausbeuten erhalten, so dass aufwendige Trennoperationen vermeidbar sind.

Ein erster Gegenstand der Erfindung ist ein Verfahren zur Herstellung von Ferrocen, Bisindenylferrocen oder Ruthenocen mit einem Strukturelement der Formel I im aromatischen Kohlenwasserstoffring, 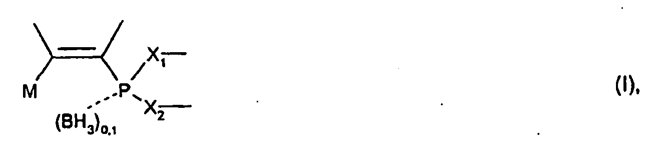 worin
M für -Li, -MgX₃, (C₁-C₁₈-Alkyl)₃Sn-, -ZnX₃ oder -B(O-C₁-C₄-Alkyl)₂ steht,
X₁ und X₂ unabhängig voneinander O oder N- bedeuten, und an die freien Bindungen der O- und N-Atome C-gebundene Kohlenwasserstoff oder Heterokohlenwasserstoffreste gebunden sind,
die Gruppe -C=C- zusammen mit C- Atomen einen Kohlenwasserstoffaromaten bildet, und
X₃ Cl, Br oder I darstellt,
das dadurch gekennzeichnet ist, dass man ein Ferrocen, Bisindenylferrocen oder Ruthenocen mit einem Strukturelement der Formel 11 im aromatischen Ring, 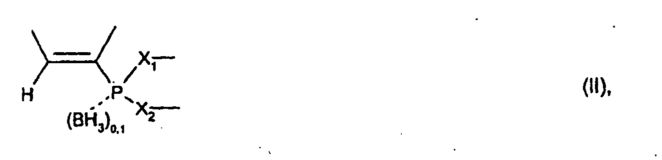
worin X₁ und X₂ die zuvor angegebenen Bedeutungen haben und die Gruppe -C=C- zusammen mit C- Atomen einen Kohlenwasserstoffaromaten bildet,
mit wenigstens äquivalenten Mengen Lithiumalkyl, einer Magnesium-Grignardverbindung, oder einem aliphatischen Li-Sekundäramid oder X₃Mg-Sekundäramid umsetzt, und zur Herstellung von Verbindungen der Formel 1, worin M für -MgX₃, (C₁-C₁₈-Alkyl)₃Sn-, -ZnX₃ oder - B(O-C₁-C₄-Alkyl)₂ steht, eine Lithiumverbindung der Formel Ia, 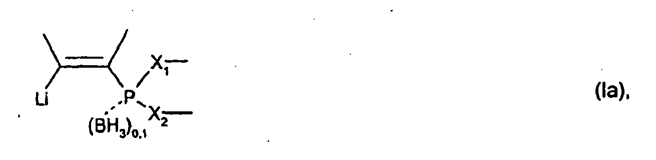
mit wenigstens äquivalenten Mengen Mg(X₃)₂, Zn(X₃)₂, (C₁-C₁₈-Alkyl)₃SnX₃ oder B(O-C₁-C₄-Alkyl)₃ umsetzt.

Zur Erläuterung wird ausgeführt, dass im Rahmen der Erfindung Strukturelemente der Formel I in verschiedenen aromatischen Kohlenwasserstoffringen eines Ferrocens, Bisindenylferrocens oder Ruthenocens vorhanden sein können, zum Beispiel in beiden Cyclopentadienylringen eines Ferrocens.

Aliphatisches Li-Sekundäramid oder X₃Mg-Sekundäramid kann sich von Sekundäraminen ableiten, die 2 bis 18, bevorzugt 2 bis 12, und besonders bevorzugt 2 bis 10 C-Atome enthalten. Bei den an das N-Atom gebundenen aliphatischen Resten kann es sich um Alkyl, Cycloalkyl oder Cycloalkyl-alkyl handeln, oder es kann sich um N-heterocyclische Ringe mit 4 bis 12, und bevorzugt 5 bis 7 C-Atomen handeln. Beispiele für an das N-Atom gebundene Reste sind Methyl, Ethyl, n-Propyl, n-Butyl. Pentyl, Hexyl, Cyclopentyl, Cyclohexyl, und Cyclohexylmethyl. Beispiele für N-heterocyclische Ringe sind Pyrrolidin, Piperidin, Morpholin, N-Methylpiperazin, 2,2,6,6-Tetramethylpiperidin, und Azanorbornan. In einer bevorzugten Ausführungsform entsprechen die Amide den Formeln Li-N(C₁-C₄-Alkyl)₂ oder X₃Mg-N(C₁-C₄-Alkyl)₂, worin Alkyl insbesondere Methyl ist.

Bei Ferrocenen, Bisindenylferrocen und Ruthenocenen können in einem oder jedem der beiden Cyclopentadienylringe je ein Strukturelement der Formel I enthalten sein.

Bevorzugtes Metallocen ist Ferrocen.

In Formel I steht M bevorzugt für -Li, oder -MgX₃ mit X₃ gleich Cl, Br oder I. Besonders bevorzugt ist M gleich -Li.

X₁ und X₂ in Formel I bedeuten bevorzugt N.

Im Rahmen der Erfindung können an die Gruppen X₁ und X₂ zum Beispiel folgende Kohlenwasserstoff- oder Heterokohlenwasserstoffreste gebunden sein:
ein monovalenter (Hetero)Kohlenwasserstoffrest an je X₁ und X₂ oder ein bivalenter (Hetero)Kohlenwasserstoffrest an X₁ und X₂, wenn X₁ und X₂ O bedeuten;
zwei monovalente (Hetero)Kohlenwasserstoffreste an je X₁ und X₂, wenn X₁ und X₂ N bedeuten;
zwei bivalente (Hetero)Kohlenwasserstoffreste an je X₁ und X₂, wenn X₁, und X₂ N bedeuten, wobei die bivalenten (Hetero)Kohlenwasserstoffreste mit einer Bindung, Methylen oder Ethylen überbrückt sein können;
ein bivalenter (Hetero)Kohlenwasserstoffrest an X₁ und zwei monovalente Reste an X₂, wenn X₁ und X₂ N bedeuten, wobei ein monovalenter Rest an den bivalenten (Hetero)Kohlenwasserstoffrest gebundenes Methylen oder Ethylen ist;
ein monovalenter (Hetero)Kohlenwasserstoffreste an je X₁ und X₂, und ein bivalenter (Hetero)Kohlenwasserstoffrest an je X₁, und X₂, wenn X₁ und X₂ N bedeuten;
zwei monovalente (Hetero)Kohlenwasserstoffreste an X₁ und ein bivalenter (Hetero)Kohlenwasserstoffrest an X₂ gebunden sind, wenn X₁ und X₂ N bedeuten;
zwei bivalente (Hetero)Kohlenwasserstoffreste an je X₁ X₂ gebunden sind, wenn X₁ und X₂ N bedeuten;
X₁ O bedeutet und ein monovalenter (Hetero)Kohlenwasserstoffrest an X₁ gebunden ist, sowie X₂ N bedeutet und zwei monovalente (Hetero)Kohlenwasserstoffreste oder ein bivalenter (Hetero)Kohlenwasserstoffrest an X₂ gebunden sind;
X₁ O und X₂ N bedeuten, und ein bivalenter (Hetero)Kohlenwasserstoffrest an X₁ und X₂ sowie ein monovalenter (Hetero) Kohlenwasserstoffrest an X₂ gebunden sind;
ein bivalenter, aromatischer 1,1'-(Hetero)Kohrenwasserstoffrest, wenn X₁ und X₂ O bedeuten; oder
ein bivalenter, aromatischer 1,1'-(Hetero)Kohlenwasserstoffrest an X₁ und X₂ und ein monovalenter (Hetero)Kohlenwasserstoffrest an je X₁, und X₂, wenn X₁ und X₂ N bedeuten.

Bei den an X₁ und X₂ C-gebundenen Kohlenwasserstoff- oder Heterokohlenwasserstoffresten kann es sich
a) um gesättigte oder ungesättigte, geradkettige, verzweigte oder zyklische und monovalente Reste handeln, wobei zwei monovalente Reste an X₁ und X₂ in der Bedeutung von N gebunden sind;
b) um gesättigte, ungesättigte, geradkettige, verzweigte und/oder zyklische beziehungsweise bizyklische bivalente Reste handeln, die an X₁ und/oder X₂ gebunden sind, wenn X₁ und X₂ N bedeuten, und einen 4- bis 7-gliedrigen Ring bilden, oder
c) um gesättigte, ungesättigte, geradkettige, verzweigte und/oder zyklische beziehungsweise bizyklische bivalente Reste handeln, die ein O- und N-Atom, oder zwei N-Atome einfach oder zweifach überbrücken und mit der Gruppe -X₁-P-X₂- einen 5- bis 7-gliedrigen Ring bilden.

Heterokohlenwasserstoffreste können Heteroatome ausgewählt aus der Gruppe O, S und N(C₁-C₄-Alkyl) enthalten. Die Anzahl der Heteroatome beträgt bevorzugt 1 bis 4, bevorzugter 1 bis 3 und besonders bevorzugt 1 oder 2. Die Kohlenwasserstoff- oder Heterokohlenwasserstoffreste können 1 bis 18, bevorzugt 1 bis 12, und besonders bevorzugt 1 bis 8 C-Atome und gegebenenfalls Heteroatome enthalten. Die Reste können ein- oder mehrfach, vorzugsweise ein- bis dreifach oder ein- oder zweifach substituiert sein, zum Beispiel mit Phenyl, Phenoxy, Benzyl, Benzyloxy, C₁-C₄-Alkylphenyl, C₁-C₄-Alkylphenoxy, C₁-C₄-Alkylbenzyl, C₁-C₄-Alkylbenryloxy, C₁-C₄-Alkoxyphenyl, C₁-C₄-Alkoxyphenoxy, C₁-C₄-Alkoxybenzyl, C₁-C₄-Alkoxybenzyloxy, C₁-C₄-Alkylthiophenyl, C₁-C₄-Alkylthiophenoxy, C₁-C₄-Alkylthiobenzyl, C₁-C₄-Alkylthiobenzyloxy, Di(C₁-C₄-Alkyl)aminophenyl, Di(C₁-C₄-Alkyl)aminophenoxy, Cyclohexyl, Cyclopentyl, C₁-C₄-Alkylcyclohexyl, C₁-C₄-Alkylcyclopentyl, C₁-C₄-Alkoxycyclohexyl, C₁-C₄-Alkoxycyclopentyl, Fluor, C₁-C₄-Alkyl, C₁-C₄-Fluoralkyl, C₁-C₄-Alkoxy, C₁-C₄-Alkylthio, Di-(C₁-C₄-Alkyl)amino, C₁-C₄-Alkoxy-C₁-C₄-Alkyl, C₁-C₄-Alkylthio-C₁-C₄-Alkyl, oder Di(C₁-C₄-Alkyl)amino-C₁-C₄-Alkyl. Eine Substitution in den α- oder β-Stellungen zu den Gruppen X₁ und X₂ ist insofern bevorzugt, als der Rest chirale C-Atome aufweist, die bei der Metallierung und Folgereaktionen eine optische Induktion verursachen können. Einige spezifische Substituenten sind Methyl, Ethyl, n- und i-Propyl, n-, i- und t-Butyl, Trifluormethyl, Methoxy, Ethoxy, Propoxy, i-Propoxy, Butoxy, i-Butoxy, t-Butoxy, Methylthio, Ethylthio, Dimethylamino, Diethylamino, Phenyl, Phenoxy, Methoxyphenyl und Methoxyphenoxy.

Bei den an X₁ und X₂ C-gebundenen Kohlenwasserstoff- oder Heterokohlenwasserstoffresten kann es sich bei monovalenten Resten zum Beispiel um unsubstituiertes oder substituiertes C₁-C₁₈-, bevorzugt C₁-C₁₂-, und besonders bevorzugt C₁-C₈-(Hetero)Alkyl; unsubstituiertes oder substituiertes C₂-C₁₈-, bevorzugt C₂-C₁₂-, und besonders bevorzugt C₃-C₈-(Hetero)Alkenyl; unsubstituiertes oder substituiertes C₃-C₁₂ und bevorzugt C₃-C₈-(Hetero)Cycloalkyl, unsubstituiertes oder substituiertes C₃-C₁₂ und bevorzugt C₃-C₈₋₍Hetero)Cycloalkenyl, unsubstituiertes oder substituiertes C₃-C₁₂- und bevorzugt C₃-C₈-(Hetero)Cycloalkyl-C₁-C₄-alkyl, unsubstituiertes oder substituiertes C₃-C₁₂ und bevorzugt C₃-C₈-(Hetero)Cycloalkenyl-C₁-C₄-alkyl, unsubstituiertes oder substituiertes C₈-C₁₄-(Hetero)aryl, und C₈-C₁₄-(Hetero)aryl-C₁-C₄-alkyl handeln. Bevorzugt sind gesättigte und aromatische Kohlenwasserstoff- oder Heterokohlenwasserstoffreste.

Bei monovalenten Kohlenwasserstoffresten kann es sich um lineares oder verzweigtes C₁-C₁₂-Alkyl, bevorzugt C₁-C₈-Alkyl und besonders bevorzugt C₁-C₄-Alkyl, C₃-C₈- und bevorzugt C₄-C₆-Cycloalkyl, C₃-C₈-Cycloalkyl- und bevorzugt C₄-C₆-Cycloalkyl-methyl oder-ethyl, C₆-C₁₄- und bevorzugt C₆-C₁₀-Aryl, C₇-C₁₅-Aralkyl und bevorzugt C₇-C₁₁-Aralkyl handeln. Einige spezifische Beispiele sind Methyl, Ethyl, n- und i-Propyl, n-Butyl, Pentyl, Hexyl, Heptyl, Octyl, Cyclopropyl, Cyclobutyl. Cyclopentyl, Cyclohexyl, Cycloheptyl, Cyclooctyl, Cyclobutyl-methyl, Cyclopentyl-methyl, Cyclohexylmethyl, Cyclobutyl-ethyl, Cyclopentyl-ethyl, Cyclohexyl-ethyl, Phenyl, Naphthyl, Benzyl und Phenylethyl. Wenn eine chirale Induktion erzielt werden soll, zum Beispiel bei Ferrocenen, dann sind die Kohlenwasserstoffreste bevorzugt in α- und/oder β-Stellung zu X₁, und/oder X₂ substituiert, zum Beispiel mit C₁-C₄-Alkyl, C₁-C₄-Alkoxy, (C₁-C₄-Alkyl)₂N-, C₁-C₄-Alkoxymethyl, C₁-C₄-Alkoxyethyl, (C₁-C₄-Alkyl)₂N-methyl oder -ethyl, Phenyl, Methylphenyl, Methoxyphenyl, Phenoxy, 2-Anisyl, Benzyl oder Benzyloxy.

Einige Beispiele für monovalente Heterokohlenwasserstoffreste sind C₁-C₈-Alkoxy-C₂-C₄-alkyl, (C₁-C₄-Alkyl)₂N-C₂-C₄-alkyl, C₅-C₇-Cycloalkoxy-C₂-C₄-alkyl, C₄-C₁₀-(Hetero)Aryloxy-C₂-C₄-alkyl, C₄-C₇-Heterocycloalkyl-C₁-C₄-alkyl, C₄-C₁₀-Heteroaryl-C₁-C₄-alkyl, Einige spezifische Methoxyethyl, Ethoxyethyl, Dimethylaminoethyl, Diethylaminoethyl, Cyclohexyloxyethyl, Phenoxyethyl, N-Methylmorpholinylmethyl oder -ethyl, N-Methylpiperidinylmethyl oder -ethyl, Pyridinylmethyl oder -ethyl, und Pyrrolidinylmethyl oder -ethyl.

Bivalente Kohlenwasserstoffreste, die an je X₁, und X₂ gebunden sind und X₁ und X₂ je N bedeuten und mit dem N-Atom einen 4 bis 7-gliedrigen Ring bilden, können 2 bis 8, bevorzugt 2 bis 6, und bevorzugter 2 bis 4 C-Atome enthalten und sind bevorzugt lineares oder verzweigtes, unsubstituiertes oder substituiertes Alkylen, an das gegebenenfalls aliphatische oder aromatische Ringe kondensiert sind. Die Kohlenwasserstoffkette kann mit O-Atomen und oder -N(C₁-C₄-Alkyl) unterbrochen sein. Beispiele für bivalente Kohlenwasserstoffreste sind Trimethylen, Tetramethylen, Pentamethylen, -(CH₂)₂-O-(CH₂)₂-, -(CH₂)₂-N(CH₃)-(CH₂)₂-, Bivalente Kohlenwasserstoffreste bilden zusammen mit den Atomen, an die sie gebunden sind, einen heterocyclischen Ring. Wenn eine chirale Induktion erzielt werden soll, zum Beispiel bei Ferrocenen, dann sind die Kohlenwasserstoffreste bevorzugt in α- oder β-Stellung zu X₁ und/oder X₂ substituiert, zum Beispiel mit C₁-C₄-Alkyl, C₁-C₄-Alkoxy, C₁-C₄-Alkoxymethyl, C₁-C₄-Alkoxyethyl, -N(C₁-C₄-Alkyl), (C₁-C₄-Alkyl)₂N-methyl oder -ethyl, Phenyl, 2-Anisyl oder Benzyl substituiert. Wenn beide N-Atome mit zwei bivalenten Resten überbrückt sind, so leiten sich diese Reste von zyklischen Diaminen ab, zum Beispiel Piperazin.

Bivalente Kohlenwasserstoffreste, die an X₁ und X₂ gebunden sind und X₁ und X₂ je N bedeuten, leiten sich vorzugsweise von 1,2- oder 1,3-Diaminen ab, wobei eine Aminogruppe Teil eines Ringes sein kann. Es kann sich um lineares oder verzweigtes 1,2- oder 1,3-C₂-C₁₂-Alkylen, bevorzugt 1,2- oder 1,3-C₂-C₈-Alkylen und besonders bevorzugt 1,2- oder 1,3-C₂-C₄-Alkylen, 1,2- oder 1,3-C₃-C₈- und bevorzugt 1,2- oder 1,3-C₄-C₆-Cycloalkylen, 1-C₃-C₈-Cycloalkyl- und bevorzugt 1-C₄-C₆-Cycloalkyl-2-methylen oder -ethylen, C₆-C₁₄- und bevorzugt 1,2-C₆-C₁₀-Arylen, und C₆-C₁₀-Aralk-1-yl-2-methylen handeln. Einige spezifische Beispiele sind Ethylen, n- und i-Propylen, n- oder i-Butylen, Cyclopropyl-1,2-en, Cyclobutyl-1,2-en, Cyclopentyl-1,2-en, Cyclohexyl-1,2-en, Cycloheptyl-1,2-en, Cyclooctyl-1,2-en, Cydobut-1-yl-2-methylen, Cyclopent-1-yl-2-methylen, Cyclohex-1-yl-2-methylen, Cyclobut-1-yl-2-ethylen, Cyclopent-1-yl-2-ethylen, Cyclohex-1-yl-2-ethylen, 1,2-Phenylen, 1,2-Naphthylen, Phen-1-yl-2-methylen und Phen-1-yl-2-ethylen. Wenn eine chirale Induktion erzielt werden soll, zum Beispiel bei Ferrocenen, dann sind die Kohlenwasserstoffreste bevorzugt in α- und/oder β-Stellung zu X₁ und/oder X₂ substituiert, zum Beispiel mit C₁-C₄-Alkyl, C₁-C₄-Alkoxymethyl, C₁-C₄-Alkoxyethyl, -N(C₁-C₄-Alkyl), (C₁-C₄-Alkyl)₂N-methyl oder -ethyl, Phenyl, 2-Anisyl oder Benzyl.

Bei bivalenten Kohlenwasserstoffresten, die an X₁ und X₂ gebunden sind und X₁ und X₂ je N bedeuten, kann es sich auch um 1,1'-Biphenylen, 1,1'Binaphthylen und 1,1'-Bispyridin handeln.

Bevorzugte Phosphingruppen in Formel I sind solche, worin an das Phosphoratom in α-Stellung zum N-Atom mit C₁-C₄-Alkyl, C₁-C₄-Alkoxymethyl oder C₁-C₄-Alkoxyethyl substituiertes N-Heterocycloalkyl mit insgesamt 4, 5, 6 oder 7 Ringatomen oder ein 1,2-Diamino-C₄-C₇-cycloalkyl gebunden ist, oder worin an das Phosphoratom ein N,N'-substituiertes Diamin gebunden ist, das zusammen mit dem P-Atom einen N-P-N-heterocycloaliphatischen Ring mit 4 bis 7 Ringatomen bildet und an C-Atome weitere Substituenten gebunden sein können. Geeignete offenkettige Substituenten am Phosphoratom sind zum Beispiel -N(C₁-C₄-Alkyl)-C₂-C₄-Alkylen-N(C₁-C₄-Alkyl)₂.

Besonders bevorzugte Phosphingruppen in Formel I entsprechen den Formeln: 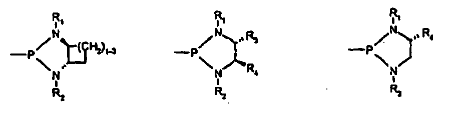 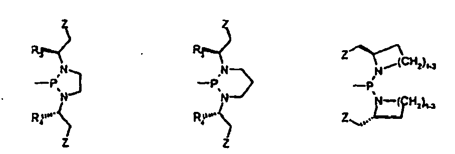 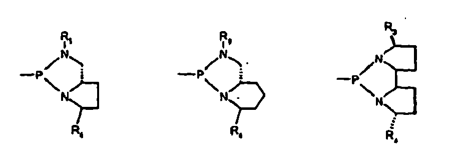 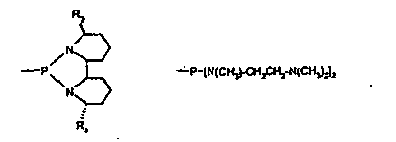 worin
R₁ und R₂ gleich oder verschieden und bevorzugt gleich sind, und C₁-C₄-Alkyl, C₁-C₄-Alkoxyethyl, (C₁-C₄-Alkyl)₂N-ethyl bedeuten,
R₃ und R₄ gleich oder verschieden und bevorzugt gleich sind, und H, C₁-C₄-Alkyl, Phenyl oder Methylphenyl darstellen, und
Z für H, C₁-C₄-Alkyl, C₁-C₄-Alkoxy, C₁-C₄-Alkylthio, -N(C₁-C₄-Alkyl)₂, Phenyl, Phenoxy, Methoxyphenyl oder Methoxyphenoxy steht.

Einige weitere Beispiele für Z sind Methyl, Ethyl, Methoxy, Ethoxy, Methylthio und Dimethylamino.

Bei der Metallierung von Metallocenen handelt es sich um bekannte Reaktionen, die zum Beispiel von M. Schlosser (Editor) in Organometallics in Synthesis, Johnson Wiley & Sons (1994) oder in Jonathan Clayden Organolithiums: Selectivity for Synthesis (Tetrahedron Organic Chemistry Series), Pergamon Press (2002) beschrieben sind.

Wenigstens äquivalente Mengen bedeutet im Rahmen der Erfindung die Verwendung von 1 bis 1,2 Äquivalenten einer Magnesium-Grignardverbindung, oder einem aliphatischen Li-Sekundäramid oder X₃Mg-Sekundäramid pro reagierender =CH-Gruppe eines Metallocens, beziehungsweise 1 bis 1,2 Äquivalenten Mg(X₃)₂, Zn(X₃)₂, (C₁-C₁₈-Alkyl)₃SnX₃ oder B(O-C₁-C₄-Alkyl)₃ pro Gruppe =C-Li in einer Verbindung der Formel Ia. Bei Verwendung von Ferrocenen mit einem Strukturelement der Formel kann auch gleichzeitig eine Metallierung im zweiten Cyclopentadienylring erzielt werden, wenn man wenigstens zwei Äquivalente eines Metallierungsreagenz einsetzt.

Die Reaktion wird zweckmässig bei niedrigen Temperaturen durchgeführt, zum Beispiel 20 bis -100 °C, bevorzugt 0 bis -80 °C. Die Reaktionszeit beträgt etwa von 2 bis zu 5 Stunden. Die Reaktion wird vorteilhaft unter einem inerten Schutzgas durchgeführt, zum Beispiel Stickstoff oder Edelgasen wie Argon.

Die Reaktion wird vorteilhaft in Gegenwart von inerten Lösungsmitteln durchgeführt. Solche Lösungsmittel können alleine oder als Kombination aus wenigstens zwei Lösungsmitteln eingesetzt werden. Beispiele für Lösungsmittel sind aliphatische, cycloaliphatische und aromatische Kohlenwasserstoffe sowie offenkettige oder cyclische Ether. Spezifische Beispiele sind Petrolether, Pentan, Hexan, Cyclohexan, Methylcyclohexan, Benzol, Toluol, Xylol, Diethylether, Dibutylether, Tertiärbutylmethylether, Ethylenglykoldimethyl- oder -diethylether, Tetrahydrofuran und Dioxan.

Eine Ummetallierung der Verbindungen der Formel Ia kann direkt im Anschluss an die Herstellung der Lithiumverbindung ohne deren Isolierung vorgenommen werden. Hierzu gibt man das Metallierungsreagenz zum Reaktionsgemisch, wobei man die zuvor beschriebenen Reaktionsbedingungen einhalten kann. Als Metallierungsreagenzkönnen auch Magnesium-Grignardverbindungen eingesetzt werden, um Verbindungen mit der Gruppe -MgX₃ herzustellen.

Verbindungen der Formel 11 sind bekannt oder nach bekannten beziehungsweise analogen Verfahren herstellbar. Man geht von zum Beispiel mono-lithierten Metallocenen aus, die man mit Monohalogenphosphinen der Formel X₃P(X₁-)X₂-, worin X₃ bevorzugt Cl oder Br bedeutet, X₁ und X₂ O oder N bedeuten, und an die freien Bindungen von X₁- und X₂- ein Kohlenwasserstoffrest gebunden ist, umsetzt. Im Anschluss an die Reaktion kann in an sich bekannter Weise das Boran BH₃, wenn dessen Anwesenheit gewünscht ist, eingeführt werden, zum Beispiel durch Umsetzung der Reaktionsmischung mit einem Borankomplex wie BH₃-S(CH₃)₂. Monohalogenphosphine der Formel X₃P(X₁-)X₂- sind bekannt oder aus Phosphortrichlorid durch Umsetzung mit Alkoholen, Aminen, Aminoalkoholen oder Diaminen in an sich bekannter Weise erhältlich.

Bei den Verbindungen der Formel I handelt es sich um gefärbte Festkörper, die aus dem Reaktionsgemisch ausfallen, abfiltriert und dann gegebenenfalls gereinigt werden können: Eine Lagerung der Verbindungen wird vorteilhaft in einer Suspension der Verbindungen in einem Nichtlösungsmittel wie zum Beispiel Kohlenwasserstoffen oder Ethern (wie zuvor als Reaktionslösungsmittel beschrieben) vorgenommen. Die Verbindungen der Formel I können aber auch direkt nach der Herstellung in deren Reaktionsgemisch weiterumgesetzt werden. Die Verbindungen der Formel I sind wertvolle Zwischenprodukte zur Herstellung von in Orthostellung substituierten Metallocenen.

Ein weiterer Gegenstand der Erfindung sind die Verbindungen der Formel I, einschließlich der zuvor gegebenen Ausgestaltungen und Bevorzugungen.

In einer bevorzugten Ausführungsform handelt es sich bei den Verbindungen der Formel I um solche mit einem Ferrocengerüst, insbesondere um solche, die den Formeln Ib oder Ic entsprechen, 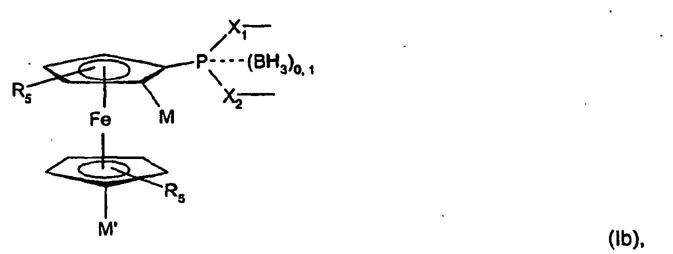 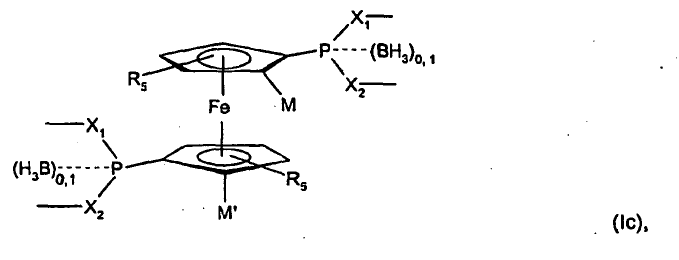 worin
R₅ C₁-C₄-Alkyl und bevorzugt ein Wasserstoffatom bedeutet,
M für -MgCl, -MgBr und bevorzugt für Li, steht,
M' für H, -MgCl, -MgBr oder Li steht, und
X₁ und X₂ sowie die an freie Bindungen von X₁ und X₂ gebundenen Reste die zuvor angegebenen Bedeutungen haben, einschliesslich der zuvor angegebenen vorteilhaften Ausgestaltungen und Bevorzugungen.

Ein anderer Gegenstand der Erfindung ist ein Verfahren zur Herstellung von Ferrocenen, Bisindenylferrdcen oder Ruthenocenen mit einem Strukturelement der Formel III im aromatischen Ring, 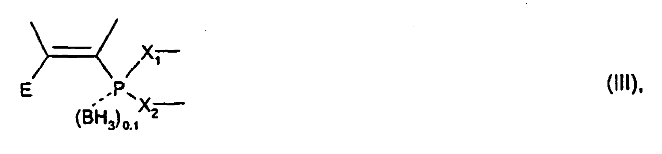 worin
X₁ und X₂ sowie die an freie Bindungen gebundenen Reste die zuvor angegebenen Bedeutungen haben, und
E für den Rest einer reaktiven, elektrophilen Verbindung steht, die ein an Ferrocen, Bisindenylferrocen oder Ruthenocen gebundenes Metall oder eine gebundene Metallgruppe zu substituieren vermag,
das dadurch gekennzeichnet ist, dass man
ein Ferrocen, Bisindenylferrocen oder Ruthenocen mit einem Strukturelement der Formel 1, 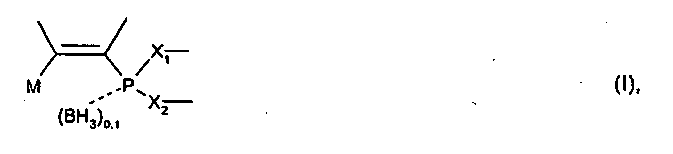 worin
   M, X₁, und X₂ sowie die an freie Bindungen gebundenen Reste die zuvor angegebenen Bedeutungen haben,
   mit wenigstens äquivalenten Mengen einer reaktiven elektrophilen Verbindung umsetzt.

Für M, X₁ und X₂ sowie die an freie Bindungen gebundenen Reste gelten die zuvor angegebenen Ausgestaltungen und beschriebenen Bevorzugungen.

Im Rahmen der Erfindung wird unter einer reaktiven elektrophilen Verbindung jedes Reagenz verstanden, das unter Ersatz von M in Formel I gebunden werden kann, wobei gegebenenfalls Katalysatoren mitverwendet und erst In einer Folgestufe nach Addition des Reagenz (zum Beispiel Hydrolyse) monovalente Reste E gebildet werden können. Solche Reagenzien sind in der metallorganischen Chemie vielfach bekannt und für metallierte aromatische Kohlenwasserstoffe beschrieben, siehe zum Beispiel V. Snieckus, Chem. Rev., 90 (1990) 879-933; Manfred Schlosser (Editor) , Organometalics in Synthesis, A. Manual, second edition, John Wiley & Sons, LTD, (2002); Organolithiums: Selectivity for Synthesis (Tetrahedron Organic Chemistry Series ) Kapitel 6 & 7, Pergamon Press (2002) und Kagan H. B., et al., J. Org. Chem., 62 (1997) 6733-45 (Beispiele für das Einführen einer Auswahl von möglichen elektrophilen Verbindungen an metallierte Ferrocene).

Beispiele für reaktive elektrophile Verbindungen sind:
Halogene (Cl₂, Br₂, I₂), Interhalogene (CI-Br, CI-I) und aliphatische, perhalogenierte Kohlenwasserstoffe (Cl₃C-CCl₃ oder BrF₂C-CF₂Br) zur Einführung von Cl, Br oder I;
CO₂ zur Einführung der Carboxylgruppe -CO₂H;
Chlor- oder Bromcarbonate [CI-C(O)-OR] zur Einführung einer Carboxylatgruppe, wobei R Wasserstoff oder ein Kohlenwasserstoffrest (Alkyl, Cycloalkyl, Cycloalkyl-alkyl, Aryl, Aralkyl, Heteroaryl, Heteroaralkyl) mit 1 bis 18, bevorzugt 1 bis 12 und besonders bevorzugt 1 bis 8 C-Atomen ist, der unsubstituiert oder mit inerten Substituenten wie zum Beispiel Sekundär phosphino, Di (C₁-C₈-Alkyl)₂N-, -C(O)-OC₁-C₈-Alkyl, oder -OC₁-C₈-Alkyl substituiert ist (als inerte Substituenten werden auch reaktive Gruppen wie zum Beispiel Cl, Br oder I umfasst, wenn gleichzeitig gegenüber einem Metall oder einer Metallgruppe in Verbindungen der Formel I reaktivere Gruppen, wie zum Beispiel -CHO, vorliegen, oder wenn gleichzeitig Cl und Br, Cl und I oder Br und I in einem vorzugsweise aromatischen Kohlenwasserstoffrest gebunden sind);
Di-(C₁-C₄-Alkyl)formamide, zum Beispiel Dimethylformamid oder Diethylformamid, zur Einführung der Gruppe -CH(O);
Di-(C₁-C₄-Alkyl)carbonsäureamide zur Einführung einer Gruppe -C(O)-R;
gegebenenfalls in der Gruppe R mit Sekundärphosphino substituierte Aldehyde zur Einführung einer Gruppe -CH(OH)-R;
gegebenenfalls, in der der Gruppe R oder R' mit Sekundärphosphino substituierte symmetrische oder unsymmetrische Ketone zur Einführung einer Gruppe -C(OH)RR', worin R' unabhängig die gleiche Bedeutung wie R hat, oder R und R' zusammen einen cycloaliphatischen Ring mit 3 bis 8 Ringgliedern bildet;
Epoxide zur Einführung einer Gruppe -C-C-OH, in der die C-Atome mit H oder R substituiert sein können;
Imine R-CH=N-R' zur Einführung der Gruppe -CH(R)-NHR', worin R' unabhängig die gleiche Bedeutung wie R hat, oder R und R' zusammen einen cycloaliphatischen Ring mit 3 bis 8 Ringgliedern bildet; R und R' sind nicht gleichzeitig Wasserstoff;
Imine R-C(R")=N-R' zur Einführung der Gruppe -C(R)(R")-NHR', worin R' unabhängig die gleiche Bedeutung wie R hat, oder R und R' zusammen einen cycloaliphatischen Ring mit 3 bis 8 Ringgliedern bildet, R" unabhängig die Bedeutung von R hat, oder R und R" zusammen einen cycloaliphatischen Ring mit 3 bis 8 Ringgliedern bildet;
Kohlenwasserstoff- und Heterokohlenwasserstoffmonohalogenide, besonders -chloride, -bromide und -iodide zur Einführung von Kohlenwasserstoff und Heterokohlenwasserstoff resten (zum Beispiel C₁-C₁₈-Alkyl, C₈-C₁₄-Aryl, C₇-C₁₄-Aralkyl);
Halogenkohlenwasserstoffe und Halogenheterokohlenwasserstoffe mit unterschiedlich reaktiven Halogenatomen, besonders Kombinationen von Chlor mit Brom oder Iod, Brom mit Iod oder zwei Brom- oder Iodatomen bei sterischer Hinderung eines gebildeten Zwischenproduktes, zur Einführung von Kohlenwasserstoff und Heterokohlenwasserstoffresten (zum Beispiel C₁-C₁₈-Alkyl, C₆-C₁₄-Aryl, C₇-C₁₄-Aralkyl);
Alkenylhalogenide, besonders -chloride, -bromide und -iodide, zur Einführung von Alkenylgruppen wie zum Beispiel Allyl und Vinyl;
Tri-(C₁-C₈-Alkyl)silylhalogenide (Chloride, Bromide) zur Einführung der Gruppe Tri-(C₁-C₈-Alkyl)-Si-;
Di-(C₁-C₈-Alkyl)silyldihalogenide (Chloride, Bromide) zur Einführung der bivalenten Gruppe -(C₁-C₈-Alkyl)₂Si-, an die zwei Reste der Formel I (an Stelle von M) gebunden sind; Sekundärphosphinmonohalogenide (Chloride, Bromide) zur Einführung von Sekundärphosphingruppen, wie zum Beispiel Diphenylphosphino, Di(methylphenyl)phosphino, Di-cyclohexylphosphino und Di-t-butylphosphino);
Di(sekundäramino)phosphinmonohalogenide (Chloride, Bromide) zur Einführung von Di(sekundäramino)phosphingruppen wie zum Beispiel Di(dimethylamin)phosphino, Di(diethylamin)phosphino, N,N-Diethyl-cyclohexylendiaminphosphino; Phosphorsäureesterinonohalogenide (Chloride, Bromide) zur Einführung von Phosphonsäureestergruppen wie zum Beispiel (CH₃O)₂(O)P-, (C₂H₅O)(O)P-, (CyclohexylO)₂(O)P-, (Ethylendioxyl)(O)P-;
Phosphorigsäureestermonohalogenide (Chloride, Bromide) zur Einführung von Phosphorigsäureestergruppen wie zum Beispiel (CH₃O)₂P-, (C₂H₅O)P-, (CyclohexylO)₂P-, (Ethylendioxyl)P-;
Phosphindihalogenide, zum Beispiel RPCl₂ oder RPBr₂ zur Einführung der bivalenten Gruppe -P(R)-, an die zwei Reste der Formel I (an Stelle von M) gebunden sind; Sekundärarsinmonohalogenide (Chloride, Bromide) zur Einführung von Sekundärarsingruppen, wie zum Beispiel Diphenylarsino, Di(methylphenyl)arsino, Di-cyclohexylarsino und Di-t-butylarsino);
Arsindihalogenide, zum Beispiel RAsCl₂ oder RAsBr₂ zur Einführung der bivalenten Gruppe - As(R)-, an die zwei Reste der Formel I (an-Stelle von M) gebunden sind;
organische Disulfide R-SS-R zur Einführung der Gruppe -SR;
Schwefel (S₈) zur Einführung der Gruppe -SH; und
gegebenenfalls substituierte Ferrocenylmonohalogenide (Chloride, Bromide, Iodide).

Wenigstens äquivalente Mengen bedeutet im Rahmen der Erfindung die Verwendung von 1 bis 1,2 Äquivalenten reaktiver elektrophiler Verbindung pro reagierender =CM-Gruppe in einer aromatischen Verbindung. Es kann jedoch auch ein deutlicher Überschuss von bis zu 2,5 Äquivalenten eingesetzt werden.

Die Reaktion wird zweckmässig bei niedrigen Temperaturen durchgeführt, zum Beispiel 20 bis -100 °C, bevorzugt 0 bis -80 °C. Die Reaktion wird vorteilhaft unter einem inerten Schutzgas durchgeführt, zum Beispiel Edelgasen wie Argon oder auch Stickstoff. Nach Zugabe der reaktiven elektrophilen Verbindung lässt man zweckmässig auf Raumtemperatur erwärmen oder man erwärmt auf erhöhte Temperaturen, zum Beispiel bis zu 100 °C und bevorzugt bis zu 50 °C, und rührt einige Zeit unter diesen Bedingungen zur Vervollständigung der Reaktion.

Die Reaktion wird vorteilhaft in Gegenwart von inerten Lösungsmitteln durchgeführt. Solche Lösungsmittel können alleine oder als Kombination aus wenigstens zwei Lösungsmitteln eingesetzt werden. Beispiele für Lösungsmittel sind aliphatische, cycloaliphatische und aromatische Kohlenwasserstoffe sowie offenkettige oder cyclische Ether. Spezifische Beispiele sind Petrolether, Pentan, Hexan, Heptan, Cyclohexan, Methylcyclohexan, Benzol, Toluol, Xylol, Diethylether, Dibutylether, Tertiärbutylmethylether, Ethylenglykoldimethyl- oder -diethylether, Tetrahydrofuran und Dioxan.

Die Isolierung der Verbindungen der Formel III kann nach an sich bekannten Methoden wie zum Beispiel Extraktion, Filtration und Destillation vorgenommen werden. Nach der Isolierung können die Verbindungen gereinigt werden, zum Beispiel durch Destillation, Umkristallisation oder mit chromatographischen Methoden.

Es wurde überraschend gefunden, dass man bei Verbindungen der Formel I mit einem Metallocengerüst, besonders einem Ferrocengerüst, und besonders, wenn M für Li steht, und die eine planare Chiralität aufweisen, offensichtlich schon bei der Metallierung eine optische Induktion erzielen kann, wenn an wenigstens eine der Gruppen X₁ und X₂ ein Kohlenwasserstoffrest mit wenigstens einem chiralen C-Atom gebunden ist, vorzugsweise in α- oder β-Stellung zu den O- und/oder N-Atomen. Bei der Einführung elektrophiler, reaktiver Verbindungen wird in diesem Fall überwiegend ein optisches Isomeres gebildet, wobei der Gehalt an einem Diastereomer zum Beispiel wenigstens 70% und bevorzugt wenigstens 80% und mehr betragen kann. Reine Diastereomere sind auf dieser Stufe sogar durch Anwendung bekannter Trennverfahren wie zum Beispiel Umkristallisation oder Chromatographie in besonders einfacher Weise erhältlich.

Der Rest E der elektrophilen, reaktiven Verbindung in Verbindungen der Formel III kann ein chirales C-Atom enthalten, das an ein Atom des Cyclopentadienylrings gebunden ist. Solche Reste werden aus prochiralen elektrophilen und reaktiven Verbindungen gebildet, zum Beispiel Aldehyden und Ketonen. Es wurde überraschend gefunden, dass insbesondere bei Verbindungen mit Metallocengerüsten, bevorzugt Ferrocengerüsten, mit planarer Chiralität und Chiralität am C-Atom die Anwesenheit C-chiraler, an wenigstens eine der Gruppen X₁ und X₂ gebundenen Kohlenwasserstoffreste (vorzugsweise mit chiralern C-Atom) in α-Stellung zu den O und/oder N-Atomen), zu einer sehr hohen Diastereoselektivität bezüglich der planaren Chiralität und zusätzlich sogar zu einer signifikanten Diastereoselektivität bezüglich der Chiralität am C-Atom führt. Bei der Einführung von prochiralen elektrophilen Verbindungen wird von vier möglichen Diastereomeren im wesentlichen nur ein Paar Diastereomerer bezüglich der planaren Chiralität gebildet, und oft wird auch beobachtet, dass bevorzugt überwiegend ein Diastereomer des Diastereomerenpaares entsteht. Reine Diastereomere können - wenn überhaupt notwendig - dann leicht auf dieser Stufe (chirale Reste an Gruppen X₁ und X₂) durch Trennung mittels Umkristallisation oder besonders chromatographische Methoden erhalten werden.

Ein weiterer Gegenstand der Erfindung sind Metallocene aus der Gruppe Ferrocen, Bisindenylferrocen und Ruthenocen mit einem Strukturelement der Formel III in einem oder beiden Cyclopentadienylringen, 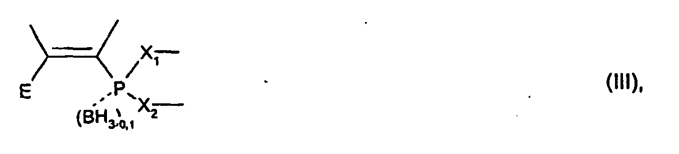 worin
E, X₁ und X₂ und an die freien Bindungen der Gruppen X₁ und X₂ gebundene Kohlenwasserstoffreste die zuvor angegebenen Bedeutungen haben, einschliesslich der vorteilhaften Ausgestaltungen und Bevorzugungen.

Bevorzugte Metallocene sind solche, die der Formel IV entsprechen, 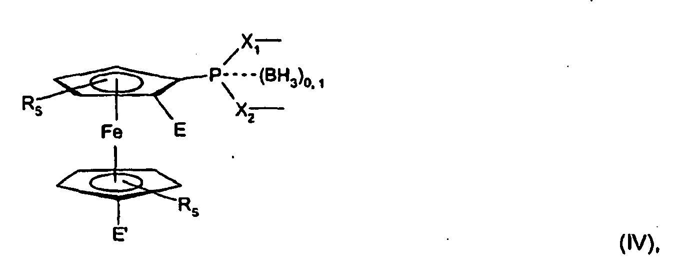 worin
E' für H steht oder die Bedeutung von E hat; und
R₅, E, X₁ und X₂ und an die freien Bindungen der Gruppen X₁ und X₂ gebundene Kohlenwasserstoffreste die zuvor angegebenen Bedeutungen haben, einschliesslich der vorteilhaften Ausgestaltungen und Bevorzugungen.

R₅ ist bevorzugt Wasserstoff. E bedeutet bevorzugt -PH₂, -PCl₂, -PBr₂, Sekundärphosphino, Orthochlor- oder Orthobromphenyl, oder einen Benzylrest der Formel 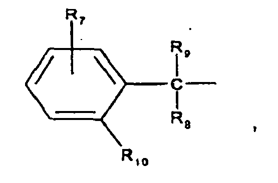 worin
R₇ C₁-C₄-Alkyl oder C₁-C₄-Alkoxy und bevorzugt ein Wasserstoffatom bedeutet,
R₈ C₁-C₄-Alkyl, Hydroxy, C₁-C₄-Alkoxy, C₁-C₈-Acyloxy oder Sekundäramino darstellt,
R₉ C₁-C₆-Alkyl und bevorzugt ein Wasserstoffatom bedeutet, und
R₁₀ für Cl, Br oder I steht, oder Sekundärphosphino darstellt, oder
die Gruppe -CR₈R₉- eine direkte Bindung darstellt und R₁₀ für Br oder I steht.

Verbindungen mit R₈ gleich C₁-C₄-Alkoxy, C₁-C₈-Acyloxy oder Sekundäramino sind erhältlich durch Veretherung oder Veresterung der Hydroxylgruppe R₈, beziehungsweise Substitution einer Acyloxygruppe R₈ durch Sekundäramino.

Wenn R₈ Sekundäramino bedeutet, so enthält es bevorzugt 2 bis 12 und besonders bevorzugt 2 bis 6 C-Atome. Einige Beispiele sind Dimethylamino, Diethylamino, Methyl-ethylamino, Di-n-propylamino, Di-n-butylamino, Morpholino, Piperidinyl und Pyrrolidinyl. Wenn R₈ Alkoxy bedeutet, so kann es sich um Methoxy, Ethoxy, n-Propoxy oder n-Butoxy handeln. Wenn R₈ Acyloxy bedeutet, leitet sich der Rest bevorzugt von Carbonsäuren ab. Es kann sich um Acetyloxy, Propanoyloxy, Butanoyloxy, Cyclohexanoyloxy, Benzoyloxy oder Toluolyloxy handeln. Wenn R₈ Alkyl bedeutet, so kann es sich zum Beispiel um Methyl, Ethyl, n-Propyl oder n-Butyl handeln.

Andere bevorzugte Metallocene sind solche, die der Formel IVa entsprechen, 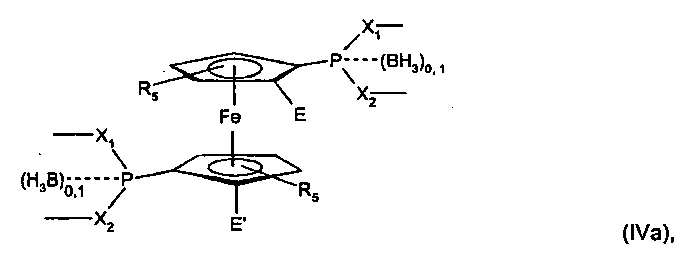 worin
E' für H steht oder unabhängig die Bedeutung von E hat; und
R₅, E, X₁ und X₂ und an die freien Bindungen der Gruppen X₁ und X₂ gebundene Kohlenwasserstoffreste die zuvor angegebenen Bedeutungen haben, einschliesslich der vorteilhaften Ausgestaltungen und Bevorzugungen.

R₅ ist bevorzugt Wasserstoff. E bedeutet bevorzugt einen Kohlenwasserstoffrest mit einem chiralen C-Atom, das an den Cyclopentadienylring gebunden ist. Der chirale Kohlenwasserstoffrest mit einem chiralen C-Atom entspricht bevorzugt der Formel 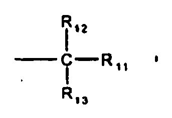 worin
R₁₂ Wasserstoff, C₁-C₈-Alkyl und bevorzugt C₁-C₄-Alkyl, gegebenenfalls mit C₁-C₄-Alkyl oder C₁-C₄-Alkoxy substituiertes C₄-C₈-Cycloalkyl, oder gegebenenfalls mit C₁-C₄-Alkyl oder C₁-C₄-Alkoxy substituiertes Phenyl darstellt,
R₁₃ unabhängig die gleiche Bedeutung hat wie R₁₂, und
R₁₁ unabhängig die gleiche Bedeutung hat wie R₁₂, oder OH, C₁-C₄-Alkoxy, C₁-C₈-Acyloxy oder Sekundäramino darstellt.

Einige Bespiele für R₁₂ sind Methyl, Ethyl, n-Propyl, n-Butyl, Pentyl, Hexyl, Heptyl oder Octyl handeln. Bevorzugt ist R₁₂ Wasserstoff. Wenn R₁₂ Cycloalkyl bedeutet, so kann es sich zum Beispiel um Cyclopentyl, Cyclohexyl oder Methylcyclohexyl handeln. Wenn R₁₂ substituiertes Phenyl bedeutet, so kann es sich zum Beispiel um Toluyl, Xylyl, Methoxyphenyl oder Dimethoxyphenyl handeln. Beispiele für Alkoxy, Acyloxy oder Sekundäramino sind zuvor angegeben worden. Besonders bevorzugt sind R₁₂ Wasserstoff, R₁₃ Methyl und R₁₁ Dimethylamino.

Verbindungen mit einem Strukturelement der Formel III können in bekannter Weise in Monophosphine umgewandelt werden, die beispielsweise als monodentante Liganden verwendbar sind. Man erhält solche Monophosphine mit Strukturelementen der Formel V in einem oder auch zwei aromatischen Kohlenwasserstoffringen von Ferrocen, Bisindenylferrocen oder Ruthenocen, 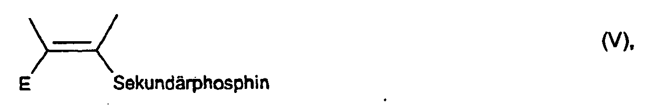 indem man
a) aus einem Ferrocen, Bisindenylferrocen oder Ruthenocen mit einem Strukturelement der Formel III, wenn vorhanden, die Borangruppe entfernt, dann die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, oder
b) die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt

Die Entfernung der Borangruppe erst in der letzten Reaktionsstufe bietet den Vorteil, dass reaktionsempfindliche Gruppen geschützt bleiben.

Die Abspaltung der Borangruppe kann zum Beispiel durch Zugabe von Reagenzien wie zum Beispiel sekundären Aminen mit C₁-C₄-Alkylgruppen, Morpholin, 1,8-Diazabicyclo[5,4.0]-undec-7-en (DBU), 1,4-Diazabicyclo[2.2.2]-octan zur gelösten Verbindung der Formel III, ausreichend langes Rühren bei Temperaturen von 20 bis 70 °C, und Entfernen der flüchtigen Bestandteile vorteilhaft im Vakuum erfolgen. Methoden für das Entfernen von Boran sind zum Beispiel von M. Ohff et al. in Synthesis (1998), Seite 1391, beschrieben.

Die Bildung von -PCl₂-Gruppe oder -PBr₂-Gruppen ist ebenfalls bekannt und zum Beispiel von A. Longeau et al. in Tetrahedron: Asymmetry, 8 (1997), Seiten 987-990, beschrieben. Als Reagenz verwendet man zweckmässig organische Lösungen von HCl oder HBr in zum Beispiel Ethern, die man bei niedrigen Temperaturen (zum Beispiel -20 bis 30°C) zu gelösten Verbindungen der Formel III mit oder ohne Borangruppe gibt.

Bei den Grignardreagenzien kann es sich um Mono- oder Di-Li-, -ClMg-, -BrMg- oder -IMg-Kohlenwasserstoffe handeln, die im allgemeinen im Überschuss zugegeben werden, zum Beispiel bis zu 5 Äquivalent pro Halogenatom. Die Reaktion wird in Lösung durchgeführt, wobei Lösungsmittel wie zuvor für die Metallierung erwähnt eingesetzt werden können. Die Reaktion kann bei Temperaturen von -80 bis 80 °C durchgeführt werden.

-PCl₂-Gruppe oder -PBr₂-Gruppen können in an sich bekannter Weise hydriert werden, zum Beispiel mit Li(AlH₄), und die Phosphingruppe kann dann mit zum Beispiel zyklischen Sulfaten wie Butylen- oder Propylensulfat in eine zyklische, sekundäre Phosphingruppe übergeführt werden. Die Isolierung der Monophosphine kann nach zuvor beschriebenen Verfahren vorgenommen werden.

Die sekundäre Phosphingruppe kann zwei gleiche oder zwei verschiedene Kohlenwasserstoffreste enthalten, oder die beiden Kohlenwasserstoffreste können mit dem P-Atom einen 3- bis 8-gliedrigen Ring bilden. Bevorzugt enthält die Phosphingruppe zwei gleiche Kohlenwasserstoffreste. Die Kohlenwasserstoffreste können unsubstituiert oder substituiert sein und sie können 1 bis 22, und bevorzugt 1 bis 12 C-Atome enthalten. Ein bevorzugtes Sekundärphosphino ist jenes, worin die Phosphingruppe zwei gleiche oder verschiedene Reste, ausgewählt aus der Gruppe lineares oder verzweigtes C₁-C₁₂-Alkyl; unsubstituiertes oder mit C₁-C₆-Alkyl oder C₁-C₆-Alkoxy substituiertes C₅-C₁₂-Cycloalkyl oder C₅-C₁₂-Cycloalkyl-CH₂-; Phenyl oder Benzyl; oder mit Halogen (zum Beispiel F, Cl und Br), C₁-C₆-Alkyl, C₁-C₆-Halogenalkyl (zum Beispiel Trifluormethyl), C₁-C₆-Alkoxy, C₁-C₆-Halogenalkoxy (zum Beispiel Trifluormethoxy), (C₆H₅)₃Si, (C₁-C₁₂-Alkyl)₃Si, Sekundäramino oder -CO₂-C₁-C₆-Alkyl (zum Beispiel -CO₂CH₃) substituiertes Phenyl oder Benzyl, enthält.

Die beiden Reste in der Phosphingruppe können je zusammen auch unsubstiuiertes oder mit Halogen, C₁-C₆-Alkyl oder C₁-C₆-Alkoxy substituiertes Dimethylen, Trimethylen, Tetramethylen oder Pentamethylen bedeuten. Die Substituenten sind bevorzugt in den beiden Orthostellungen zum P-Atom gebunden.

Bei den Phosphingruppen kann es sich auch um solche der Formeln 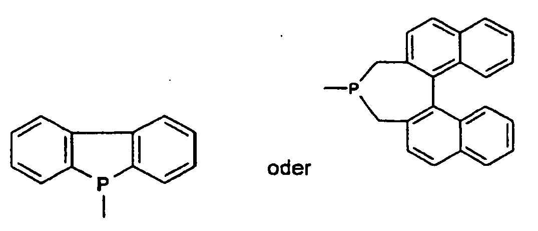 handeln, worin die Phenylringe unsubstituiert oder mit C₁-C₄-Alkyl und C₁-C₄-Alkoxy substituiert sind.

Beispiele für sekundäre Phosphingruppen, in denen die beiden Kohlenwasserstoffreste mit dem P-Atom einen 3- bis 8-gliedrigen Ring bilden, sind insbesondere solche der Formel 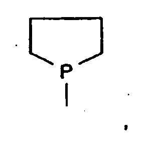 die in einer oder beiden Orthostellungen und gegebenenfalls den Methastellungen zum P-Atom mit C₁-C₄-Alkyl oder C₁-C₄-Alkoxy substituiert sein können.

Beispiele für P-Substituenten als Alkyl, das bevorzugt 1 bis 6 C-Atome enthält, sind Methyl, Ethyl, n-Propyl, i-Propyl, n-Butyl, i-Butyl, t-Butyl, und die Isomeren von Pentyl und Hexyl. Beispiele für P-Substituenten als gegebenenfalls mit Alkyl substituiertes Cycloalkyl sind Cyclopentyl, Cyclohexyl, Methyl- und Ethylcyclohexyl, und Dimethylcyclohexyl. Beispiele für P-Substituenten als mit Alkyl, Alkoxy, Halogenalkyl und Halogenalkoxy substituiertes Phenyl und Benzyl sind Methylphenyl, Dimethylphenyl, Trimethylphenyl, Ethylphenyl, Methylbenzyl, Methoxyphenyl, Dimethoxyphenyl, Trifluormethylphenyl, Bis-trifluormethylphenyl, Tris-trifluormethylphenyl, Trifluormethoxyphenyl und Bis-trifluormethoxyphenyl.

Bevorzugte Phosphingruppen sind solche, die gleiche oder verschiedene und bevorzugt gleiche Reste ausgewählt aus der Gruppe C₁-C₆-Alkyl, unsubstituiertes oder mit 1 bis 3 C₁-C₄-Alkyl oder C₁-C₄-Alkoxy substituiertes Cyclopentyl oder Cyclohexyl, Benzyl und besonders Phenyl, die unsubstituiert oder substituiert sind mit 1 bis 3 C₁-C₄-Alkyl, C₁-C₄-Alkoxy, F, Cl, C₁-C₄-Fluoralkyl oder C₁-C₄-Fluoralkoxy, enthalten.

Die Sekundärphosphinogruppe entspricht bevorzugt der Formel -PR₁₄R₁₅, worin R₁₄ und R₁₅ unabhängig voneinander einen Kohlenwasserstoffrest mit 1 bis 20 C-Atomen darstellen, der unsubstituiert oder substituiert ist mit Halogen, C₁-C₆-Alkyl, C₁-C₆-Halogenalkyl, C₁-C₆-Alkoxy, C₁-C₆-Halogenalkoxy, Di-C₁-C₄-Alkylamino, (C₆H₅)₃Si, (C₁-C₁₂-Alkyl)₃Si, oder -CO₂-C₁-C₆-Alkyl; oder worin R₁₄ und R₁₅ je zusammen unsubstiuiertes oder mit C₁-C₄-Alkyl oder C₁-C₄-Alkoxy substituiertes Dimethylen, Trimethylen, Tetramethylen, oder Pentamethylen bedeuten.

Bevorzugt sind R₁₄ und R₁₅ gleiche oder verschiedene und insbesondere gleiche Reste, ausgewählt aus der Gruppe verzweigtes C₃-C₆-Alkyl, unsubstituiertes oder mit ein bis drei C₁-C₄-Alkyl oder C₁-C₄-Alkoxy substituiertes Cyclopentyl oder Cyclohexyl, unsubstituiertes oder mit ein bis drei C₁-C₄-Alkyl oder C₁-C₄-Alkoxy substituiertes Benzyl, und insbesondere unsubstituiertes oder mit ein bis drei C₁-C₄-Alkyl, C₁-C₄-Alkoxy, -NH₂, OH, F, Cl, C₁-C₄-Fluoralkyl oder C₁-C₄-Fluoralkoxy substituiertes Phenyl.

Besonders bevorzugt bedeuten R₁₄ und R₁₅ gleiche oder verschiedene und insbesondere gleiche Reste, ausgewählt aus der Gruppe unsubstituiertes oder mit ein bis drei C₁-C₄-Alkyl, C₁-C₄-Alkoxy und/oder C₁-C₄-Fluoralkyl substituiertes Phenyl.

Die erfindungsgemässen Verfahren und Zwischenprodukte eignen sich hervorragend zur Herstellung von achiralen und chiralen aromatischen Orthodiphosphinen oder anderen zur Chelatisierung geeigneten aromatischen Diphosphinen, die sich als wertvolle Liganden in katalytisch wirksamen Metallkomplexen erwiesen haben. Das Verfahren ist modular für die Schaffung unterschiedlicher Substitutionen an den beiden P-Atomen und weist hohe Ausbeuten auf. Zusätzlich kann man auf einfache Weise und hohen Ausbeuten direkt reine Diastereomere oder Paare von einfach trennbaren Paaren von Diastereomeren herstellen. Das Verfahren ist besonders für die Herstellung solcher Diphosphine im industriellen Massstab geeignet.

Ein weiterer Gegenstand der Erfindung ist ein Verfahren zur Herstellung von Metallocen-diphosphinen mit Strukturelementen der Formel VI in einem Cyclopentadienylring, 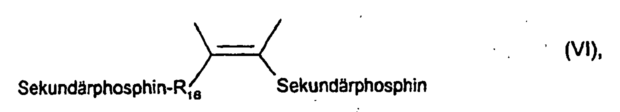 oder mit Strukturelementen der Formel VIa in je einem Cyclopentadienylring eines Ferrocens, Bisindenylferrocens oder Ruthenocens, 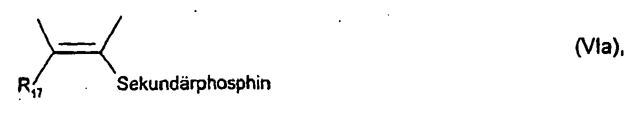 worin
R₁₆ eine direkte Bindung ist, oder eine bivalente Brückengruppe bedeutet, wobei das Sekundärphosphino in der Brückengruppe in 1-, 2- oder 3-Stellung zum C-Atom des aromatischen Ringes gebunden ist, und
R₁₇ einen Substituenten bedeutet, der über ein C-Atom an den Cyclopentadienylring gebunden ist,
umfassend die Schritte:
a) Umsetzung eines Ferrocens, Bisindenylferrocens oder Ruthenocens mit einem Strukturelement der Formel II 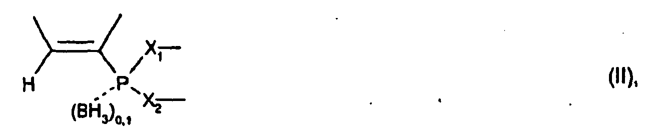 mit Metallierungsreagenzien zu einem Ferrocen, Bisindenylferrocen oder Ruthenocen mit einem Strukturelement der Formel I 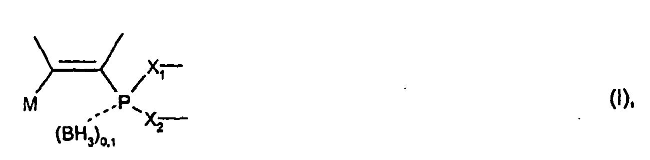 worin M, X₁ und X₂ und an die freien Bindungen der Gruppen X₁ und X₂ gebundene Kohlenwasserstoffreste die zuvor angegebenen Bedeutungen haben,
b) Umsetzung der Verbindung der Formel I mit einer elektrophilen und reaktiven Verbindung, wobei die Umsetzung
   b1) mit einem Sekundärphosphinhalogenid erfolgt zur Einführung von Sekundärphosphino,
   b2) mit einer elektrophilen reaktiven Verbindung, die in 1-, 2- oder 3-Stellung eine durch Sekundärphosphin substituierbare reaktive Gruppe enthält, und nachfolgender Umsetzung mit einem Metall-sekundärphosphid oder einem Sekundärphosphin zur Einführung der Gruppe -R₁₆-Sekundärphosphino,
   b3) mit einer ein α-Kohlenstoffatom bildenden elektrophilen organischen Verbindung zur Einführung der Gruppe -R₁₇,
c) aus den gemäss Stufen b1), b2 oder b3 erhaltenen Verbindungen, wenn vorhanden, die Borangruppe entfernt, dann die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, oder
d) die Reste (Hetero)Kohlenwasserstoff-X₁, (Hetero)Kohlenwasserstoff-X₂, oder X₁-(Hetero)-Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt.

Die einzelnen Verfahrensschritte, vorteilhafte Ausgestaltungen und Bevorzugungen sind schon zuvor beschrieben worden und sind in den Beispielen noch näher erläutert. Vorteilhafte Ausgestaltungen und Bevorzugungen in Bezug auf Verfahren und Verbindungen gelten auch für das obige Verfahren.

R₁₆ bedeutet als Brückengruppe bevorzugt einen Rest der Formeln 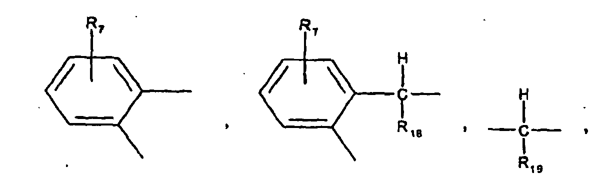 worin
R₇ die zuvor angegebene Bedeutung hat,
R₁₈ Hydroxyl, C₁-C₄-Alkoxy, C₁-C₈-Acyloxy oder Sekundäramino darstellt, und
R₁₉) C₁-C₈-Alkyl und bevorzugt C₁-C₄-Alkyl, gegebenenfalls mit C₁-C₄-Alkyl oder C₁-C₄-Alkoxy substituiertes C₄-C₈-Cycloalkyl, oder gegebenenfalls mit C₁-C₄-Alkyl oder C₁-C₄-Alkoxy substituiertes Phenyl oder Benzyl darstellt.

R₁₇ bedeutet bevorzugt einen Rest der Formel 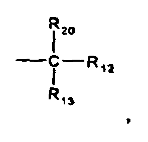 worin
R₁₂ Wasserstoff, C₁-C₈-Alkyl und bevorzugt C₁-C₄-Alkyl, gegebenenfalls mit C₁-C₄-Alkyl oder C₁-C₄-Alkoxy substituiertes C₄-C₈-Cycloalkyl, oder gegebenenfalls mit C₁-C₄-Alkyl oder C₁-C₄-Alkoxy substituiertes Phenyl darstellt,
R₁₃ unabhängig die gleiche Bedeutung hat wie R₁₂, und
R₂₀ unabhängig die gleiche Bedeutung hat wie R₁₂, oder OH, C₁-C₄-Alkoxy, C₁-C₈-Acyloxy oder Sekundäramino darstellt.

Beispiele sind für die einzelnen Bedeutung zuvor angegeben worden.

Das erfindungsgemässe Verfahren eignet sich zum Beispiel besonders zur wirtschaftlichen Herstellung von Taniaphos Liganden, die sich vor allem in Ru-katalysierten enantioselektiven Hydrierungen als interessant erwiesen haben. Die Synthese von Amino-Tanlaphos ist zum in der WO 00/37478A1 und von T. Ireland et al. in Angew. Chem., 111 (1999), Seiten 3397-3400, beschrieben. Mit der erfindungsgemässen Methode können diese Liganden stereoselektiv hergestellt werden, da Vorstufen leicht in ihre optischen Isomeren trennbar sind und die Anwesenheit chiraler Substituenten optische Induktionen bewirkt.

Eine bevorzugte Ausführungsform des efindungsgemässen Verfahrens ist daher ein Verfahren zur Herstellung von 1-(α-substiuierten Orthosekundärphosphinobenzyl)-2-sekundärphosphinoferrocenen der Formel VII in Form ihrer Racemate, Gemischen von Diastereomeren oder im wesentlichen reinen Diastereomeren, 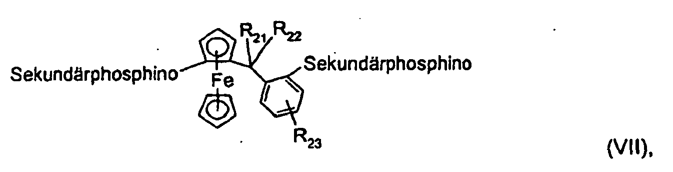 worin
R₂₁ Wasserstoff, C₁-C₆-Alkyl, C₃-C₈-Cycloalkyl, gegebenenfalls mit F, C₁-C₆-Alkyl oder C₁-C₆-Alkoxy substituiertes Phenyl oder Benzyl bedeuten,
R₂₂ C₁-C₄-Alkoxy, C₁-C₈-Acyloxy oder Sekundäramino darstellt, und
R₂₃ Wasserstoff, C₁-C₄-Alkyl oder C₁-C₄-Alkoxy bedeutet,
umfassend die Schritte:
a) Umsetzung einer Verbindung der Formel VIII 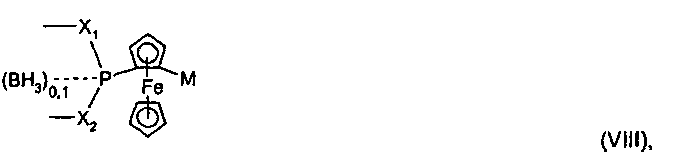 worin
   M und die Gruppe -P(X₁-)(X₂-)---(BH₃)_{0,1} die zuvor angegeben Bedeutungen haben, mit einer Verbindung der Formel IX 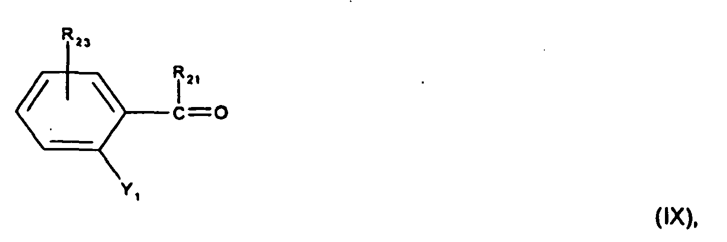
   worin Y₁ Cl, Br oder I bedeutet und R₂₃ die zuvor angegebene Bedeutung hat, zu einer Verbindung der Formel X, 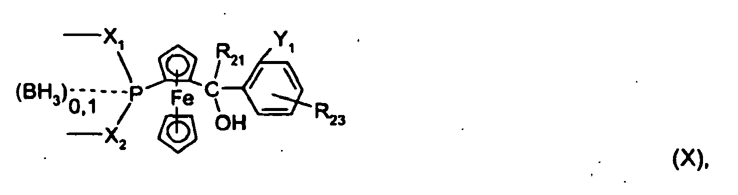
b) C₁-C₄-Alkylierung oder C₁-C₈-Acylierung der OH-Gruppe in der Verbindung der Formel X, oder Substitution der gebildeten Acyloxygruppe mit Sekundäramino,
c) Substitution des Halogens Y₁ in Verbindungen der Formel X durch Sekundärphosphino und anschliessende Umwandlung der Gruppe -P(X₁-)(X₂-)----BH₃)_{0,1} in eine Sekundärphosphinogruppe, oder zuerst Umwandlung der Gruppe -P(X₁-)(X₂-)----(BH₃)_{0,1} in eine Sekundärphosphinogruppe und anschliessende Substitution des Halogens Y₁ in Verbindungen der Formel X durch Sekundärphosphino,
d) Herstellung des Diphosphins der Formel VII, indem man
   d1) aus einer Verbindung der Formel X, wenn vorhanden, die Borangruppe entfernt, dann die Reste (Hetero)Kohlenwasserstoff-X₁, (Hetero)Kohlenwasserstoff-X₂, oder X₁-(Hetero)-Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, oder
   d2) die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt.

Für die Reste gelten die zuvor beschriebenen vorteilhaften Ausgestaltungen und bevorzugten Ausführungsformen. Die Ausführung der Verfahrensstufen a) und d) ist ebenfalls zuvor beschrieben worden. An die Gruppe -P(X₁-)(X₂-)----(BH₃)_{0,1} sind bevorzugt Kohlenwasserstoffreste mit wenigstens einem chiralen C-Atomen gebunden, die schon zuvor beschrieben wurden, um optische Induktionen zur Herstellung von Diastereomeren oder Paaren von Diastereomeren zu erzielen.

Die Alkylierung der Verfahrensstufe b) kann in bekannter Weise vorgenommen werden, zum Beispiel durch Bildung einer -O-Alkalimetall-Gruppe mit einem Alkalimetallhydrid (Kaliumhydrid) und anschliessende Umsetzung mit einem Alkylhalogenid (Methyliodid). Die Acylierung der Verfahrensstufe b) wird zweckmässig mit Carbonsäureanhydriden vorgenommen, bevorzugt mit Acetanhydrid. Die Reaktionen werden bevorzugt in Lösung durchgeführt, wobei in Frage kommende Lösungsmittel zuvor genannt wurden. Die Reaktionstemperaturen können im Bereich von -30 °C bis 70 °C liegen.

Die Substitution der Acyloxygruppe gemäss Verfahrensstufe b) kann mit sekundären Aminen erfolgen. Als Lösungsmittel verwendet man bevorzugt Nitrile wie zum Beispiel Acetonitril oder Carbonsäureamide wie zum Beispiel Dimethylformamid. Die Reaktionstemperatur kann zum Beispiel von 20 bis 120 °C betragen.

Die Substitution des Halogens Y₁ kann durch Metallierung des Halogens mit zum Beispiel Lithiumalkyl (Lithiumbutyl) und anschliessende Umsetzung mit einem Sekundärphosphinhalogenid, besonders Chloriden oder Bromiden vorgenommen werden. Die Reaktionen werden bevorzugt in Lösung durchgeführt, wobei in Frage kommende Lösungsmittel zuvor genannt wurden. Die Reaktionstemperaturen können im Bereich von -100 °C bis 30°C liegen. Der Begriff Sekundärhalogenid umfasst auch H₂P-Halogenid, mit der die Gruppe -PH₂ eingeführt werden kann, wobei diese Gruppe in der Folge wie zuvor erwähnt in zyklische Sekundärphosphingruppen übergeführt werden kann.

Die Verbindungen der Formel VII werden in guten Gesamtausbeuten und wenn gewünscht, in hohen optischen Reinheiten erhalten.

Gegenstand der Erfindung sind auch die mit dem erfindungsgemässen Verfahren erhaltenen Zwischenprodukte in Form von Racematen, Diastereomeren und Paaren von Diastereomeren, besonders Verbindungen der Formel XI, 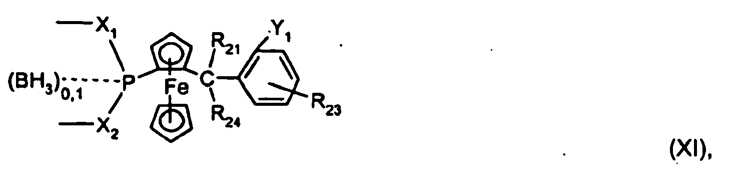 worin
die Gruppe -P(X₁-)(X₂-)----(BH₃)_{0,1}, R₂₁, R₂₃ und Y₁ die zuvor angegebenen Bedeutungen haben, oder (X₁-) und (X₂-) in der Gruppe -P(X₁-)(X₂-)----(BH₃)_{0,1} Cl oder Br bedeuten, und R₂₄-OH, C₁-C₄-Alkoxy, C₁-C₈-Acyloxy oder Sekundäramino darstellt.

Das erfindungsgemässe Verfahren wird nachfolgend näher erläutert. Es wurde schon erwähnt, dass metallierte Metallocene bei der Umsetzung mit prochiralen Elektrophilen ein Gemisch von Diastereomeren sowohl mit planarer Chiralität als auch mit Chiralität am α-Kohlenstoff liefert. Die Verwendung von geeigneten chiralen Gruppen -P(X₁-)(X₂-)----(BH₃)_{0,1}, zum Beispiel O-Methylprolinol, führt zu sehr hoher Diastereoselektivät im Bezug auf die planare Chiralität und zu einer signifikanten Diastereoselektivität in Bezug auf die Chiralität am Kohlenstoff. Dies hat zur Folge, dass von den vier möglichen Diastereomeren praktisch nur die Diastereomeren A und B 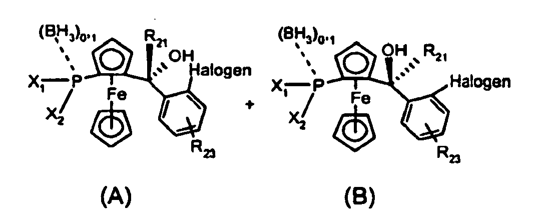 entstehen und auch von diesen beiden bevorzugt nur eines entsteht. Falls notwendig, lassen sich alle Diastereomeren dank der chiralen Gruppe -P(X₁-)(X₂-)----(BH₃)_{0,1} auf einfache Weise trennen, besonders chromatographisch Methoden mit chiralen Säulen.

Jedes der möglichen Diastereomere kann zu Liganden vom Typ der Formel VII übergeführt werden. Im folgenden wird nur die Sequenz ausgehend vom Diastereomer A gezeigt. Für die Herstellung von Liganden vom Typ der Formel VII können die Syntheseschritte in verschiedenen Reihenfolgen durchgeführt werden.

In einer ersten Variante wird der Alkohol in Verbindung A mit einer Base (bevorzugt KH) deprotoniert und mit einem Monohalogenkohlenwasserstoff R***-Halogen zum entsprechenden Ether der Formel C übergeführt:

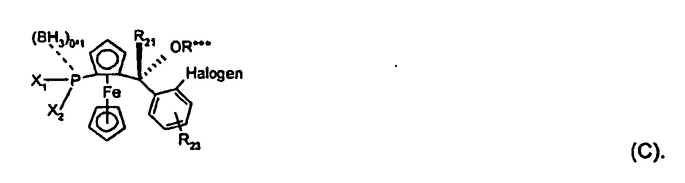

Die Umsetzung von Verbindung (C) mit einer Halogensäure, bevorzugt mit HCl, in einem Lösungsmittel (TBME, Toluol) führt zum Phosphin-Dihalogen der allgemeinen Formel D. Falls X₁ und / oder X₂ führ N steht, so werden diese bei Zugabe von > 2 Äquivalenten Halogensäure zu den entsprechenden Ammoniumhalogeniden übergeführt, welche in geeigneten Lösungsmittel ausfallen oder extrahiert und bei Bedarf rezykliert werden können.

Phosphin-Verbindungen der Formel E werden erhalten, indem die Verbindungen D mit metallorganischen Reagenzien der allgemeinen Formel (R°)ₙMetall^{z}(Halogen)_{z-n}, wobei z die Wertigkeit des Metalls bedeutet und n gleich oder kleiner als z ist, und besonders bevorzugt mit R°-Li oder R°-Mg-Halogen umgesetzt werden:

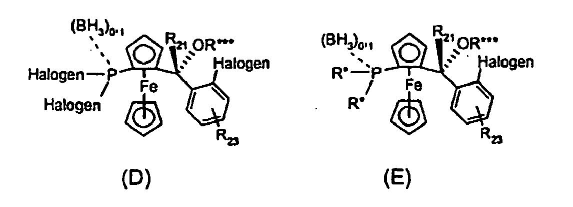

Die Verbindung E kann auf bekannte Weise durch Metallierung des C-Halogens und anschliessender Reaktion der metallierten Verbindung mit Halogen-P(R°°)₂ zu Liganden der Formel VII mit zwei gleichen oder zwei verschiedenen Sekundärphosphinresten umgesetzt werden.

Falls eine Boranschutzgruppe vorhanden ist, so kann diese mit bekannten Methoden auf jeder beliebigen Stufe entfernt werden (siehe M. Ohff et al., Synthesis (1998), Seite 1391. Eine bevorzugte Methode ist das Rühren der Verbindungen in Gegenwart von beispielweise Diethylamin oder DBU bei Temperaturen zwischen 20°C und 120°C.

Falls eine Boran Gruppe vorhanden ist, so wird diese bevorzugt auf der Stufe der Verbindung E oder als letzte Stufe zur Bildung von Liganden der Formel VII entfernt Das Entfernen der Borangruppe bei Verbindung A kann zur Bildung von zyklischen Produkten der Formel (F) 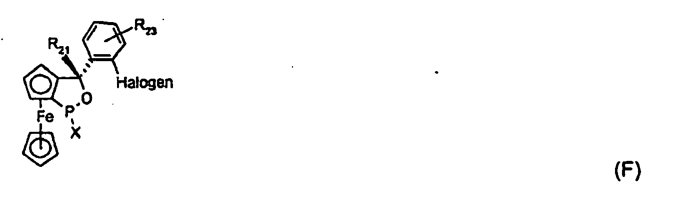 führen. Verbindungen der Formel (F) lassen sich durch Reaktion zunächst mit einer Halogensäure und anschliessend mit (R°)ₙMetall^{z}(Halogen)_{z-n}, bevorzugt mit R°-Li oder R°-Mg-Halogenid, zu Verbindungen der allgemeinen Formel (H) überführen:

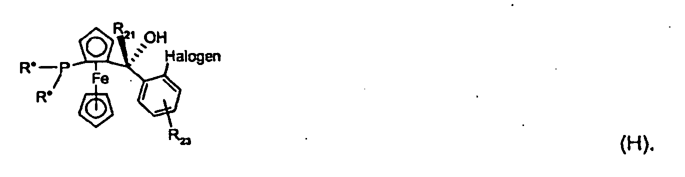

Nach Deprotonierung mit einer Base (bevorzugt KH) und Reaktion mit einem Kohlenwasserstoff-Halogenid der Formel R***-Halogen wird die Boran-freie Verbindung (J) erhalten:

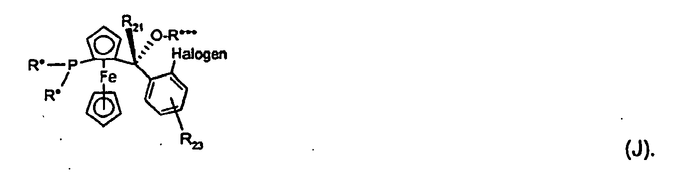

Verbindung D wird durch Metallierung des C-Halogens und anschliessender Reaktion der metallierten Spezies mit Halogen-P(R°°)₂ zu Verbindungen der allgemeinen Formel (K) umgesetzt:

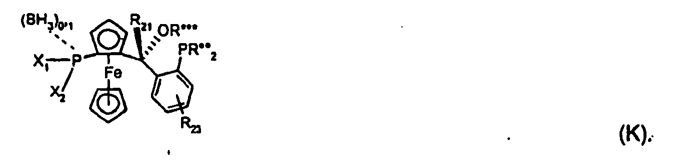

Die Reaktion der Verbindung K mit einer Halogensäure liefert die Verbindung L, welche wie oben beschrieben mit einem R° enthaltenden metallorganischen Reagenz zu Liganden der Formel VII übergeführt werden kann:

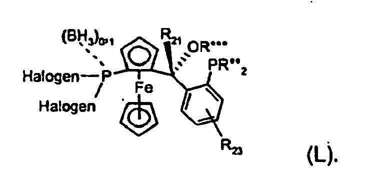

Ein weiterer alternativer Syntheseweg verläuft über die Reaktion von Verbindung VIII mit einem Aldehyd oder Keton der Formel 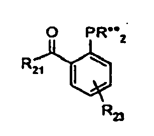 zu einer Verbindung M und M' : 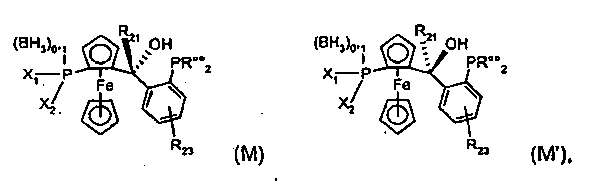 welche wie oben beschrieben nach Deprotonierung des Alkohols und Umsetzen mit R***-Halogen wieder zur Verbindung K führt.

Wenn an Stelle der Alkoxy- eine Sekundäraminogruppe am chiralen C-Atom gebunden sein soll, kann man diese Verbindungen auf folgende Weise herstellen. Eine Verbindung A wird z.B. in Essigsäureanhydrid zum Acetat mit der allgemeinen Formel (N) überführt:

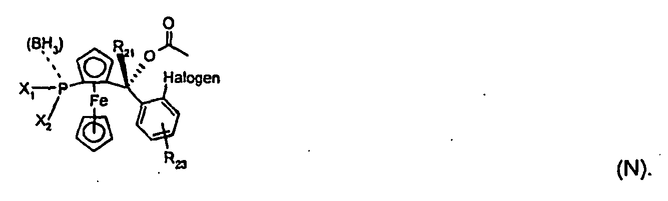

Nach Reaktion mit HN(R***)₂ wird das Amin mit der allgemeinen Formel (O) erhalten:

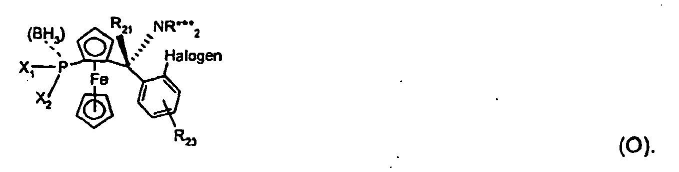

Es ist auch möglich, die Verbindung der Formel (M) mit Essigsäureanhydrid zuerst zur Acetat-Verbindung der Formel (P) und anschliessend mit HN(R***)₂ zur Amin-Verbindung der Formel (Q) umzusetzen:

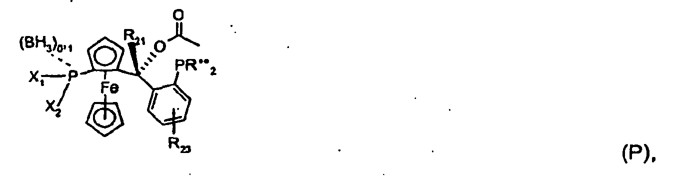

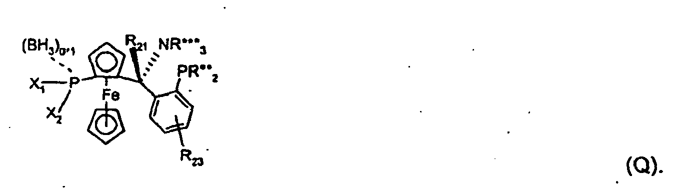

Eine weitere Möglichkeit ist das Umsetzen von Verbindungen der Formel H mit Essigsäureanhydrid zu Verbindungen der Formel (R) 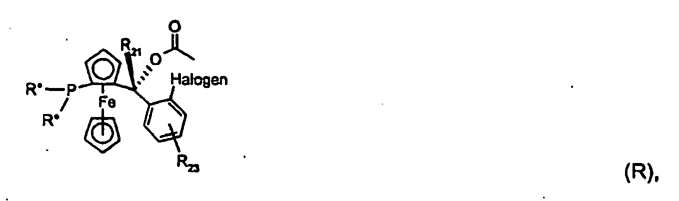 und anschliessend mit HN(R***)₂ zu Verbindungen der Formel (T).

Die Amin-Verbindungen der Formeln (O) und (Q) können analog wie die Ether-Verbindungen der Formel C zu Liganden der Formel VII umgesetzt werden. Dabei werden folgende Zwischenprodukte S, T, U und W durchlaufen:

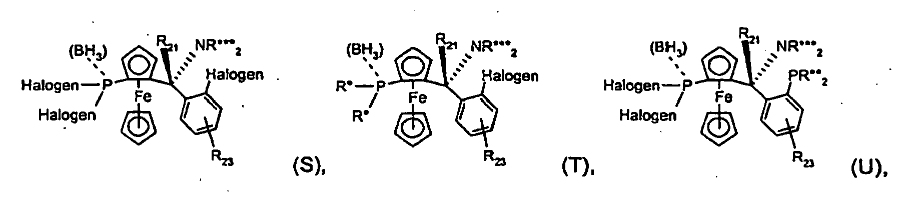

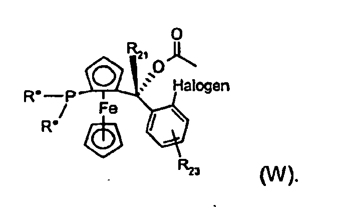

Mit dem erfindungsgemässen Verfahren lassen sich auch auf besonders wirtschaftliche Weise in weniger Verfahrensstufen Diphosphinliganden herstellen, die in 1,2-Stellung von Ferrocen, Bisindenylferrocen oder Ruthonocen direkt gleiche oder verschiedene Sekundärphosphinogruppen gebunden haben. Eine andere bevorzugte Ausführungsform des erfindungsgemässen Verfahrens ist ein Verfahren zur Herstellung von Verbindungen der Formel XII in Form von Racematen, Diastereomeren und Paaren von Diastereomeren, 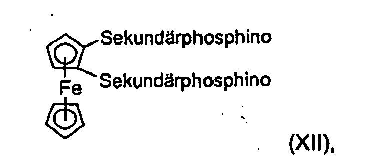 umfassend die Schritte
a) Umsetzung einer Verbindung der Formeln XIV 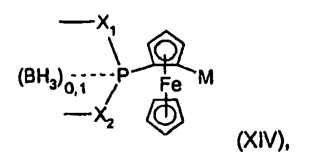 worin
   M und die Gruppe -P(X₁-)(X₂-)----(BH₃)_{0,1} die zuvor angegebenen Bedeutungen haben, mit einem Sekundärphosphinhalogenid (Chlorid oder Bromid) umsetzt zur Herstellung von Verbindungen der Formeln XVI, 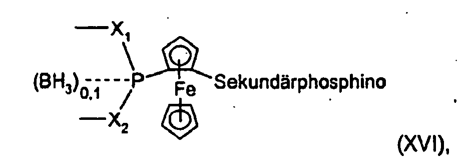
b) Herstellung der Diphosphine der Formeln XII, indem man
   b1) aus einer Verbindung der Formel XVI, wenn vorhanden, die Borangruppe entfernt, dann die Reste (Hetero)Kohlenwasserstoff-X₁, (Hetero)Kohlenwasserstoff-X₂, oder X₁-(Hetero)-Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, oder
   b2) die Reste (Hetero)Kohlenwasserstoff-X₁, (Hetero)Kohlenwasserstoff-X₂, oder X,-(Hetero) Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt.

Für die Reste gelten die zuvor beschriebenen vorteilhaften Ausgestaltungen und bevorzugten Ausführungsformen. Die Ausführung der Verfahrensstufen a) und b) ist ebenfalls zuvor beschrieben worden. An die Gruppe -P(X₁-)(X₂-)----(BH₃)_{0,1} sind im Falle von Ferrocenen bevorzugt Kohlenwasserstoffreste mit wenigstens einem chiralen C-Atomen gebunden, die schon zuvor beschrieben wurden, um optische Induktionen zur Herstellung von Diastereomeren planar-chiraler Ferrocene zu erzielen.

Gegenstand der Erfindung sind auch die bei diesem Verfahren auftretenden neuen Zwischenprodukte in Form von Racematen, Diastereomeren und Paaren von Diastereomeren, besonders solche der Formeln XVI und XVIII, 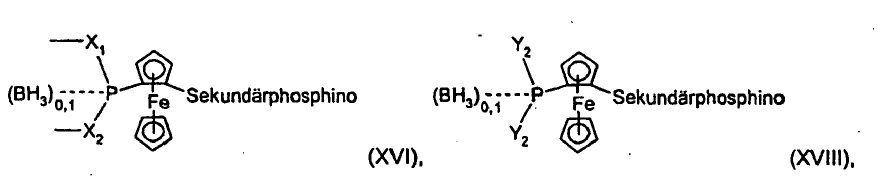 worin die Gruppe -P(X₁-)(X₂)----(BH₃)_{0,1} die zuvor angegebene Bedeutung hat und Y₂ für Cl oder Br steht.

Das erfindungsgemässe Verfahren eignet sich auch besonders zur Herstellung von Bisferrocenyldiphosphin-Liganden, besonders solchen mit verschiedenen Sekundärphosphingruppen. Eine weitere bevorzugte Ausführungsform des efindungsgemässen Verfahrens ist ein Verfahren zur Herstellung von Verbindungen der Formel XIX in Form von Racematen, Diastereomeren und Paaren von Diastereomeren, 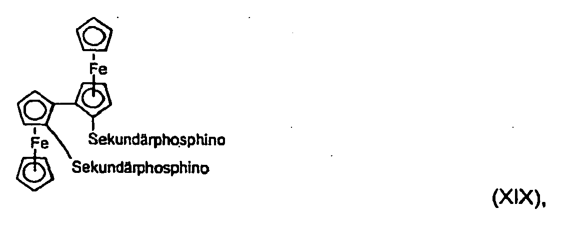 worin Sekundärphosphino die zuvor angegebene Bedeutung hat, umfassend die Schritte
a) Umsetzung einer Verbindung der Formel XX mit einer Verbindung der Formel XXI, 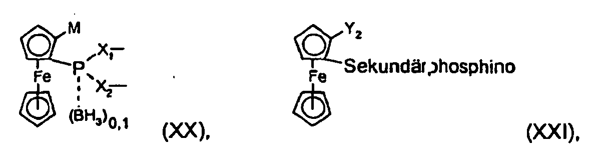 worin
   M für -Sn(C₁-C₄-Alkyl)₃ oder -ZnX₃ steht, die Gruppe -P(X₁-)(X₂-)----(BH₃)_{0,1} die zuvor angegebene Bedeutung hat und Y₂ für I oder Br steht, in Gegenwart eines Pd-Katalysators zu einer Verbindung der Formel XXII umsetzt, 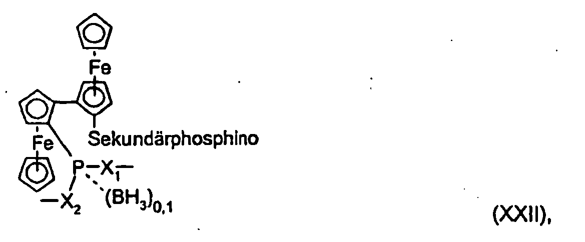
b) Herstellung der Diphosphine der Formel XIX, indem man
   b1) aus einer Verbindung der Formel XXII, wenn vorhanden, die Borangruppe entfernt, dann die Reste (Hetero)Kohlenwasserstoff-X₁, (Hetero)Kohlenwasserstoff-X₂, oder X₁-(Hetero)-Kohlenwasserstoff-X₂ unter Bildung einer -PCl₂-Gruppe oder-PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, oder
   b2) die Reste (Hetero)Kohlenwasserstoff-X₁, (Hetero)Kohlenwasserstoff-X₂, oder X,-(Hetero) Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt.

Für die Reste gelten die zuvor beschriebenen vorteilhaften Ausgestaltungen und bevorzugten Ausführungsformen. Die Ausführung der Verfahrensstufen a) und b) ist ebenfalls zuvor beschrieben worden. An die Gruppe -P(X₁-)(X₂-)----(BH₃)_{0,1} sind bevorzugt Kohlenwasserstoffreste mit wenigstens einem chiralen C-Atomen gebunden, die schon zuvor beschrieben wurden, um optische Induktionen zur Herstellung von Diastereomeren planar-chiraler Ferrocene zu erzielen. Als Pd-Katalysator ist zum Beispiel Pd(dba)₃ geeignet.

Gegenstand der Erfindung sind auch die bei diesem Verfahren auftretenden neuen Zwischenprodukte in Form von Racematen, Diastereomeren und Paaren von Diastereomeren, besonders solche der Formeln XXII und XXIII, 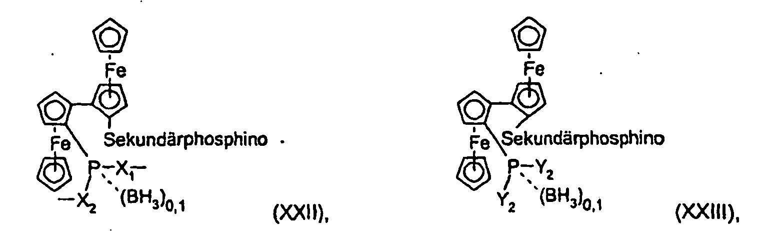 worin die Gruppe -P(X₁-)(X₂-)----(BH₃)_{0,1} die zuvor angegebene Bedeutung hat und Y₂ für Cl oder Br steht.

Das erfindungsgemässe Verfahren eignet sich auch besonders zur Herstellung von Ferrocenyldiphosphin-Liganden, besonders solchen mit verschiedenen Sekundärphosphingruppen, in denen eine Phosphingruppe über ein chirales C-Atom an einen Cyclopentadienylring gebunden ist. Eine weitere bevorzugte Ausführungsform des erfindungsgemässen Verfahrens ist ein Verfahren zur Herstellung von Verbindungen der Formel XXIV in Form von Racematen, Diastereomeren und Paaren von Diastereomeren, 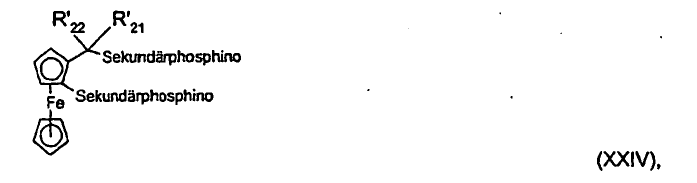 worin
R'₂₁ Wasserstoff bedeutet,
R'₂₂ C₁-C₆-Alkyl, C₃-C₈-Cycloalkyl, gegebenenfalls mit F, C₁-C₆-Alkyl oder C₁-C₆-Alkoxy substituiertes Phenyl oder Benzyl darstellt,
umfassend die Schritte
a) Umsetzung einer Verbindung der Formel XX, 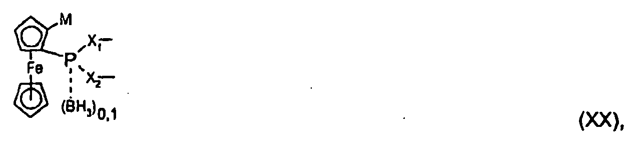 mit einem Aldehyd oder Keton der Formel R₂₁R₂₂C(O) zu einer Verbindung der Formel XXV, 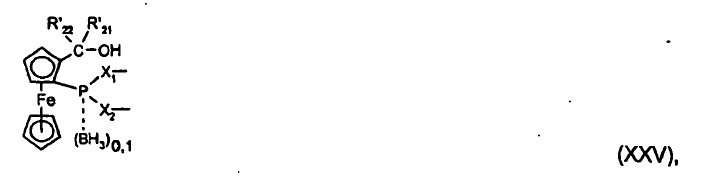
b) Herstellung von Verbindungen der Formel XXVI, 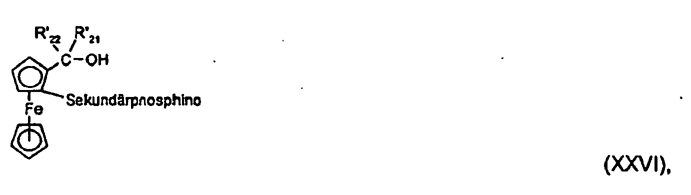 indem man
   b1) aus einer Verbindung der Formel XXV, wenn vorhanden, die Borangruppe entfernt, dann die Reste Kohlenwasserstoff(Hetero)Kohlenwasserstoff-X₁, (Hetero)Kohlenwasserstoff-X₂, oder X₁-(Hetero)Kohlenwassertoff-X₂ unter Bildung einer -PCl₂-Gruppe oder -PBr₂-Gruppe abspaltet, und danach mit einer metallorganischen Verbindung (Grignardreagenz) die CIbeziehungsweise Br-Atome mit einem Kohlenwasserstoffrest zum Sekundärphosphin substituiert, oder
   b2) die Reste (Hetero)Kohlenwasserstoff-X₁, (Hetero)Kohlenwasserstoff-X₂, oder X,-(Hetero) Kohfenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt,
   c) die Verbindung der Formel XXVI acyliert, zum Beispiel mit einem Carbonsäureanhydrid, und
d) die gebildete C₁-C₈-Acyloxygruppe mit einem sekundären Phosphin zu Verbindungen der Formel XXIV substituiert.

Für die Reste gelten die zuvor beschriebenen vorteilhaften Ausgestaltungen und bevorzugten Ausführungsformen. Die Ausführung der Verfahrensstufen a) und b) ist ebenfalls zuvor beschrieben worden. An die Gruppe -P(X₁-)(X₂-)----(BH₃)_{0,1} sind im Falle von Ferrocenen bevorzugt Kohlenwasserstoffreste mit wenigstens einem chiralen C-Atomen gebunden, die schon zuvor beschrieben wurden, um optische Induktionen zur Herstellung von Diastereomeren planar-chiraler Ferrocene zu erzielen. Bei den Verfahrensstufen c) und d) handelt es sich um bekannte Reaktionen.

Der Reaktionsverlauf kann zum Beispiel mit folgendem Reaktionsschema illustriert werden:

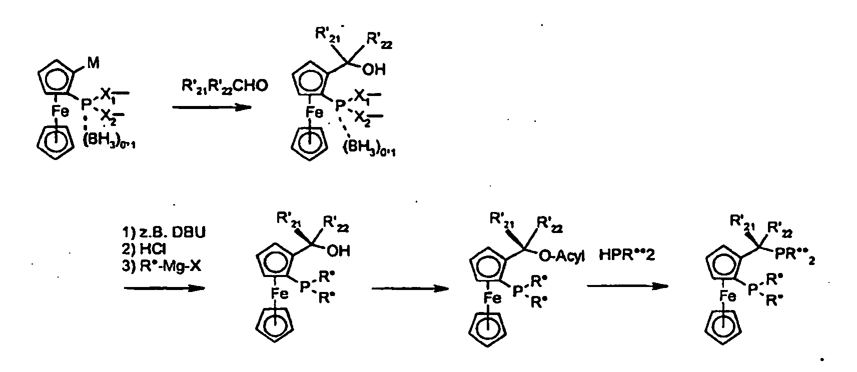

Gegenstand der Erfindung sind auch die bei diesem Verfahren auftretenden neuen Zwischenprodukte in Form von Racematen, Diastereomeren und Paaren von Diastereomeren, besonders solche der Formeln XXVII und XXVIII, 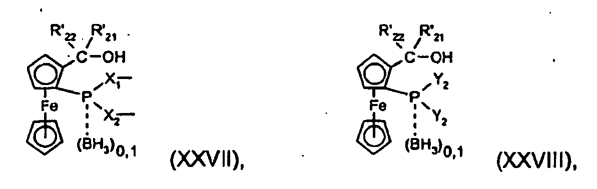 worin R₂₁, R₂₂, Y₂ und die Gruppe -P(X₁-)(X₂)----(BH₃)_{0,1} die zuvor angegebenen Bedeutungen haben.

Das efindungsgemässe Verfahren eignet sich auch besonders zur Herstellung von Ferrocenyldiphosphin-Liganden, besonders solchen mit verschiedenen Sekundärphosphingruppen, in denen eine Phosphingruppe in Orthostellung eines Phenylsubstituenten des Cyclopentadienylring gebunden ist. Eine weitere bevorzugte Ausführungsform des erfindungsgemässen Verfahrens ist ein Verfahren zur Herstellung von Verbindungen der Formel XXIX in Form von Racematen, Diastereomeren und Paaren von Diastereomeren, 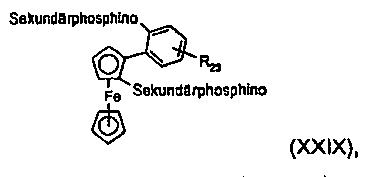 umfassend die Schritte
a) Umsetzung einer Verbindung der Formel XX 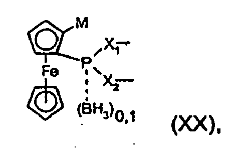 worin M bevorzugt für -Sn(C₁-C₄-Alkyl)₃ oder -ZnX₃ steht, die Gruppe -P(X₁-)(X₂-)----(BH₃)_{0,1} die zuvor angegebene Bedeutung hat, in Gegenwart eines Pd-Katalysators
   mit 1-Brom-2-lod- oder 1,2-Di-lodbenzol zu einer Verbindung der Formel XXX, 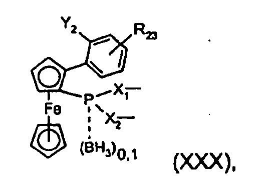 worin Y₂ Brom oder Iod ist,
b) zur Herstellung von Monophosphinen der Formel XXXI 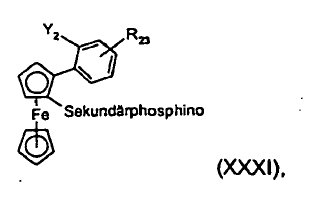
   b1) aus einer Verbindung der Formel XXX, wenn vorhanden, die Borangruppe entfernt, dann die Reste (Hetero)Kohlenwasserstoff-X₁, (Hetero)Kohlenwasserstoff-X₂, oder X₁-(Hetero)-Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, oder
   b2) die Reste (Hetero)Kohlenwasserstoff-X₁, (Hetero)Kohlenwasserstoff-X₂, oder X₁(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt, und
c) dann das Brom- oder lodatom durch Metallierung mit einem Lihiumalkyl (Lithiumbutyl) und nachfolgende Reaktion mit einem Sekundärphosphinhalogenid eine Sekundärphosphingruppe substituiert, oder
d) zur Herstellung von Verbindungen der Formel XXXII 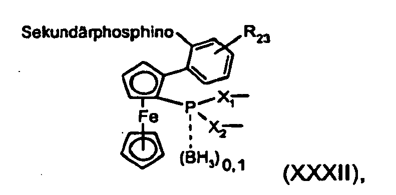 eine Verbindung der Formel XX mit Ortho-sekundärphosphino-benzoliodid in Gegenwart von Metallhalogeniden wie zum Beispiel ZnBr2 und Pd-Katalysatoren umsetzt, und
   d1) aus einer Verbindung der Formel XXXII, wenn vorhanden, die Borangruppe entfernt, dann die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die CI- beziehungsweise Br-Atome mit einem Kohlenwasserstoffrest zum Sekundärphosphin substituiert, oder
   d2) die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt.

Für die Reste gelten die zuvor beschriebenen vorteilhaften Ausgestaltungen und bevorzugten Ausführungsformen. Die Ausführung der einzelnen Verfahrensstufen ist ebenfalls zuvor beschrieben worden. An die Gruppe -P(X₁-)(X₂-)----(BH₃)_{0,1} sind bevorzugt Kohlenwasserstoffreste mit wenigstens einem chiralen C-Atomen gebunden, die schon zuvor beschrieben wurden, um optische Induktionen zur Herstellung von Diastereomeren planar-chiraler Ferrocene zu erzielen. Bei den Verfahrensstufen c) und d) handelt es sich um bekannte Reaktionen.

Der Reaktionsverlauf kann zum Beispiel mit folgendem Reaktionsschema illustriert werden:

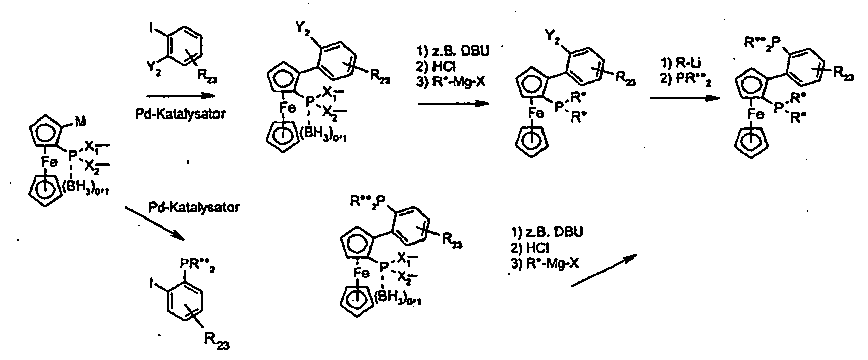

Gegenstand der Erfindung sind auch die bei diesem Verfahren auftretenden neuen Zwischenprodukte in Form von Racematen, Diastereomeren und Paaren von Diastereomeren, besonders solche der Formeln XXX, XXXII, XXXIII und XXXIV, 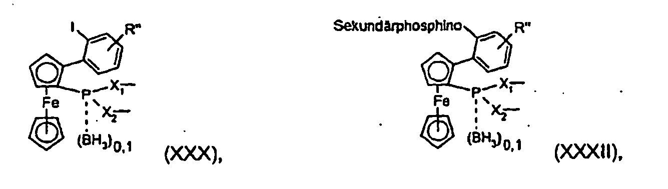 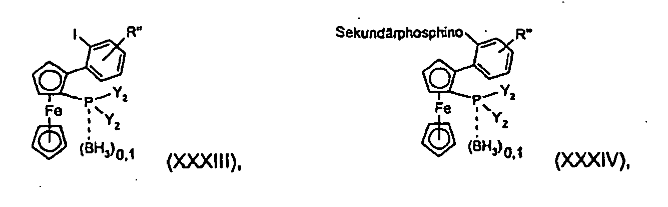 worin die Gruppe -P(X₁-)(X₂-)----(BH₃)_{0,1} die zuvor angegebenen Bedeutungen hat, Y₂ Cl oder Br ist, und R" Wasserstoff oder einen Substituenten, zum Beispiel C₁-C₆-Alkyl, C₁-C₆-Alkoxy, oder gegebenenfalls mit F, C₁-C₆-Alkyl oder C₁-C₆-Alkoxy substituiertes Phenyl oder Benzyl bedeutet.

Das erfindungsgemässe Verfahren eignet sich auch besonders zur Herstellung von Ferrocenyldiphosphin-Liganden, in denen eine Phosphingruppe an je einen Cyclopentadienylring und in Orthostellung hierzu ein substituierter Kohlenwasserstoffrest mit gegebenenfalls einem chiralen α-C-Atom. Eine weitere bevorzugte Ausführungsform des erfindungsgemässen Verfahrens ist ein Verfahren zur Herstellung von Verbindungen der Formel XXXV in Form von Racematen, Diastereomeren und Paaren von Diastereomeren, 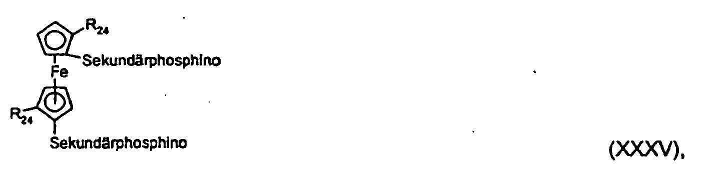 worin
R₂₄ ein Rest der Formel -CR₂₅R₂₆-Y₃ oder eine Gruppe R₂₈ ist,
R₂₅ Wasserstoff, C₁-C₆-Alkyl, C₃-C₈-Cycloalkyl, gegebenenfalls mit F, C₁-C₆-Alkyl oder C₁-C₆-Alkoxy substituiertes Phenyl oder Benzyl bedeutet,
R₂₆ C₁-C₆-Alkyl, C₃-C₈-Cycloalkyl, gegebenenfalls mit F, C₁-C₆-Alkyl oder C₁-C₆-Alkoxy substituiertes Phenyl oder Benzyl darstellt,
Y₃ C₁-C₄-Alkoxy, C₁-C₆-Acyloxy oder Sekundäramino darstellt, und
R₂₈ für C₁-C₆-Alkyl, C₃-C₈-Cycloalkyl, gegebenenfalls mit F, C₁-C₆-Alkyl oder C₁-C₆-Alkoxy substituiertes Phenyl oder Benzyl steht,
umfassend die Schritte
a) Umsetzung einer Verbindung der Formel XXXVI 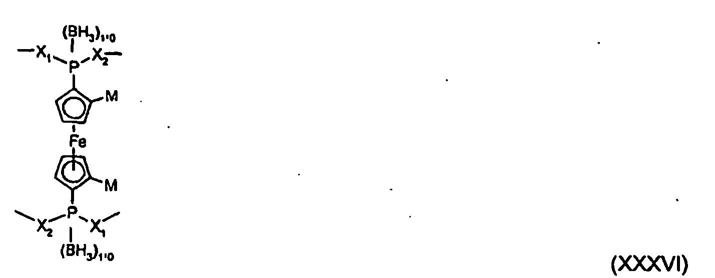 worin
   Gruppe -P(X₁-)(X₂-)----(BH₃)_{0,1} die zuvor angegebenen Bedeutungen hat, mit einem Aldehyd, Keton oder Imin der Formel CR₂₅R₂₆=Y₄ umsetzt, worin Y₄ für =O oder =N(C₁-C₄Alkyl) steht, oder mit einem Halogenid R₂₈Y₆, worin Y₆ Cl, Br oder Iod bedeutet, zu Verbindungen der Formel XXXVII 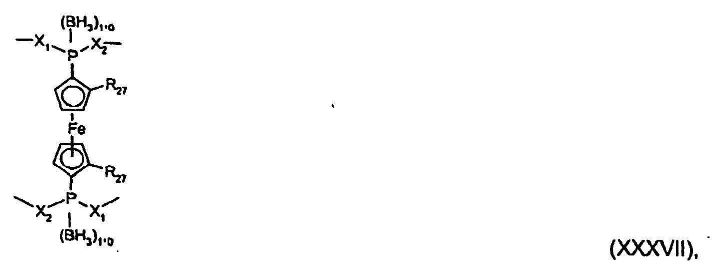 worin
   R₂₇ die Gruppe -CR₂₅R₂₈-Y₅ oder R₂₈ bedeutet, worin R₂₅ und R₂₆ die zuvor angegebenen Bedeutungen haben, und Y₅ für-OH oder -NH(C₁-C₄Alkyl) stehen, die NH-Gruppe alkyliert, gegebenenfalls die OH-Gruppe alkyliert oder acyliert und gegebenenfalls die Acyloxygruppe durch Sekundäramino substituiert, und
b) zur Herstellung der Verbindungen der Formel XXXV
   b1) aus einer Verbindung der Formel XXXVII, wenn vorhanden, die Borangruppe entfernt, dann die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die CI- beziehungsweise Br-Atome mit einem Kohlenwasserstoffrest zum Sekundärphosphin substituiert, oder
   b2) die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise

Br-Atome mit einem Kohlenwasserstoffrest zum Sekundärphosphin substituiert, und dann die Borangruppe entfernt.

Für die Reste gelten die zuvor beschriebenen vorteilhaften Ausgestaltungen und bevorzugten Ausführungsformen. Die Ausführung der einzelnen Verfahrensstufen ist ebenfalls zuvor beschrieben worden. An die Gruppe -P(X₁-)(X₂-)----(BH₃)_{0,1} sind bevorzugt Kohlenwasserstoffreste mit wenigstens einem chiralen C-Atomen gebunden, die schon zuvor beschrieben wurden, um optische Induktionen zur Herstellung von Diastereomeren planar-chiraler und C-chiraler Ferrocene zu erzielen. Bei den Modifikationen der Verfahrensstufe a) bezüglich Alkylierung, Acylierung und Aminsubstitution handelt es sich um bekannte Reaktionen.

Gegenstand der Erfindung sind auch die bei diesem Verfahren auftretenden neuen Zwischenprodukte in Form von Racematen, Diastereomeren und Paaren von Diastereomeren, besonders solche der Formeln XXXVII und XXXVIII, 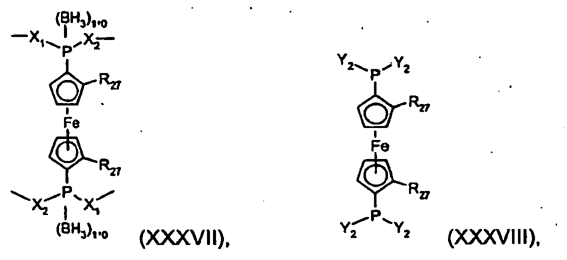 worin
R₂₇ und Y₂ die zuvor angegebenen Bedeutungen haben.

Mit dem erfindungsgemässen Verfahren kann auch in einfacher Weise 1,2-Di(PH₂)benzol oder 1-Sekundärphosphino-2-PH₂-benzol hergestellt werden, indem man
a) Verbindungen der Formel XV mit Di(sekundäramino)phosphinmonohalogeniden (Chloride, Bromide) zur Einführung von Di(sekundäramino)phosphingruppen wie zum Beispiel Di(dimethylamin)phosphino, Di(diethylamin)phosphino, N,N-Diethyl-cyclohexylendiaminphosphino;
   Phosphorsäureestermonohalogenide (Chloride, Bromide) zur Einführung von Phosphonsäureestergruppen wie zum Beispiel (CH₃O)₂(O)P-, (C₂H₅O)(O)P-, (CyclohexylO)₂(O)P-, (Ethylendioxyl)(O)P-;
   Phosphorigsäureestermonohalogenide (Chloride, Bromide) zur Einführung von Phosphorigsäureestergruppen wie zum Beispiel (CH₃O)₂P-, (C₂H₅O)P-, (CyclohexylO)₂P-, (Ethylendioxyl)P-;
   oder mit einem Sekundärphosphinhalogenid umsetzt,
   b1) aus den erhaltenen Verbindungen, wenn vorhanden, die Borangruppe entfernt, dann die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach die -PCl₂-Gruppe oder -PBr₂-Gruppe zur PH₂-Gruppe hydriert (zum Beispiel mit Li(AlH₄), oder
   b2) die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach die -PCl₂-Gruppe oder -PBr₂-Gruppe zur PH₂-Gruppe hydriert, und dann die Borangruppe entfernt 1,2-Di(PH₂)benzol und 1-Sekundärphosphin-2-PH₂-benzol sind wertvolle Zwischenprodukte zur Herstellung von Benzol-1,2-diphosphetanen als chirale Liganden für Metallkomplexe zur enantioselektiven katalytischen Hydrierung von prochiralen Verbindungen.

Die erfindungsgemässen Verfahren erlauben eine effiziente und wirtschaftliche Herstellung von aromatischen Phosphinliganden auch im industriellen Massstab, das sich durch seine vielfachen Möglichkeiten zur Herstellung unterschiedlicher Mono- und Diphosphine auszeichnet.

Die nachfolgenden Beispiele erläutern die Erfindung näher.

### A) Herstellung von Halogenphosphinen

### Beispiel A1: Herstellung von

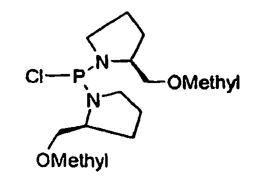

In einem 500 mL-Rundkolben mit Argoneinlass wird PCl₃ (7,38 g, 53,75 mmol) in trockenem Tetrahydrofuran (THF, 150 ml) unter Argon gelöst und die Lösung in einem Eisbad auf 0 °C gekühlt. Es wird tropfenweise Triethylamin (11,97 g, 118,25 mmol, 2,20 Äquivalente) zugegeben und im Anschluss langsam (S)-Methoxymethylpyrrolidin (12,69 g, 110,19 mmol, 2,05 Äquivalente) zugetropft. Während der Zugabe wird die Bildung eines weissen Niederschlags beobachtet. Das Eisbad wird entfernt und die erhaltene Suspension über Nacht (14 h) bei Raumtemperatur (RT) gerührt. Der gebildete weisse Niederschlag wird unter Argon mittels einer Umkehrfritte abfiltriert und mit trockenem THF (2 mal 25 ml) gewaschen. Vom erhaltenen gelblichen Filtrat wird ein ³¹P-NMR (C₆D₆) aufgenommen. Die so gewonnene Lösung wird ohne weitere Reinigung umgesetzt. ³¹P-NMR (C₆D₆, 121 MHz): 154.3 (s).

### Beispiel A2: Herstellung von

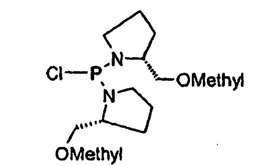

Es wird gemäss Beispiel A1 verfahren, aber (R)-Methoxymethylpyrrolidin verwendet.

### Beispiel A3: Herstellung von

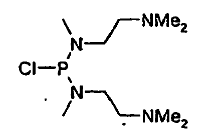

Zu einer Lösung von 1,48 ml (11,4 mmol) N,N',N'-Trimethyl-ethylendiamin in 70 ml THF werden bei -78°C 8,6 ml (11,2 mmol) einer 1,3 M s-ButylLithium-Lösung in Cyclohexan / Hexan (98:2) getropft. Anschliessend wird während 20 Minuten bei -20 °C gerührt. Nach erneutem Abkühlen auf -78°C wird eine Lösung von 0,47 ml (5,4 mmol) PCl₃ in 140 ml THF zugegeben und man läßt über Nacht unter Rühren auf RT erwärmen. Nach Abdestillieren des Lösungsmittels im Hochvakuum erhält man die Titelverbindung als ölige Substanz, welche ohne weitere Reinigung weiterverweridet werden kann.

### Beispiel A4: Herstellung von

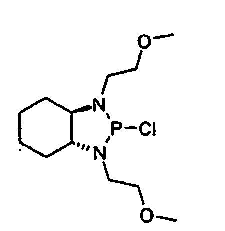

Zu 4,20 g (18,2 mmol) (R,R)-N,N'-Bis(methoxyethyl)cyclohexan-1,2,diamin werden in 300 ml THF bei -78°C 15,4 ml (38,5 mmol) einer 2,5 molaren n-Butyllitium -Lösung in Hexan getropft. Anschliessend wird 20 Minuten bei -20 °C gerührt, das Gemisch wieder auf -78 °C gekühlt und 3,60 ml (41,3 mmol) PCl₃ zugegeben. Ueber Nacht läßt man unter Rühren auf RT erwärmen. Nach Abdestillieren des Lösungsmittels und des überschüssigen PCl₃ am Vakuum erhält man die Verbindung A4 als zähflüssiges Oel, welches ohne weitere Reinigung weiter verwendet wird. ³¹P-NMR (C₆D₆, 162 MHz): 173,7 (s).

### B) Herstellung von aromatischen Mono- und Diphosphinen

### Beispiel B1: Herstellung von

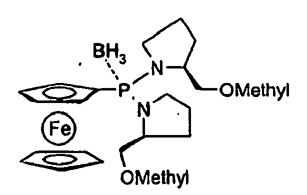

In einem 1 I-Rundkolben mit Argoneinlass werden Ferrocen (10,00 g, 53,75 mmol) und Kaliumtertiärbutylat (754 mg, 6,72 mmol, 0,125 Äquivalente) unter Argon in trockenem THF (100 ml) gelöst. Die Lösung wird auf -78 °C gekühlt und *t*-Butyllithium (1,5 M in Hexan; 71,67 ml, 107,50 mmol, 2,00 Äquivalente) wird innerhalb von 45 Minuten zugetropft. Die Lösung wird 1,5 h bei -78°C gerührt und mit n-Heptan (75 ml) versetzt. Nach dem Absitzen des erhaltenen Niederschlages wird die überstehende Lösung bei -78 °C unter Argon mit einer Umdrücknadel entfernt. Der Niederschlag wird mit n-Heptan (60 ml) bei -78°C gewaschen und die Waschlösung erneut mit einer Umdrücknadel entfernt. Dieser Vorgang wird dreimal wiederholt. Der erhaltene Niederschlag wird in trockenem THF (50 ml) gelöst und eine Lösung von A1 (53,75 mmol, 1,00 Äquivalente) in THF (200 ml) bei -78°C innerhalb von 1,5 h zugetropft. Die Lösung wird über Nacht (14 h) unter Erwärmung auf RT gerührt. Im Anschluss wird tropfenweise Boran-Dimethylsulfid-Komplex (5,10 ml, 53,75 mmol, 1,00 Äquivalente) zugegeben und über Nacht bei RT gerührt. Das Reaktionsgemisch wird mit gesättigter NH₄Cl-Lösung (50 ml) hydrolysiert und mit Tertiärbutylmethylether (TBME) (3 x 100 ml) extrahiert. Die vereinigten organischen Phasen werden über Na₂SO₄ getrocknet und das Lösungsmittel am Rotationsverdampfer abdestilliert. Das Rohprodukt (24,18 g) wird säulenchromatographisch gereinigt (200 g Kieselgel, n-Heptan/TBME 5:1). Die Titelverbindung (17,23 g, 70 % der Theorie) wird als orange-farbener Feststoff erhalten. ³¹P-NMR (C₆D₆, 121. MHz): 80.8 (m, breit).

### Beispiel B2: Herstellung von

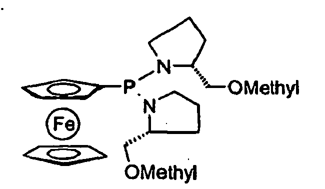

Zu einer Lösung von 4,53 g (17,1 mMol) Bromoferrocen in 15 ml THF werden bei -78°C 17,9 mMol einer 1,6 molaren n-Butyl-Li-Lösung in Hexan langsam zugetropft und das Gemisch 10 Minuten bei dieser Temperatur gerührt. Dann lässt man die Temperatur auf 0 - 5°C ansteigen (Eiskühlung), tropft eine Lösung von 18,8 mMol der Verbindung gemäss Beispiel A2 in 78 ml THF zu und rührt das Gemisch über Nacht bei RT. Das Lösungsmittel wird anschliessend abgezogen und das Rohprodukt über eine kurze Säule (Silikagel 60 Fluka, Laufmittel TBME) gereinigt. Nach Destillation der gefärbten Fraktionen am Rotationsverdampfer wird ein oranges, beinahe festes, Öl erhalten. ³¹P-NMR (C₆D₆, 121 MHz): 70,7 (s).

### Beispiel B3: Herstellung von

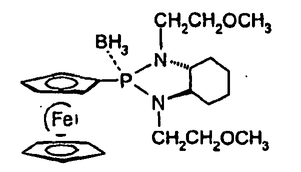

a) Synthese von 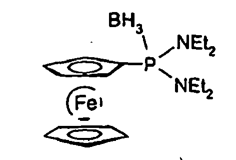 In einem 0,5 l Rundkolben mit Argoneinlass werden Ferrocen (4,00 g, 21,5 mmol) und Kaliumtertiärbutylat (305 mg, 27 mmol, 0,125 Äquivalente) unter Argon in trockenem THF (100 ml) gelöst. Die Lösung wird auf -78 °C gekühlt und *t*-Butyllithium (1,5 M in Hexan; 29 ml, 43 mmol, 2,00 Äquivalente) wird innerhalb von 45 Minuten zugetropft. Die Lösung wird 1,5 h bei -78°C gerührt und durch Zugabe von n-Pentan (75 ml) Lithiumferrocen gefällt. Nach dem Absetzen des erhaltenen Niederschlages wird die überstehende Lösung bei -78°C unter Argon mit einer Umdrücknadel entfernt. Nach Austauschen des Lösungsmittels durch Pentan gibt man eine Lösung bestehend aus Bis(diethylamino)chlorophosphin (4,04 g, 19,3 mmol) in 30 ml absolutem Ether zu und lässt über Nacht auf Raumtemperatur erwärmen. Die dunkelorange-farbene Lösung wird abdekantiert, nach Einengen am HV in 50 ml absolutem Toluol gelöst und bei 0 °C mit Boran-Dimethylsulfid (10 M, 2,32 ml, 23,2 mmol) versetzt. Nach einer Stunde bei Raumtemperatur wird das Lösungsmittel unter reduziertem Druck abdestilliert und das Produkt nach Umkristallisieren aus Pentan als orange-farbener Feststoff (6,87g, 95 %) erhalten. ³¹P-NMR (C₆D₆, 162 MHz): δ = 90,2 (q, J = 83 Hz).
b) Die gemäss a) hergestellte Verbindung (374 mg, 1,0 mmol) wird zusammen mit entgastem Morpholin (5,0 ml) unter Argon über Nacht auf 100°C erhitzt, anschliessend am HV eingeengt, in absolutem Ether aufgenommen und bei 0 °C HCl in Ether (2,0 M, 5 ml, 10 mmol) zugetropft. Nach 2 Stunden bei Raumtemperatur wird unter Argon filtriert und das Lösungsmittelvolumen auf etwa 5 ml reduziert. Bei 0 °C gibt man eine Lösung aus Ethyl₃N in absolutem Diethylether und (R,R)-N,N'-Bismethoxyethyl-cyclohexan-1,2-diamin (205 mg, 0,9 mmol) hinzu (Darstellung des Diamins nach A. Alexakis, A.S. Chauvin, R. Stouvenel, E. Vrancken, S. Mutti, P. Mangeney Tetrahedron: Asymmetry 2001, 12, 1171). Das Reaktionsgemisch wird über Nacht bei RT gerührt, dann filtriert und nach Einengen mit Toluol (6 ml) bei 0 °C mit Boran-Dimethylsulfid (10,0 M, 0,12 ml, 1,2 mmol) versetzt. Nach Reinigung an einer Alox-Säule mit Hexan: Essigsäureethylester (5:1) werden 250 mg (0,55 mmol, 61 %) oranger Feststoff (55%) erhalten.
   ¹H-NMR (C₆D₆, 400 MHz): δ = 4,62 - 4,58 (m, 1H); 4,24 (s, 5H, Cp-H); 4,20 - 4,17 (m, 1H); 4,17 - 4,12 (m, 1H); 4,10 - 4,07 (m, 1H); 3,80 - 3,67 (m, 2H); 3,60 - 3,54 (m, 1H); 3,48 - 3,27 (m, 3H); 3,22 - 3,09 (m, 1H); 3,15 (s, 3H); 3,07 (s, 3H); 2,78 - 2,61 (m, 2H); 2,40 - 2,32 (m, 1H); 2,15 -1,20 (m, 3H); 2,10 - 2,02 (m, 1H); 1,80 -1,72 (m, 1H); 1,54 -1,40 (m, 2H); 1,08 - 0,84 (m, 4H).
   ³¹P-NMR (C₆D₆, 162 MHz): δ = 104,5 (q, J_{PB} = 87 Hz).
c) Alternative Methode zur Herstellung der Titelverbindung:
   Alternativ kann die Titelverbindung auch durch Umsetzen von Lithiumferrocen mit der Verbindung gemäss Beispiel A4 hergestellt werden.

Ferroncenyl-lithium wird nach der Vorschrift von R. Sanders und U.T. Müller-Westerhoff (J. Organomet Chem. 1996, 219) aus 3,6 g (19 mmol) Ferrocen, 0,26 g (2,3 mmol) KO*t*Butyl in 180 ml absolutem THF sowie 24,5 ml (37 mmol) einer 1,5M Lösung von t-Butyl-Lithium in Pentan hergestellt. Anschliessend tropft man bei -78 °C eine vorgekühlte Suspension der Verbindung gemäss Beispiel A4 (Rohprodukt aus einem Ansatz ausgehend von 18 mmol (R,R)-N,N'-Bis(methoxyethyl)cyclohexan-1,2,diamin) zu. Das Reaktionsgemisch lässt man über Nacht auf RT erwärmen, entfernt das entstandene LICl mittels Filtration unter Schutzgas und gibt bei 0 °C 2,2 ml (22 mmol) einer 10,0M Boran-Dimethylsulfid-Lösung zu. Chromatographische Reinigung an einer Alox N-Säule [Hexan:Essigsäureethylester (10:1)] ergibt nach Trocknen am Hochvakuum (HV) 4,3 g (52 %) der Titelverbindung. ³¹P-NMR (C₆D₆, 162 MHz): δ = 104,5 (q, J_{PB} = 87 Hz).

### Beispiel B4: Herstellung von

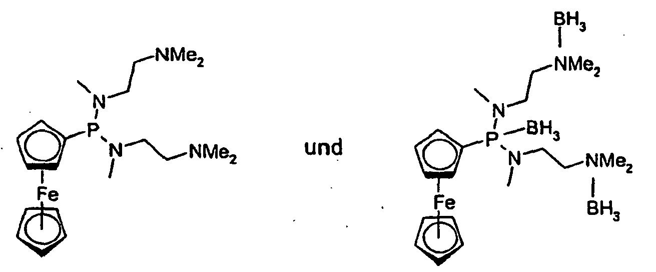

a) Ferroncenyl-lithium wird nach der Vorschrift von R. Sanders und U.T. Müller-Westerhoff (J. Organomet. Chem. 1996, 219) aus 1,1 g (5,9 mmol) Ferrocen, 83 mg (0,72 mmol) KO-t-Butyl in 50 ml absolutem THF und 7,70 ml (12 mmol) einer 1,5M Lösung von t-Butyl-Lithium in Pentan hergestellt Anschliessend tropft man bei -78 °C eine vorgekühlte Suspension der Verbindung gemäss Beispiel A3 (Rohprodukt aus einem Ansatz ausgehend von 11 mmol (*N,N',N*'-Trimethyl-ethylendiamin) zu. Das Reaktionsgemisch lässt man über Nacht auf RT erwärmen, entfernt das entstandene LiCl mittels Filtration und destilliert das Lösungsmittel am HV ab. Es werden 1,5 g oranges Oel erhalten, das zu gleichen Mengen aus Ferrocen und Boran-freier Titelverbindung (42 %) besteht.³¹P-NMR (C₆D₆, 162 MHz): 93,9 (s).
b) Zu einer Lösung von 221 mg (0,37 mmol) der gemäss Stufe a) hergestellten Verbindung in 3 ml Toluol werden bei 0 °C 0,11 ml (1,1 mmol) einer 10.0M Boran-Dimethylsulfid-Lösung zugegeben. Chromatographische Reinigung an Silikagel [Laufmittel Hexan : Ethylacetat (2:1)] ergibt nach Trocknen am HV 152 mg der Boran-haltigen Titelverbindung als oranges Oel. ³¹P-NMR (C₆D₆, 162 MHz): δ = 94.6 (q. J_{PB} = 94 Hz).

### Beispiel B5:

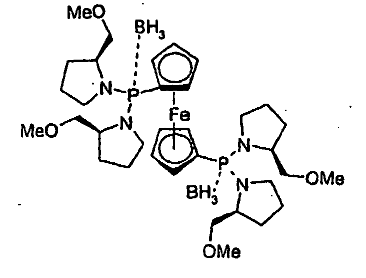

10,95 ml (17,51 mmol) n-Butyllithiium (1,6 M in Hexan) werden zu 2,63 ml (17,51 mmol) Tetramethylethylendiamin (TMEDA) in 2,5 ml Hexan gegeben. Zur resultierenden Lösung wird unter Rühren eine Lösung von 1,32 g (7,1 mmol) Ferrocen in 59 ml Hexan getropft und das Reaktionsgemisch über Nacht weitergerührt. Das resultierende orange-braune Reaktionsgemisch wird anschliessend mit Hilfe von Argon durch eine Kanüle in ein Gefäss mit einer auf 0-5 °C gekühlten Lösung von 18 mmol der Verbindung gemäss Beispiel A1 in 80 ml THF gepresst. Nach Rühren über Nacht bei RT wird zum Reaktionsgemisch ein Ueberschuss Boran-THF Komplex (50 mmol, 1 M in THF) gegeben. Nach 2 Stunden Rühren wird das Lösungsmittel im Vakuum am Rotationsverdampfer abdestilliert. Der Rückstand wird in Wasser / TBME aufgenommen und mehrmals mit TBME Tertiärbutylmethylether) extrahiert. Die organischen Phasen werden mit Natriumsulfat getrocknet und im Vakuum am Rotationsverdampfer eingeengt. Nach Chromatographie über Kieselgel (Laufmittel Heptan / TBME, 3:1) werden 3,9 g der Titelverbindung als rot-oranges Oel isoliert (Ausbeute: 75%). ¹H-NMR (C₆D₆, 300 MHz, einige charakteristische Signale): 4,81 (m, 4H, Cyclopentadien), 4,62-4,67 (m, 4H, Cyclopentadien), 3,22 (s, 6H, O-CH₃), 3,12 (s, 6H, O-CH₃).
³¹P-NMR (C₆D₆, 121 MHz): 79.4 (m, br).

### C) Herstellung von metallierten aromatischen Mono- und Diphosphinen

### Beispiel C1: Herstellung von

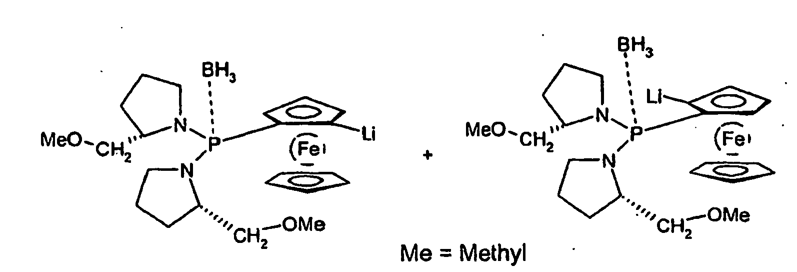

In einem 100 ml-Rundkolben mit Argoneinlass wird die Verbindung gemäss Beispiel B1 (1,00 g, 2,18 mmol) in trockenem TBME (5,00 ml) und *n-*Hexan (5,00 ml) gelöst und die erhaltene Lösung auf -30 °C gekühlt. Dabei fällt das Edukt als gelber Feststoff aus. Es wird tropfenweise Sekundärbutyl-Li (1,3 M in Cyclohexan; 1,76 ml, 2,29 mmol, 1,05 Äquivalente) zugegeben. Dabei geht der gelbe Feststoff allmählich in Lösung, die Lösung färbt sich orange-rot und nach etwa 30 Minuten fällt ein orange-farbener Feststoff aus. Es wird bevorzugt eines der beiden möglichen Diastereomeren gebildet.

### Charakterisierung der lithierten Titelverbindung mit Hilfe von NMR:

Die Verbindung (45 mg, 0,10 mmol) wird hierzu in 1,0 ml abssolutem Diethylether ( Et₂O) bei -78 °C mit 86 µl (0,11 mmol) einer 1,3M Lösung von s-ButylLithium in Cyclohexan:Hexan (92:8) versetzt und bei -30 °C für 2 Stunden gerührt. Das Lösungsmittel wird am HV abdestilliert, der Rückstand bei -30 °C 3 Mal mit je 3 ml absolutem Pentan gewaschen, am HV gen trocknet und anschliessend bei -30°C entweder in 0,7 ml absolutem d₈-Toluol oder in 0,7 ml absolutem d₁₀-Diethylether aufgelöst. Nach dem Transfer der Lösung in ein NMR-Rohr werden verschiedene NMR-Messungen durchgeführt.
Charakteristische NMR-Signale in d₁₀-Et₂O: ¹H-NMR (500 MHz, 265 K): 3,12/3,25 (je br s, 6H, CH₃-O); 4,08 (s, 5H, FcC-H). ³¹P{¹H}-NMR (162 MHz, 265 K): 88 (mc) ppm.
⁷Li-NMR (194 MHz, 265 K): 2,3 (s) ppm.

Nach der Messung wird die NMR-Probe mit 1,6 Äquivalenten Trimethylchlorsilan umgesetzt. Gemäss NMR entsteht dabei nur eine der beiden möglichen diastereomeren orthosubstituierten Verbindungen.

Für die NMR-Experimente in d₈-Toluol wird zur lithierten Verbindung 46 µl (0,31 mmol) TMEDA gegeben. Charakteristische NMR-Signale:
¹H-NMR (500 MHz, 225 K): 3,12 / 3,30 (je s, 6H, CH₃-O; 4,40 (s, 5H, FcC-H). ³¹P{¹H}-NMR (162 MHz, 190 K): 84 (mc) ppm.
⁷Li-NMR (194 MHz, 190 K): 2,0 (br s) ppm.

### Beispiel C2: Herstellung von

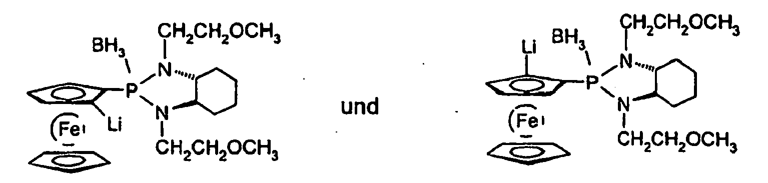

459 mg (1,0 mmol) der Verbindung gemäss Beispiel B3 werden in 10 ml absolutem Et₂O gelöst. Nach Abkühlen auf -78 °C fällt das Edukt teilweise aus und die resultierende Suspension wird mit 0,85 ml (1,1 mmol) einer 1,3M Lösung von s-ButylLithium in Cyclohexan:Hexan (92:8) umgesetzt. Dabei geht der orange Feststoff allmählich in Lösung, die Lösung färbt sich orange-rot und nach etwa 30 Minuten fällt ein orange-farbener Feststoff aus. Es wird bevorzugt eines der beiden Diastereomeren gebildet.

### Charakterisierung der erstgenannten lithierten Titelverbindung mittels NMR:

46 mg (0,10 mmol) der Verbindung werden in 2,5 ml absolutem Et₂O mit 85 µl (0,11 mmol) einer 1,3M Lösung von s-ButylLithium in Cyclohexan:Hexan (92:8) *ortho*-lithiert. Die Suspension wird am Hochvakuum eingeengt, der Rückstand dreimal mit je 3 ml absolutem Pentan gewaschen und nach Trocknen am Hochvakuum bei -30 °C der orange-farbene Feststoff in 0,7 ml absolutem d₈-Toluol gelöst. Nach dem Transfer der Lösung in ein NMR-Rohr, werden NMR-Messungen durchgeführt:
Charakteristische NMR-Signale:
¹H-NMR (500 MHz, 250 K): 3,89 [mc, 1H, FcC-H(lithierter Ring)]; 4,19 (s, 5H, FcC-H); 4,65 [mc, 1H, FcC-H(lithierter Ring)]; 5,21 [mc, 1H, FcC-H(lithierter Ring)] ppm. ³¹P{¹H}-NMR (162 MHz, 190 K): 132 (mc) ppm. ⁷Li-NMR (194 MHz, 190 K): 2,3 (s) ppm.

Nach der Messung wird die NMR-Probe mit 1,6 Äquivalenten Trimethylchlorsilan umgesetzt. Gemäss NMR entsteht dabei nur eine der beiden möglichen diastereomeren ortho-substituierten Verbindungen.

### Beispiel C3: Herstellung von

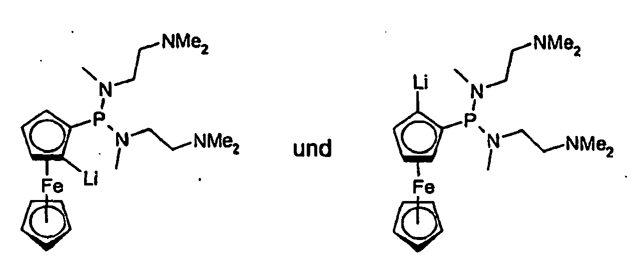

Eine Lösung von 0,14 mmol Verbindung gemäss Beispiel B5 in 1,0 ml Diethylether wird auf - 78 °C gekühlt. Dabei fällt das Edukt teilweise als hellgelber Feststoff aus. Die Suspension wird mit 0,10 ml (0,14 mmol) einer 1,3M Lösung von s-ButylLithium in Cyclohexan:Hexan (92:8) versetzt. Anschliessend wird bei -25 °C für 2 Stunden gerührt. Dabei entsteht eine dunkelrote Lösung.

Setzt man dieses Reaktionsgemisch mit 32 µl (0,22 mmol) Trimethylchlorsilan um, so wird die in ortho-Stellung silytierte Verbindung mit einer Ausbeute von mehr als 80% erhalten.

### D) Herstellung von orthosubstituierten Mono- und Diphosphinen

### Beispiel D1: Herstellung von

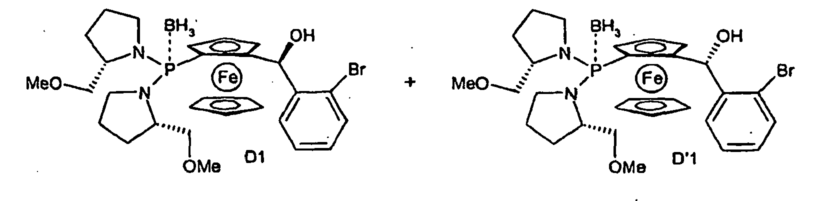

Die Suspension gemäss Beispiel C1 wird 2 h gerührt und dann bei -30 °C 2-Brombenzaldehyd (485 mg, 2,62 mmol, 1,2 Äquivalente) zugetropft, dann das Kühlbad entfernt und die Suspension über Nacht (14 h) unter Erwärmung auf RT gerührt. Das Reaktionsgemisch wird mit gesättigter NH₄Cl-Lösung hydrolysiert, TBME (100 ml) zugegeben, dann die organische Phase abgetrennt und über Na₂SO₄ getrocknet. Das Lösungsmittel wird am Rotationsverdampfer abdestilliert und das Rohprodukt säulenchromatographisch gereinigt (200 g Kieselgel, n-Heptan/TBME 5:1). Der Ferrocenylalkohol D1 (849 mg, 1,32 mmol, 61 %) und der Ferrocenylalkohol D'1 (334 mg, 0,52 mmol, 24 %) werden als orange-braune Feststoffe erhalten. Des weiteren wird die nicht umgesetzte Verbindung gemäss Beispiel B1 (150 mg, 0,33 mmol, 15 %) in Form eines braunen Öls zurückgewonnen. ³¹P-NMR (C₆D₆, 121 MHz): 73,3 (m, br).

### Beispiel D2: Herstellung von

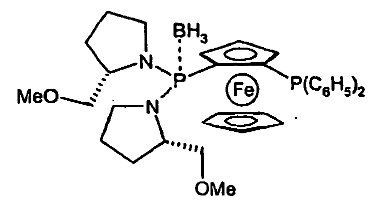

In einem 50 ml Rundkolben mit Argoneinlass wird die Verbindung gemäss Beispiel B1 (104 mg, 0,23 mmol) in trockenem TBME (1,00 ml) und n-Hexan (1,00 ml) gelöst und die erhaltene Lösung auf -30 °C gekühlt. Dabei fällt das Edukt als gelber Feststoff aus. Es wird tropfenweise Sekundärbutyl-Li (1,3 M in Cyclohexan; 0,18 ml, 0,24 mmol, 1,05 Äquivalente) zugegeben. Dabei geht der gelbe Feststoff allmählich in Lösung, die Lösung färbt sich orange-rot und nach ca. 30 Minuten fällt ein orange-farbener Feststoff aus (Verbindung gemäss Beispiel C1). Nach 3 h Rühren bei -30 °C wird Chlordiphenylphosphan (61 mg, 0,28 mmol, 1,2 Äquivalente) zugetropft, das Kühlbad entfernt und die Suspension über Nacht (14 h) unter Erwärmung auf RT gerührt. Das Reaktionsgemisch wird mit gesättigter NH₄Cl-Lösung (10 ml) hydrolysiert, TBME (20 ml) zugegeben, die organische Phase abgetrennt und über Na₂SO₄ getrocknet. Das Lösungsmittel wird am Rotationsverdampfer abdestilliert und das Rohprodukt säulenchromatographisch gereinigt (60 g Kieselgel, n-Heptan/TBME 5: 1). Die Titelverbindung (142 mg) wird in Form eines braunen Öls erhalten, das noch mit der Ausgangsverbindung gemäss Beispiel B1 verunreinigt ist. Das isolierte Öl kristallisiert beim Stehen an der Luft nach einiger Zeit zu einem braunen Feststoff. ³¹P-NMR (C₆D₆, 121 MHz): 77,9 (m, br), -25,1 (s).

### Beispiel D3: Herstellung von

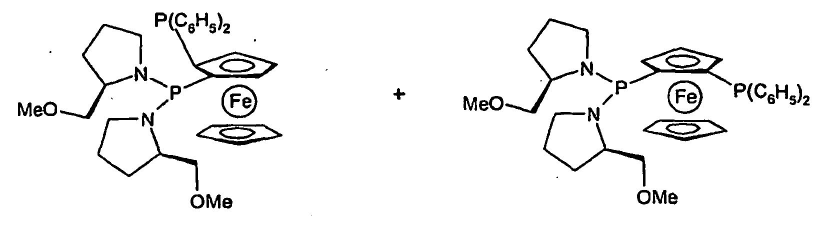

Zu einer Lösung von 200 mg (0,45 mmol) Verbindung gemäss Beispiel B2 in 1 ml TBME und 1ml Hexan werden 0,59 mMol einer 1,3 molaren s-Butyl-Li Lösung in Cyclohexan bei -30°C langsam zugetropft und die rote Lösung 2 Stunden bei dieser Temperatur gerührt. Dann werden 0,11 ml (0,59 mmol) Cl-PPhenyl₂ zugegeben. Die resultierende orange Suspension während 2 Stunden bei -30°C gerührt, und anschliessend lässt man die Temperatur auf Raumtemperatur ansteigen. Zum Gemisch werden 2 ml gesättigte NaHCO₃, 2 ml TBME gegeben und gerührt. Nach Filtrieren über Celite, Waschen der organischen Phase mit dreimal 5 ml Wasser, Trocknen über Na₂SO₄ wird am Rotationsverdampfer das Lösungsmittel entfernt Nach Chromatographie (Silikagel 60 Fluka, Laufmittel Hexan / Essigsäureethylester 2 : 3 und 3% NEthyl₃ ) wird ein oranges Öl erhalten, welches gemäss NMR vorwiegend eines der beiden möglichen Diastereomeren enthält ³¹P-NMR (C₆D₆, 121 MHz): 68,4 (d, J 73Hz). - 23,5 (d, J 73 Hz).¹H-NMR (C₆D₆, 300 MHz, einige charakteristische Signale): 4,114 (s, 5H, Cyclopentadlen), 3,114 (s, 3H, O-CH₃), 3,27 (s, 3H, O-CH₃).

### Beispiel D4: Herstellung von

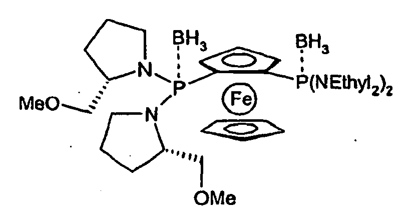

In einem 50 ml-Rundkolben mit Argoneinlass wird die Verbindung gemäss Beispiel B1 (1,00 g, 2,18 mmol) in trockenem TBME (5,00 ml) und n-Hexan (5,00 ml) gelöst und die erhaltene Lösung auf -30 °C gekühlt. Dabei fällt das Edukt als gelber Feststoff aus. Es wird tropfenweise s-Butyl-Li (1,3 M in Cyclohexan; 1,76 ml, 2,29 mmol, 1,05 Äquivalente) zugegeben. Dabei geht der gelbe Feststoff allmählich in Lösung, die Lösung färbt sich orange-rot und nach etwa 30 Minuten fällt ein orange-farbener Feststoff aus (Verbindung gemäss Beispiel C1). Nach 2 h Rühren bei -30 °C wird CIP(NEthyl₂)₂ (551 mg, 2,62 mmol, 1,2 Äquivalente) zugetropft, das Kühlbad entfernt und die Suspension 2 h unter Erwärmung auf RT gerührt. Anschliessend wird BH₃-SMethyl₂ (0,25 mL, 2,62 mmol, 1,2 Äquivalente) zugetropft und die Suspension über Nacht (14 h) bei RT gerührt. Das Reaktionsgemisch wird mit gesättigter NaCl-Lösung (50 ml) hydrolysiert, TBME (50 ml) zugegeben, die organische Phase abgetrennt und über Na₂SO₄ getrocknet. Das Lösungsmittel wird am Rotationsverdampfer abdestilliert und das Rohprodukt säulenchromatographisch gereinigt (100 g Kieselgel, n-Heptan/TBME 5:1): Die Titelverbindung (1,10 g, 1,71 mmol, 78 %) wird in Form eines orangefarbenen Feststoffes erhalten. ³¹P-NMR (C₆D₆, 121 MHz): 99,7-99,0 (m, br), 79,9-79,5 (m, br).

### Beispiel D5: Herstellung von

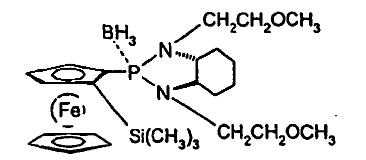

Zur Verbindung B3 (45,6 mg, 0,10 mmol) wird in 2 ml absolutem Diethylether (Et₂O) bei 0°C vorgelegt und langsam sec-Butyl-Li (1,3 M in Cyclohexan / Hexan, 77 µl, 0,10 mmol) zugetropft. Nach 2 Stunden bei 0°C wird Chlortrimethylsilan (21 µl, 0,16 mmol) langsam zugefügt und anschliessend lässt man über Nacht auf Raumtemperatur erwärmen. Nach Einengen am Hochvakuum (HV) und chromatographischer Reinigung (Laufmittel: Hexan / Essigsäureethylester 7:1) erhält man die Titelverbindung in einer Ausbeute von 81%. Es wird praktisch nur eines von zwei möglichen Diastereomeren erhalten. Charakteristische NMR-Signale:
¹H-NMR (C₆D₆, 400 MHz): δ = 4,19 (s, 5H, Cp-H); 0,38 (s, 9H, (CH₃)₃Si).
³¹P-NMR (C₆D₆, 162 MHz): □ = 109,6 ppm.

### Beispiel D6: Herstellung von

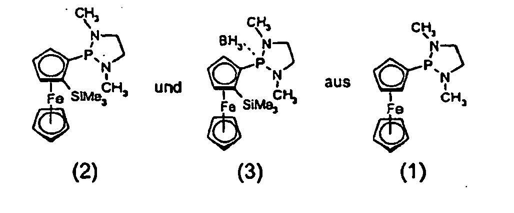

Das Edukt (1) wird wie in der Literatur beschrieben hergestellt: Nifant'ev I.E., Boricenko A.A., Phosphorus, Sulfur and Silicon 1992, 68, 99.

Verbindung (1) (60,5 mg, 0,20 mmol) wird in 2 ml absolutem Et₂O bei -78°C vorgelegt. Dann wird t-Butyl-Li (1,5 M in Pentan, 130 µL, 0,19 mmol) langsam zugetropft. Nach 20 Minuten bei -78°C wird für weitere 3 Stunden bei -25°C gerührt und nach erneutem Abkühlen auf -78°C Trimethylchlorsilan (42 µl, 0,32 mmol) langsam addiert. Anschliessend lässt man über Nacht auf Raumtemperatur erwärmen und engt zum Erhalt von Verbindung 1 am Hochvakuum ein.

Zum Nachweis der Verbindung (2) wird diese mit Boran zur geschützten und stabilen Verbindung (3) übergeführt. Nach Schützen mit Boran wird das Reaktionsgemisch an einer Kieselgelsäule mit Hexan / Essigsäureethylester (5:1) gereinigt. Verbindung (3) wird als orange-farbener Feststoff erhalten (gemäss ³¹P-NMR > 60 % Umsatz).
¹H-NMR (400 MHz, C₆D₆, 295 K): 0,33 (s, 9H. (CH₃)₃Si); 1,54 (q, J = 92 Hz, 3H, BH₃); 2,32 (d, J = 11 Hz, 3H, CH₃-N); 2,45 - 2,53 (m, 1H, CH₂N); 2,54 (d, J = 12 Hz, 3H, CH₃-N); 2,45 2,64 (m, 2H, CH₂-N); 2,67 - 2,75 (m, 1H, CH₂-N); 4,18 (ddd, J = 2,4 Hz, 1,3 Hz, J_{HP} sehr klein, 1H, CH(3)); 4,20 (s, 5H, Cp); 4,27 (td, J = 2,4 Hz, 1,2 Hz, 1H, CH(4)); 4,79 (td = ddd, J = 2,4 Hz, 2,4 Hz, 1,3 Hz, 1H, CH(5)) ppm.
¹³C-NMR (126 MHz, C₆D₆, 295 K): 1,5.((CH₃)₃Si ); 33,4 (d, J = 7 Hz, CH₃-N); 35,6 (d, J = 8 Hz, CH₃-N); 50,3/51,6 (je s, CH₂-N); 70 (Cp); 72,7 (d, J = 8 Hz, C(2)); 73,3 (d, J = 9 Hz, CH(4)); 78,5 (d, J = 47 Hz, C(1)); 78,7 (d, J = 20 Hz, CH(5)); 79,7 (d, J = 8 Hz, CH(3)) ppm. ³¹P-NMR (162 MHz, C₆D₆, 295 K): 112,6 (q, J_{PB} 75Hz).

### Beispiel D7: Herstellung von

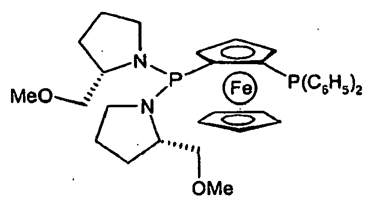

1,2 g (1,87 mMol) Verbindung gemäss Beispiel D2 werden in 6 ml Diethylamin während 21 Stunden am Rückfluss erwärmt. Danach werden flüchtigen Bestandteile am Rotationsverdampfer entfernt. Der Rückstand wird dreimal jeweils mit 2-3 ml Diethylamin versetzt, eine Stunde am Rückfluss erwärmt und das Diethylamin wieder abgezogen. Anschliessend wird zum Rückstand dreimal jeweils 3-5 ml TBME zugegeben, gerührt und das TBME im Hochvakuum bei 48 °C abgezogen. Das Produkt wird praktisch quantitativ als oranges Öl erhalten.
³¹P-NMR (C₆D₆, 121 MHz): 68,4 (d), -23,5 (d), J_{PP} 73 Hz)
¹H-NMR (C₆D₆, 300 MHz, einige charakteristische Signale): 4,114 (s, 5H, Cyclopentadien), 3,114 (s, 3H, O-CH₃), 3,27 (s, 3H, O-CH₃).

### Beispiel D8: Herstellung von

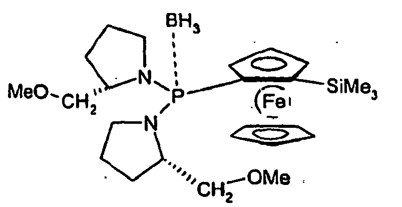

Zu einer Lösung von 0,09 mmol der Verbindung gemäss Beispiel B1 in 1.0 ml Diethylether werden bei -78 °C 1,2 Äquivalente einer 1,3M Lösung von s-ButylLithium In Cyclohexan:Hexan (92:8) zugetropft. Nach 2 Stunden Rühren bei -30 °C werden 1,6 Äquivalente Trimethylchlorsilan zugegeben. Gemäss NMR enthält das Produkt 93% ortho-substituierte Verbindung und 7 % Edukt. Nach Reinigung an einer Kieselgel-Säule (Laufmittel: Hexan:Essigsäureethylester (10:1)) erhält man die Titelverbindung als orangen Feststoff. Charakteristische NMR-Signale:¹H-NMR (500 MHz, C₆D₆, 295 K): 0,45 (s, 9H, Si(CH3)3); 3,07 / 3,29 (je s, 6H, CH₃-O; 4,42 (s, 5H, FcC-H) ppm. ³¹P{¹H}-NMR (162 MHz, C₆D₆, 295 K): 73,6 (mc) ppm.

### Beispiel D9: Herstellung von:

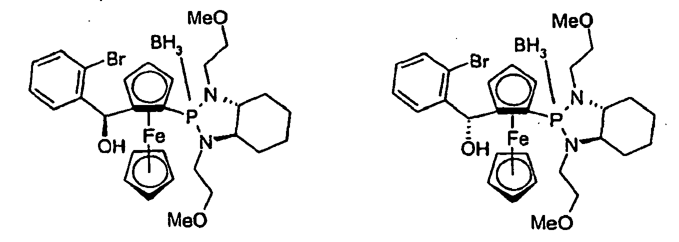

459 mg (1,0 mmol) der Verbindung gemäss Beispiel B3 werden in 10 ml absolutem Et₂O bei -78 °C mit 0,85 ml (1,1 mmol) einer 1,3M Lösung von s-Butyl-Lithium in Cyclohexan:Hexan (92:8) umgesetzt, 2 h bei 0°C gerührt und anschliessend wird eine Lösung von 0,14 ml (1,2 mmol) 2-Brombenzaldehyd in 5 ml absolutem Et₂O zugetropft. Nach Erwärmen auf RT über Nacht wird mit gesättigter NH₄Cl-Lösung hydrolysiert, die Phasen getrennt, die wässrige Phase mit Dichlormethan extrahiert und die vereinigten organischen Phasen mit gesättigter NaCl-LÖsung gewaschen. Trocknen über MgSO₄ sowie Einengen am Rotationsverdampfer ergibt ein (73:27)-Gemisch der Diastereomeren, welche durch Chromatographische Reinigung an Kieselgel [Laufmittel: Pentan: Et₂O (2:1)] von einander getrennt werden können. Man erhält 314 mg (49 %) von einem sowie 125 mg (19 %) vom anderen Diastereomeren als dunkelorange Kristalle. Charakterisierung der Hauptfraktion (Charakteristische NMR-Signale): ¹H-NMR (400 MHz, C₆D₆, 295 K): 3,05/ 3,19 (je s, 6H, CH₃-O); 3,66 (s, 1H, CH-O); 4,39 (s, 5H. FcC-H); 5,98 (s, 1H, OH). ¹³C{¹H}-NMR (100 MHz, C₆D₆, 295 K): 69,6 (s, 1C, CH-O); 70,6 (s, 5C, FcC-H). ³¹P{¹H}-NMR (162 MHz, C₆D₆, 295 K): 113,0 (mc) ppm.

Charakterisierung der Nebenfraktion (Charakteristische NMR-Signale): ¹H-NMR (400 MHz. C₆D₆, 295 K): 2,93 / 3,21 (je s, 6H, CH₃-O); 4,22 (s, 5H, FcC-H); 4,35 (d,³J = 3,4 Hz, 1H, CH-O); 6,50 (d, ³J = 3,4 Hz, 1H, OH). ¹³C{¹H}-NMR (100 MHz, C₆D₆, 295 K): 70,0 (s, 1C, CH-O); 71,4 (s, 5C, FcGH). ³¹P{¹H}-NMR (162 MHz, C₆D₆, 295 K): 108,2 (mc) ppm.

### Beispiel D10: Herstellung von

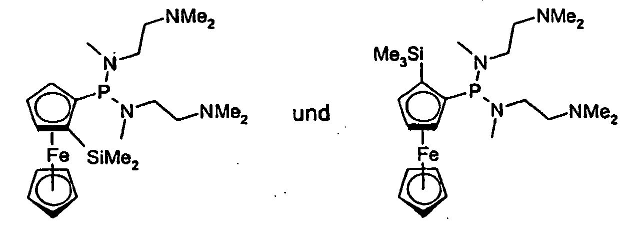

Eine Lösung von 0,14 mmol der Verbindung gemäß Beispiel B4 in 1,0 ml Diethylether wird auf-78 °C gekühlt und mit 0,10 ml (0,14 mmol),einer 1,3M Lösung von s-ButylLithium in Cyclohexan:Hexan (92:8) versetzt. Anschliessend wird bei -25 °C für 2 Stunden gerührt Zur resultierenden dunkelroten Lösung werden 32 µl (0,22 mmol) Trimethylchlorsilan gegeben, und das Reaktionsgemisch 1 Stunde bei Raumtemperatur gerührt Für die Reinigung und Charakterisierung wird die Verbindung mit Boran geschützt. Dazu werden 0,5 mmol einer 10,0M Boran-Dimethylsulfid Lösung zugegeben. Man erhält 83% orthosubstituierte Verbindung sowie 17% Edukt. Beide Verbindungen sind mit Boran geschützt.

Charkteristische NMR-Signale der Boran-geschützten ortho-substituierten Verbindung: ¹H-NMR (400 MHz, C₆D₆, 295 K): 0,43 (s, 9H, Si(CH₃)₃); 4,15-4,19 (m, 1H, FcC-H); 4,25-4,30 (m, 2H, FcC-H); 4,32 (s, 5H, FcC-H) ppm. ³¹P{¹H}-NMR (162 MHz, C₆D₆, 295 K): 93,9 ppm (q,¹J_{PB} = 87 Hz).

### Beispiel D11: Herstellung von

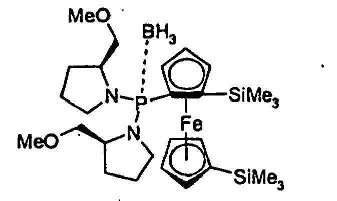

Zu einer orangen Suspension von 153 mg (0,33 mmol) der Verbindung B1 in 4 ml TBME / Hexan 1:1 werden bei -30 °C 0,77 ml (0,59 mmol) einer 1,3 molaren s-Buthyllithium-Lösung getropft. Das Reaktionsgemisch wird bei dieser Temperatur während 3 Stunden gerührt. Dabei entsteht zunächst eine orange Lösung, welche dann wieder in eine Suspension übergeht. Anschliessend werden bei -30 °C 0,15 ml (1,17 mmol) Chlortrimethylsilan zugetropft. Die Kühlung wird entfernt, das Reaktionsgemisch über Nacht bei Raumtemperatur gerührt und anschliessend in Wasser / TBME mehrmals extrahiert. Die organischen Phasen werden gesammelt, mit Natriumsulfat getrocknet und im Vakuum am Rotationsverdampfer eingeengt. Nach Chromatographie mit Kieselgel 60 (Laufmittel: Heptan / TBME 20:1) wird die Titelverbindung in guter Ausbeute als oranger Feststoff erhalten. ³¹P-NMR (C₆D₆, 121 MHz): 77,9 (m,br).¹H-NMR (C₆D₆, 300 MHz, einige charakteristische Signale): 3,29 (s, 3H, O-CH₃). 3,07 (s, 3H, O-CH₃), 0,49 (s, 9H, SiMe₃), 0,26 (s, 9H, SiMe₃).

### Beispiel D12: Herstellung von

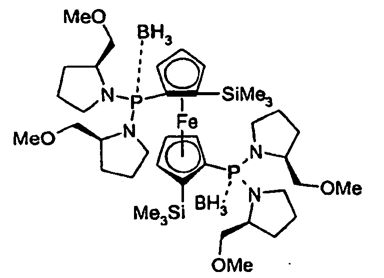

Zu einer orangen Lösung von 204 mg (0.28 mmol) der Verbindung gemäss Beispiel B5 in 4 mol TBME / Hexan 1:1 werden bei -30 °C 0,45 ml (0,58 mmol) einer 1,3 molaren s-Butyllithium-Lösung getropft. Das Reaktionsgemisch wird bei dieser Temperatur während 3 Stunden gerührt. Dabei verfärbt es sich rot und es fällt etwas rote Substanz aus. Anschliessend wird auf -40 °C gekühlt und 0,11 ml (0,84 mmol) Chlortrimethylsilan zugetropft. Die Kühlung wird entfernt, das Reaktionsgemisch über Nacht bei Raumtemperatur gerührt und in Wasser / TBME mehrmals extrahiert. Die organischen Phasen werden gesammelt, mit Natriumsulfat getrocknet und im Vakuum am Rotationsverdampfer eingeengt. Nach Chromatographie mit Kieselgel 60 (Laufmittel: Methylenchlorid) wird die Titelverbindung in guter Ausbeute als oranger Feststoff erhalten. Charakteristische NMR-Signale: ³¹P-NMR (C₆D₆, 121 MHz): 78,7 (m,br).¹H-NMR (C₆D₆, 300 MHz, einige charakteristische Signale): 5,86 (m, 2H), 5,08 (m, 2H), 3,33 (s, 6H, O-CH₃), 3,06 (s, 6H, O-CH₃), 0,56 (s, 18H, SiMe3).

### Beispiel D13: Herstellung von

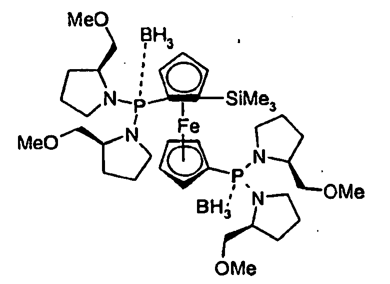

Zu einer orangen Lösung von 203 mg (0.28 mmol) der Verbindung gemäss Beispiel B5 in 4 ml TBME / Hexan 1:1 werden bei -30 °C 0,23 ml (0,29 mmol) einer 1,3 molaren s-Butyllithium Lösung getropft. Das Reaktionsgemisch wird bei dieser Temperatur während 3 Stunden gerührt. Die resultierende orange Suspension wird anschliessend wird auf -40 °C gekühlt und es werden 0,22 ml (0,42 mmol) Chlortrimethylsilan zugetropft. Die Kühlung wird entfernt, das Reaktionsgemisch über Nacht bei Raumtemperatur gerührt und anschliessend in Wasser / TBME mehrmals extrahiert. Die organischen Phasen werden vereinigt, mit Natriumsulfat getrocknet und im Vakuum am Rotationsverdampfer eingeengt. Nach Chromatographie an Kieselgel 60 (Laufmittel: Methylenchlorid) wird die Titelverbindung in guter Ausbeute als oranges, fast festes Oel erhalten. ³¹P-NMR (C₆D₆, 121 MHz): 80,0 (m,br), 77,1 (m,br). ¹H-NMR (C₆D₆, 300 MHz, einige charakteristische Signale): 3,35 (s, 3H, O-CH₃), 3,23 (s, 3H, O-CH₃), 3,11 (s, 3H, O-CH₃), 3,05 (s, 3H, O-CH₃), 0,51 (s, 9H, SiMe3).

### Beispiel D14: Herstellung von

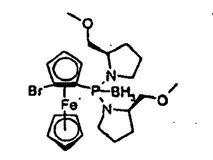

In einem 50 ml Rundkolben mit Argoneinlass wird Verbindung B1 (1,00 g, 2,18 mmol) in trockenem TBME (5,00 ml) und *n*-Hexan (5,00 ml) gelöst und die erhaltene Lösung auf -30 °C gekühlt. Dabei fällt das Edukt als gelber Feststoff aus. Es wird tropfenweise s-Butyl-Li (1,3 M in Cyclohexan; 1,76 ml, 2,29 mmol, 1,05 Äquivalente) zugegeben. Dabei geht der gelbe Feststoff allmählich in Lösung, die Lösung färbt sich orange-rot und nach etwa 30 Minuten fällt ein orange-farbener Feststoff aus.
Nach 2 h Rühren bei -30 °C wird BrF₂C-CF₂Br (680 mg, 2,62 mmol, 1,2 Äquivalente) zugetropft, das Kühlbad entfernt und die Suspension 2 h unter Erwärmung auf RT gerührt. Das Reaktionsgemisch wird im Hochvakuum am Rotationsverdampfer bis zur Trockene eingeengt und ohne Reinigung in Stufe b) weiterverwendet. ³¹P-NMR (C₆D₆, 121 MHz): 76,5 (m).

### E) Herstellung von Diphosphinen

### Beispiel E1: Herstellung von

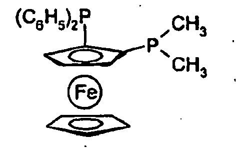

a) Herstellung von 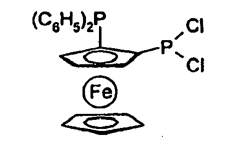 Zu einer Lösung von 1,10 g (1,75 mmol) Verbindung gemäss Beispiel D2 (welche zuvor durch Behandlung mit Diethylamin analog wie in Beispiel D7 beschrieben vom Boran befreit wurde) in 20 ml TBME werden unter Rühren bei 0°C 4 Äquivalente HCl in Form einer 2 molaren HCl/Diethyether-Lösung gegeben, wobei sich ein Niederschlag bildet Nach einer weiteren Stunde Rühren bei 0°C wird dieser Niederschlag unter Argon abfiltriert und mehrmals mit TBME gewaschen. Das Filtrat wird am Hochvakuum eingedampft und das orange Produkt mittels NMR charakterisiert.
   ³¹P-NMR (C₆D₆, 121 MHz): 161,6 (d), -24,6 (d), J_{PP} 170 Hz);
   ¹H-NMR (C₆D₆, 300 MHz, charakteristische Signale): 3,89 (s, 5H, Cyclopentadien).
   Das erhaltene Produkt wird ohne Reinigung in der folgenden Stufe b) verwendet.
b) Herstellung der Titelverbindung
   Das gemäss Stufe a) erhaltene Produkt wird in 10 ml THF gelöst und bei -40°C mit einer Methylmagnesiumchlorid-LÖsung versetzt, bis sich gemäss ³¹P-NMR das gewünschte Produkt vollständig gebildet hat (2 bis 4 Äquivalente). Nach Aufarbeitung und Chromatographie wird das Produkt als oranger Feststoff isoliert. Die NMR-Spektren decken sich mit den in der Literatur angegebenen Spektren (Kagan et al. in Eur. J. Org. Chem. (2000) 2893 -9).

### Beispiel E2: Herstellung von

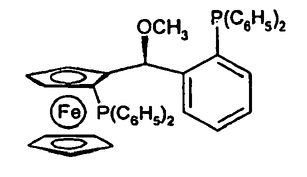

a) Herstellung von 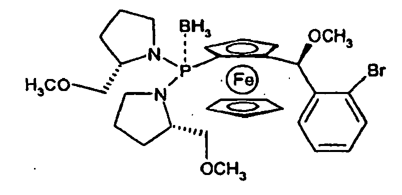 In einem 50 ml Rundkolben mit Argoneinlass wird Kaliumhydrid (32 mg, 0,79 mmol, 1,3 Äquivalente) unter Argon in trockenem THF (0,50 ml) suspendiert und auf 0 °C gekühlt. Eine Lösung von Verbindung D1 gemäss Beispiel D1 (390 mg, 0,61 mmol) in THF (3,5 ml) wird langsam zugetropft, wobei das Kaliumhydrid fast vollständig in Lösung geht. Die erhaltene orange-farbene Suspension wird 1,5 h bei RT gerührt und anschliessend erneut auf 0 °C gekühlt. Methyliodid (95 mg, 0,67 mmol, 1,10 Äquivalente) wird tropfenweise zugesetzt Während der Zugabe wird die Bildung eines weissen Niederschlags beobachtet. Die Suspension wird 10 min bei 0 °C und 1 h bei RT gerührt. Die Suspension wird mit TBME (10 ml) versetzt und mit Wasser (10 ml) hydrolysiert. Die org. Phase wird abgetrennt und über Na₂SO₄ getrocknet. Das Lösungsmittel wird am Rotationsverdampfer abdestilliert und das Rohprodukt (gelber Feststoff) säulenchromatographisch gereinigt (150 g Kieselgel, n-Heptan/TBME 5:1→3:1). Die Verbindung (363 mg, 0,55 mmol, 91 %) wird als orange-gelber Feststoff erhalten. ³¹P-NMR (C₆D₆, 121 MHz): 75,3 (m, br).
b) Herstellung von 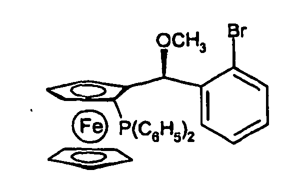 In einem 100 ml Rundkolben mit Argoneinlass wird die gemäss Stufe a) hergestellte Verbindung (500 mg, 0,76 mmol) unter Argon in Diethylamin (3,00 ml) gelöst und über Nacht (14 h) bei 50 °C gerührt. Im Anschluss werden alle flüchtigen Bestandteile im Ölpumpenvakuum bei 50 °C entfernt. Der erhaltene Rückstand (orange-braunes öl) wird dreimal in trockenem TBME (je 2,00 ml) gelöst und alle flüchtigen Bestandteile bei 50 °C im Ölpumpenvakuum entfernt. Der Rückstand (orange-braunes Öl) wird in trockenem TBME (10 ml) gelöst und die Lösung auf 0 °C gekühlt. Es wird tropfenweise HCl-Lösung (2 M in Diethylether, 1,52 mL, 3,04 mmol, 4,00 Äquivalente) zugesetzt, wobei ein weisser Niederschlag ausfällt. Nach 20 Minuten Rühren bei 0 °C wird die Suspension unter Argon mittels einer Umkehrfritte abfiltriert. Das erhaltene gelbe Filtrat wird auf -30 °C gekühlt und PhenylMgCl-Lösung (2 M in THF; 3,80 mL, 7,60 mmol, 10,00 Äquivalente) tropfenweise zugegeben. Das Reaktionsgemisch wird 3 Tage unter Erwärmung auf RT gerührt und mit gesättigter NH₄Cl-Lösung (10 ml) hydrolysiert. Die organische Phase wird abgetrennt, die wässrige Phase mit TBME (50 ml) extrahiert, die vereinigten organischen Phasen über Na₂SO₄ getrocknet und das Lösungsmittel am Rotationsverdampfer abdestilliert. Das Rohprodukt wird säulenchromatographisch gereinigt (100 g Kieselgel, n-Heptan/TBME 20:1). Die Titelverbindung wird als gelber Feststoff erhalten. ³¹P-NMR (C₆D₆, 121 MHz): -20,5 (s).

### Beispiel E3: Herstellung von

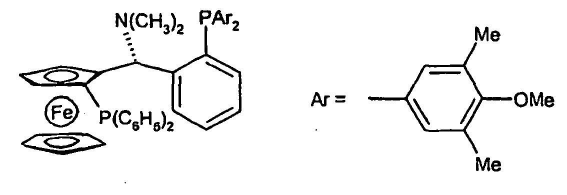

a) Herstellung von 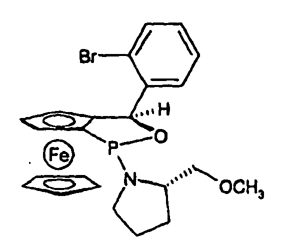 In einem 100 mL-Rundkolben mit Argoneinlass wird Verbindung D'1 gemäss Beispiel D1 (500 mg, 0,78 mmol) unter Argon in Diethylamin (3,00 ml) gelöst und über Nacht (14 h) bei 50 °C gerührt. Im Anschluss werden alle flüchtigen Bestandteile im Ölpumpenvakuum bei 50 °C entfernt. Der erhaltene,Rückstand (orange-braunes Öl) wird dreimal in Diethylamin (je 2,00 ml) gelöst, die Lösung für 30 Minuten bei 50 °C gerührt und alle flüchtigen Bestandteile bei 50 °C im Ölpumpenvakuum entfernt. Der Rückstand (orange-braunes Öl) wird zweimal in trockenem TBME (2 ml) gelöst und alle flüchtigen Bestandteile bei 50 °C im Ölpumpenvakuum entfernt. Die Verbindung (401 mg, 0,78 mmol) wird als orange-braunes Öl in quantitativer Ausbeute erhalten. Die Verbindung wird ohne weitere Reinigung in der Folgestufe eingesetzt. ³¹P-NMR (C₆D₆, 121 MHz): 107,7 (s).
b) Herstellung von 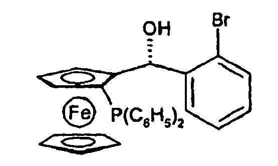 In einem 100 ml Rundkolben mit Argoneinlass wird die gemäss Stufe a) hergestellte Verbindung (401 mg, 0,78 mmol) in trockenem TBME (10 ml) gelöst und die Lösung auf 0 °C gekühlt Es wird tropfenweise HCl-Lösung (2 M in Diethylether, 1,56 ml, 3,11 mmol, 4.00 Äquivalente) zugesetzt, wobei ein weisser Niederschlag ausfällt. Nach 30 Minuten Rühren bei 0 °C wird die Suspension unter Argon mittels einer Tauchfritte abfiltriert. Der erhaltene Niederschlag wird mit trockenem TBME (10 ml) nachgewaschen. Das gelbe Filtrat wird im Ölpumpenvakuum bis zur Trockene eingedampft und der erhaltene Rückstand in trockenem TBME (5,00 ml) und THF (5,00 ml) gelöst. Die Lösung wird auf -30 °C gekühlt und PhenylMgBr-Lösung (1 M in THF; 3,89 ml, 3,89 mmol, 5,00 Äquivalente) tropfenweise zugegeben. Das Reaktionsgemisch wird über Nacht (14 h) unter Erwärmung auf RT gerührt und mit gesättigter NH₄Cl-Lösung (10 ml) hydrolysiert. Die organische Phase wird abgetrennt, die wässrige Phase mit TBME (100 ml) extrahiert, die vereinigten organischen Phasen über Na₂SO₄ getrocknet und das Lösungsmittel am Rotationsverdampfer abdestilliert. Das Rohprodukt wird säulenchromatographisch gereinigt (150 g Kieselgel, n-Heptan/TBME 5: 1). Die Verbindung wird als gelber Feststoff erhalten. ³¹P-NMR (C₆D₆, 121 MHz):
   -21,5 (s).
c) Herstellung von 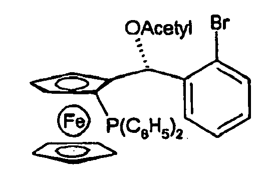 In einem 50 ml Schlenkrohr wird die die gemäss Stufe b) hergestellte Verbindung (100 mg, 0,18 mmol) unter Argon in Pyridin (1,00 ml) gelöst und Acetanhydrid (0,50 ml, 4,53 mmol) zugesetzt. Die orange-braune Lösung wird über Nacht (15 h) bei RT gerührt. Anschliessend werden alle flüchtigen Bestandteile im Ölpumpenvakuum verdampft. Die Verbindung (108 mg, 0,18 mmol) wird in quantitativer Ausbeute als brauner Feststoff erhalten. ³¹P-NMR (C₆D₆, 121 MHz): -23,0 (s).
d) Herstellung von 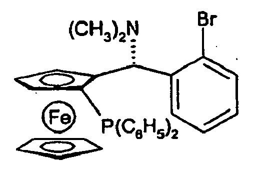 In einem 50 ml Schlenkrohr wird die gemäss Stufe c) hergestellte Verbindung (108 mg, 0,18 mmol) unter Argon in Acetonitril (2,00 ml) gelöst, Methyl₂NH-Lösung (40 % in Wasser, 1,00 ml) und Wasser (0,20 ml) zugesetzt. Die erhaltene braun-orange-farbene Lösung wird über Nacht (14 h) bei 90 °C gerührt. Das Lösungsmittel wird im Ölpumpenvakuum eingeengt, der Rückstand in CH₂Cl₂ aufgenommen, mit gesättigter NaCl-Lösung gewaschen, die organische Phase abgetrennt und über Na₂SO₄ getrocknet Das Lösungsmittel wird am Rotationsverdampfer abdestilliert. Das Rohprodukt wird säulenchromatographisch gereinigt (50 g Kieselgel, n-Heptan/TBME 3:1). Die Verbindung (68 mg, 0,12 mmol, 67 %) wird als gelber Feststoff erhalten. ³¹P-NMR (C₆D₆, 121 MHz): -24.5 (s).
e) Herstellung der Titelverbindung
   In einem 50 ml Schlenkrohr wird die gemäss Stufe d) hergestellte Verbindung (50 mg, 0,09 mmol) unter Argon in trockenem THF (1,00 ml) gelöst und die hellgelbe Lösung auf -78 °C gekühlt. Tropfenweise wird t-Butyl-Li (1,5 M in Pentan; 0,11 ml, 0,17 mmol, 2,00 Äquivalente) zugesetzt. Die Lösung färbt sich während der Zugabe orange. Nach 15 Minuten Rühren bei - 78 °C wird langsam Chlorbis(3,5-dimethyl-4-methoxyphenyl)phosphan (35 mg, 0,10 mmol, 1,20 Äquivalente) zugetropft, wobei sich die Lösung gelb-orange färbt. Das Kühlbad wird entfernt, das Reaktionsgemisch 1 h bei RT gerührt und anschliessend mit gesättigter NH₄Cl-Lösung (10 ml) hydrolysiert. Die organische Phase wird abgetrennt, die wässrige Phase mit TBME (50 ml) extrahiert, die vereinigten organischen Phasen über Na₂SO₄ getrocknet und das Lösungsmittel am Rotationsverdampfer abdestilliert. Das Rohprodukt wird säulenchromatographisch gereinigt (50 g Kieselgel, n-Heptan/TBME 2:1). Die Titelverbindung (34 mg, 0,042 mmol, 47 %) wird als gelber Feststoff erhalten.
   ³¹P-NMR (C₆D₆, 121 MHz): -18,4 (d), -25,5 (d).

### Beispiel E4: Herstellung von

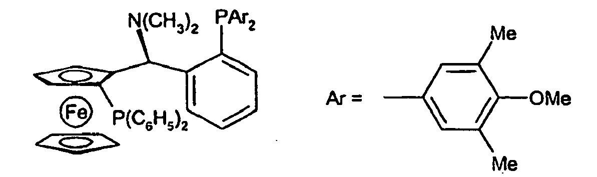

a) Herstellung von 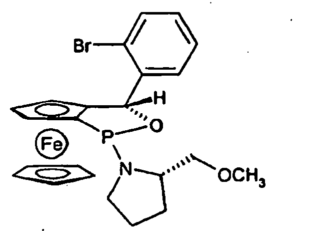 In einem 100 mL-Rundkolben mit Argoneinlass wird Verbindung D1 gemäss Beispiel D1 (500 mg, 0,78 mmol) unter Argon in Diethylamin (5,00 ml) gelöst und über Nacht (14 h) bei 50 °C gerührt. Im Anschluss werden alle flüchtigen Bestandteile im Ölpumpenvakuum bei 50 °C entfernt. Der erhaltene Rückstand (orange-braunes Öl) wird dreimal in Diethylamin (je 3,00 ml) gelöst, die Lösung für 30 Minuten bei 50 °C gerührt und alle flüchtigen Bestandteile bei 50 °C im Ölpumpenvakuum entfernt. Der Rückstand (orange-braunes Öl) wird zweimal in trockenem TBME (2 ml) gelöst und alle flüchtigen Bestandteile bei 50 °C im Ölpumpenvakuum entfernt. Die Verbindung (1,60 g, 3,11 mmol) wird als orange-braunes Öl in quantitativer Ausbeute erhalten. Die Verbindung wird ohne weitere Reinigung in der Folgestufe eingesetzt. ³¹P-NMR (C₆D₆, 121 MHz): 109,0 (s).
b) Herstellung von 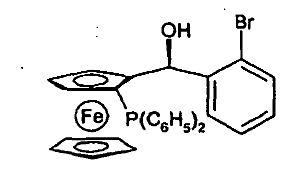
   In einem 100 ml Rundkolben mit Argoneinlass wird die gemäss Stufe a) hergestellte Verbindung (1,60 g, 3,11 mmol) in trockenem TBME (40 ml) gelöst und die Lösung auf 0 °C gekühlt. Es wird tropfenweise HCl-Lösung (2 M in Diethylether, 6,22 ml, 12,44 mmol, 4,00 Äquivalente) zugesetzt, wobei ein weisser Niederschlag ausfällt. Nach 30 Minuten Rühren bei 0 °C wird die Suspension unter Argon mittels einer Tauchfritte abfiltriert. Der erhaltene Niederschlag wird mit trockenem TBME (20 ml) nachgewaschen. Das gelbe Filtrat wird im Ölpumpenvakuum bis zur Trockene eingedampft und der erhaltene Rückstand in trockenem THF (10,00 ml) gelöst. Die Lösung wird auf -30 °C gekühlt und PhenylMgBr-Lösung (1 M in THF; 15,55 ml, 15,55 mmol, 5,00 Äquivalente) tropfenweise zugegeben. Das Reaktionsgemisch wird über Nacht (14 h) unter Erwärmung auf RT gerührt und mit gesättigter NH₄Cl-Lösung (50 ml) hydrolysiert. Die organische Phase wird abgetrennt, die wässrige Phase mit TBME (100 ml) extrahiert, die vereinigten organischen Phasen über Na₂SO₄ getrocknet und das Lösungsmittel am Rotationsverdampfer abdestilliert. Das Rohprodukt wird säulenchromatographisch gereinigt (150 g Kleselgel, n-Heptan/TBME 5:1). Die Verbindung (801 mg, 1,44 mmol, 46 %) wird als gelber Feststoff erhalten. ³¹P-NMR (C₆D₆, 121 MHz): -21,8 (s).
c) Herstellung von 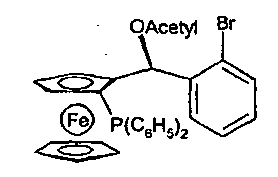 Es wird wie in Stufe c) gemäss Beispiel E3 verfahren.
d) Herstellung von 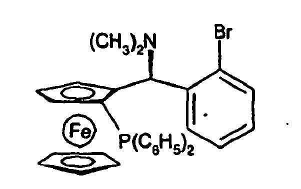 Es wird wie in Stufe d) gemäss Beispiel E3 verfahren.
e) Herstellung der Titelverbindung
   Es wird wie in Stufe e) gemäss Beispiel E3 verfahren.

## Patentansprüche

1. Verfahren zur Herstellung von Ferrocen, Bisindenylferrocen und Ruthenocen mit einem Strukturelement der Formel I im aromatischen Kohlenwasserstoffring, 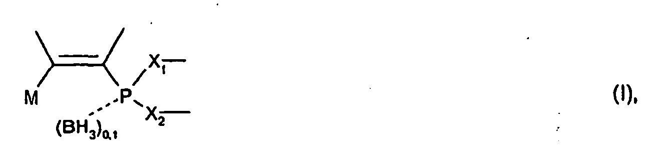 worin
M für -Li, -MgX₃, (C₁-C₁₈-Alkyl)₃Sn-, -ZnX₃ oder -B(O-C₁-C₄-Alkyl)₂ steht,
X₁ und X₂ unabhängig voneinander O oder N- bedeuten, und an die freien Bindungen der O- und N-Atome C-gebundene Kohlenwasserstoff- oder Heterokohlenwasserstoffreste gebunden sind,
die Gruppe -C=C- zusammen mit C- Atomen einen Kohlenwasserstoffaromaten bildet, und X₃ Cl, Br oder I darstellt,
**dadurch gekennzeichnet, dass** man ein Ferrocen, Bisindenylferrocen und Ruthenocen mit einem Strukturelement der Formel II im aromatischen Ring, 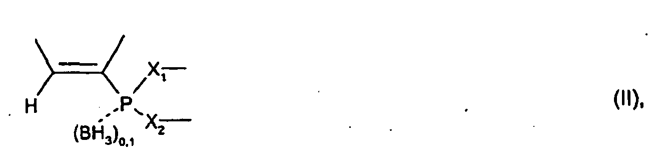
worin X₁ und X₂ die zuvor angegebenen Bedeutungen haben und die Gruppe -C=C- zusammen mit C- Atomen einen Kohlenwasserstoffaromaten bildet,
mit wenigstens äquivalenten Mengen Lithlumalkyl, einer Magnesium-Grignardverbindung, oder einem aliphatischen Li-Sekundäramid oder X₃Mg-Sekundäramid umsetzt, und zur Herstellung von Verbindungen der Formel I, worin M für -MgX₃, (C₁-C₁₈-Alkyl)₃Sn-, -ZnX₃ oder -B(O-C₁-C₄-Alkyl)₂ steht, eine Lithiumverbindung der Formel Ia, 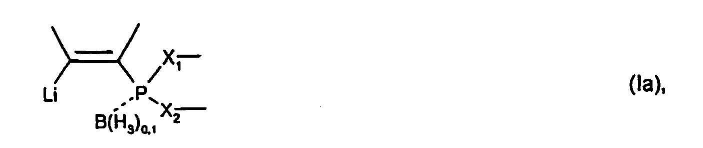
mit wenigstens äquivalenten Mengen Mg(X₃)₂, Zn(X₃)₂, (C₁-C₁₈-Alkyl)₃SnX₃ oder B(O-C₁-C₄-Alkyl)₃ umsetzt

2. Ferrocen, Bisindenylferrocen und Ruthenocen mit einem Strukturelement der Formel I im aromatischen Kohlenwasserstoffring, 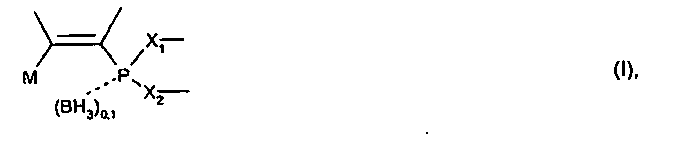 worin
M, X₁ und X₂ die in Anspruch 1 angegebenen Bedeutungen haben und die Gruppe -C=C-zusammen mit C-Atomen einen Kohlenwasserstoffaromaten bildet.

3. Ferrocen, Bisindenylferrocen und Ruthenocen gemäss Anspruch 2, **dadurch gekennzeichnet, dass** es sich um solche mit einem Ferrocengerüst handelt, die den Formeln Ib oder Ic entsprechen, 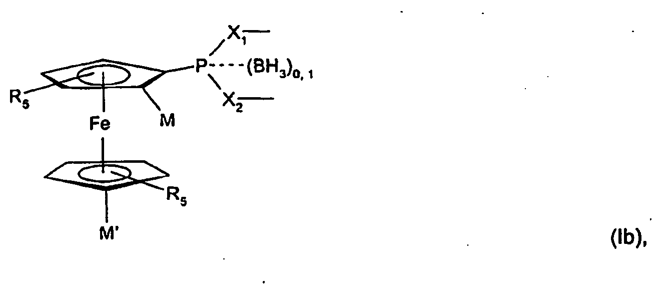 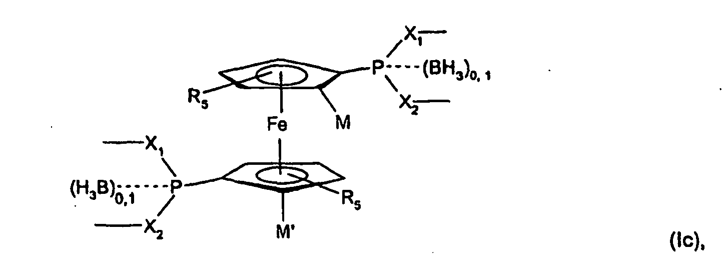 worin
R₅ C₁-C₄-Alkyl und bevorzugt ein Wasserstoffatom bedeutet,
M für -MgCl, -MgBr und bevorzugt für Li steht,
M' für H, -MgCl, -MgBr oder Li steht, und
X₁ und X₂ sowie die an freie Bindungen von X₁ und X₂ gebundenen Reste die in Anspruch 1 angegebenen Bedeutungen haben.

4. Verfahren zur Herstellung von Ferrocen, Bisindenylferrocen und Ruthenocen mit einem Strukturelement der Formel III, 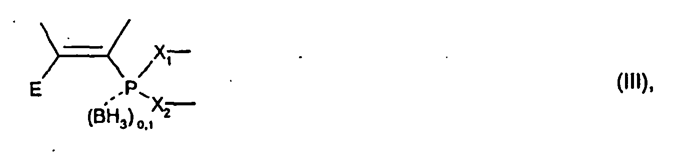 worin
X₁ und X₂ sowie die an freie Bindungen gebundenen Reste die in Anspruch 1 angegebenen Bedeutungen haben, und
E für den Rest einer reaktiven, elektrophilen Verbindung steht, die ein an Kohlenwasserstoff bromaten gebundenes Metall oder eine gebundene Metallgruppe zu substituieren vermag, das **dadurch gekennzeichnet ist, dass** man
ein Ferrocen, Bisindenylferrocen und Ruthenocen mit einem Strukturelement der Formel I, 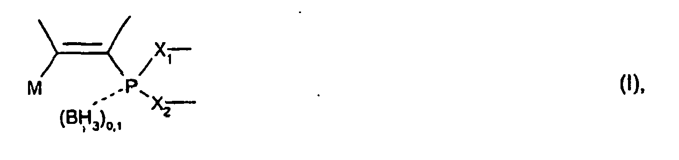
worin
M, X₁ und X₂ sowie die an freie Bindungen gebundenen Reste die in Anspruch 1 angegebenen Bedeutungen haben,
mit wenigstens äquivalenten Mengen einer reaktiven elektrophilen Verbindung umsetzt.

5. Metallocene aus der Gruppe Ferrocen, Bisindenylferrocen und Ruthenocen mit einem Strukturelement der Formel III in einem oder beiden Cyclopentadienylringen, 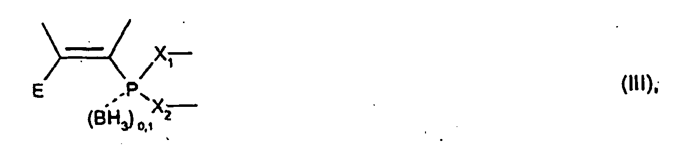 worin
E, X₁ und X₂ und an die freien Bindungen der Gruppen X₁ und X₂ gebundene Kohlenwasserstoffreste die in Anspruch 1 und 4 angegebenen Bedeutungen haben.

6. Metallocene gemäss Anspruch 5, **dadurch gekennzeichnet, dass** sie der Formel IV entsprechen, 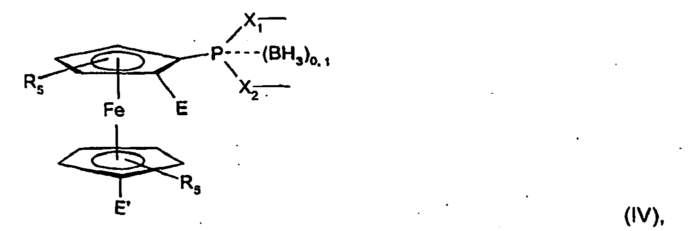 worin
R₅ C₁-C₄-Alkyl und bevorzugt ein Wasserstoffatom bedeutet, E' für H steht oder unabhänig die Bedeutung von E hat, und E, X₁ und X₂ und an die freien Bindungen der Gruppen X₁ und
X₂ gebundene Kohenwasserstoffreste die in Anspruch 5 angegebenen Bedeutungen haben.

7. Metallocene gemäss Anspruch 5, **dadurch gekennzeichnet, dass** sie der Formel IVa entsprechen, 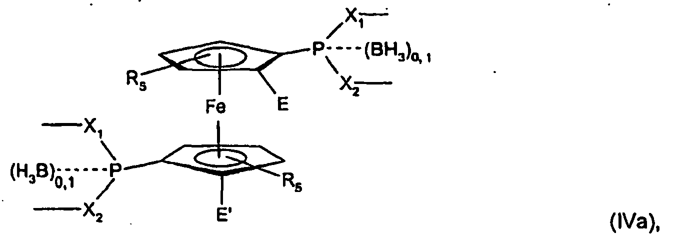 worin
E' für H steht oder unabhänig die Bedeutung von E hat,
R₅ C₁-C₄-Alkyl und bevorzugt ein Wasserstoffatom bedeutet, und
E, X₁ und X₂ und an die freien Bindungen der Gruppen X₁ und X₂ gebundene Kohlenwasserstoffreste die in Anspruch 5 angegebenen Bedeutungen haben.

8. Verfahren zur Herstellung von Ferrocen-, Bisindenylferrocen- und Ruthenocen-Diphosphinen mit Strukturelementen der Formel VI in einem aromatischen Kohlenwasserstoffring, 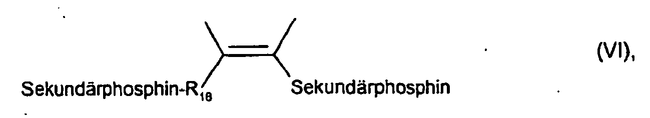 oder mit Strukturelementen der Formel VIa in je einem Cyclopentadienylring eines Metallocens, 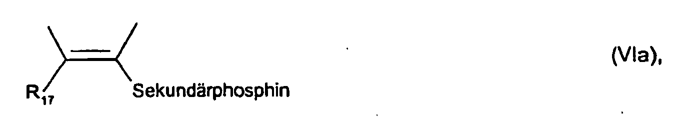 worin
R₁₆ eine direkte Bindung ist, oder eine bivalente Brückengruppe bedeutet, wobei das Sekundärphosphino in der Brückengruppe in 1-, 2- oder 3-Stellung zum C-Atom des aromatischen Ringes gebunden ist, und
R₁₇ einen Substituenten bedeutet, der über ein C-Atom an den aromatischen Ring gebunden ist,
umfassend die Schritte:
a) Umsetzung eines Ferrocen, Bisindenylferrocen und Ruthenocen mit Strukturelementen der Formel II 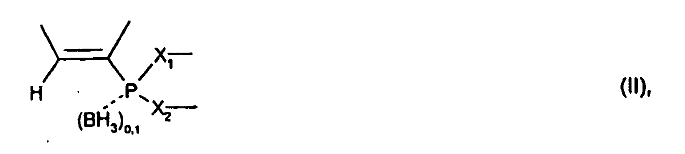 mit Metallierungsreagenzien zu Ferrocen, Bisindenylferrocen und Ruthenocen mit Strukturelementen der Formel I 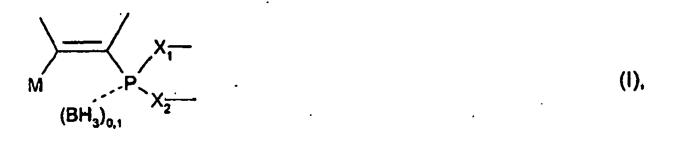 worin M, X₁ und X₂ und an die freien Bindungen der Gruppen X₁ und X₂ gebundene Kohlenwasserstoffreste die in Anspruch 1 angegebenen Bedeutungen haben,
b) Umsetzung von einem Ferrocen, Bisindenylferrocen oder Ruthenocen mit Strukturelementen der Formel I mit einer elektrophilen und reaktiven Verbindung, wobei die Umsetzung
b1) mit einem Sekundärphosphinhalogenid erfolgt zur Einführung von Sekundärphosphino,
b2) mit einer elektrophilen reaktiven Verbindung, die in 1-, 2- oder 3-Stellung eine durch Sekundärphosphin substituierbare reaktive Gruppe enthält, und nachfolgender Umsetzung mit einem Metall-sekundärphosphid oder einem Sekundärphosphin zur Einführung der Gruppe -R₁₆-Sekundärphosphino,
b3) mit einer ein α-Kohlenstoffatom bildenden elektrophilen organischen Verbindung zur Einführung der Gruppe -R₁₇,
c) aus den gemäss Stufen b1), b2 oder b3 erhaltenen Verbindungen, wenn vorhanden, die Borangruppe entfernt, dann die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach mit einer metallorganischen Verbindung die Cl- beziehungsweise Br-Atome mit einem Kohlenwasserstoffrest zum Sekundärphosphin substituiert, oder
d) die Reste (Hetero)Kohlenwasserstoff-X₁, (Hetero)Kohlenwasserstoff-X₂, oder X₁-(Hetero)-Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt.

9. Verfahren gemäss Anspruch 8 zur Herstellung von 1-(α-substiuierten Orthosekundär phosphinobenzyl)-2-sekundärphosphinoferrocenen der Formel VII in Form ihrer Racemate, Gemischen von Diastereomeren oder im wesentlichen reinen Diastereomeren, 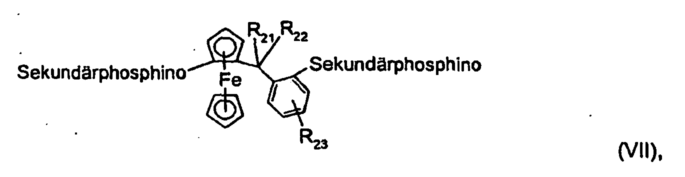 worin
R₂₁ Wasserstoff, C₁-C₆-Alkyl, C₃-C₈-Cycloalkyl, gegebenenfalls mit F, C₁-C₆-Alkyl oder C₁-C₆-Alkoxy substituiertes Phenyl oder Benzyl bedeuten,
R₂₂ C₁-C₄-Alkoxy, C₁-C₈-Acyloxy oder Sekundäramino darstellt, und
R₂₃ Wasserstoff, C₁-C₄-Alkyl oder C₁-C₄-Alkoxy bedeutet,
umfassend die Schritte:
a) Umsetzung einer Verbindung der Formel VIII 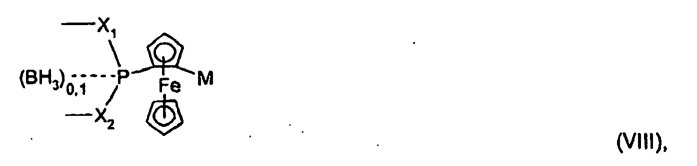 worin
M und die Gruppe -P(X₁-)(X₂-)-(BH₃)_{0,1} die in Anspruch 1 angegeben Bedeutungen haben, mit einer Verbindung der Formel IX 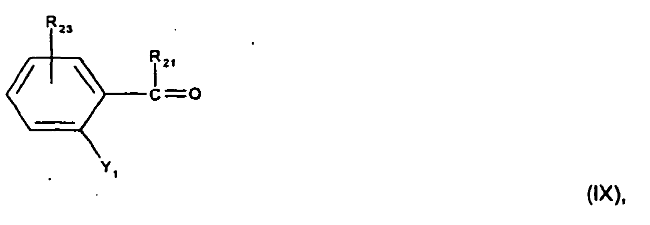
worin Y₁ Cl, Br oder I bedeutet und R₂₃ und R₂₁ die zuvor angegebene Bedeutung hat, zu einer Verbindung der Formel X, 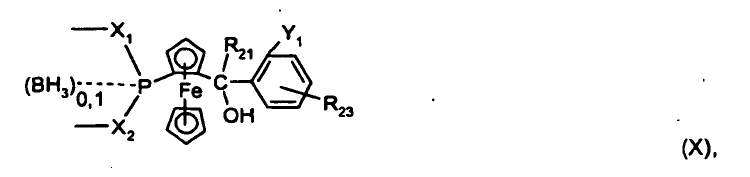
b) C₁-C₄-Alkylierung oder C₁-C₈-Acylierung der OH-Gruppe in der Verbindung der Formel X, oder Substitution der gebildeten Acyloxygruppe mit Sekundäramino,
c) Substitution des Halogens Y₁ in Verbindungen der Formel X durch Sekundärphosphino und anschliessende Umwandlung der Gruppe -P(X₁-)(X₂-)----(BH₃)_{0,1} in eine Sekündärphosphinogruppe, oder zuerst Umwandlung der Gruppe -P(X₁-)(X₂-)----(BH₃)_{0,1} in eine Sekundär phosphinogruppe und anschliessende Substitution des Halogens Y₁ in Verbindungen der Formel X durch Sekundärphosphino,
d) Herstellung des Diphosphins der Formel VII, indem man
d1) aus einer Verbindung der Formel X, wenn vorhanden, die Borangruppe entfernt, dann die Reste (Hetero)Kohlenwasserstoff-X₁, (Hetero)Kohlenwasserstoff-X₂, oder X₁-(Hetero)-Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, oder
d2) die Reste (Hetero)Kohlenwasserstoff-X₁, (Hetero)Kohlenwasserstoff-X₂, oder X,-(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt.

10. Verbindungen der Formel XI in Form von Racematen, Diastereomeren und Paaren von Diastereomeren, 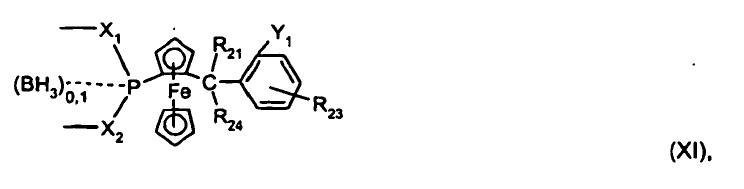 worin
die Gruppe -P(X₁-)(X₂-)----(BH₃)_{0,1}, R₂₁, R₂₃ und Y, die in Ansprüchen 1 und 9 angegebenen Bedeutungen haben, oder (X₁-) und (X₂-) in der Gruppe -P(X₁-)(X₂-)----(BH₃)_{0,1} Cl oder Br bedeuten, und R₂₄ -OH, C₁-C₄-Alkoxy, C₁-C₈-Acyloxy oder Sekundäramino darstellt.

11. Verfahren gemäss Anspruch 8 zur Herstellung von Verbindungen der Formeln XII in Form von Racematen, Diastereomeren und Paaren von Diastereomeren, 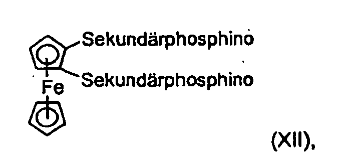 umfassend die Schritte
a) Umsetzung einer Verbindung der Formel XIV 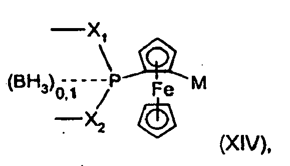 worin
M und die Gruppe -P(X₁-)(X₂-)----(BH₃)_{0,1} die in Ansprüchen 1 und 10 angegebenen Bedeutungen haben, mit einem Sekundärphosphinhalogenid (Chlorid oder Bromid) umsetzt zur Herstellung von Verbindungen der Formeln XVI, 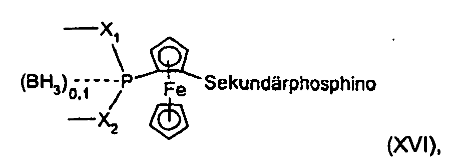
b) Herstellung der Diphosphine der Formeln XII und XIII, indem man
b1) aus einer Verbindung der Formel XVI oder XVII, wenn vorhanden, die Borangruppe entfernt, dann die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, oder
b2) die Reste (Hetero)Kohlenwasserstoff-X₁, (Hetero)Kohlenwasserstoff-X₂, oder X₁-(Hetero)-Kohlenwasserstoff X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt.

12. Verbindungen der Formeln XVI und XVIII in Form von Racematen, Diastereomeren und Paaren von Diastereomeren, 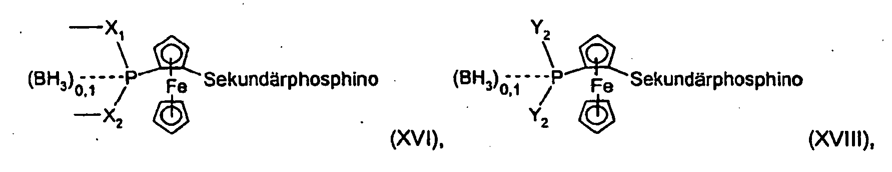 worin die Gruppe -P(X₁-)(X₂-)----(BH₃)_{0,1} die in Anspruch 1 angegebene Bedeutung hat und Y₂ für Cl oder Br steht.

13. Verfahren gemäss Anspruch 8 zur Herstellung von Verbindungen der Formel XIX in Form von Racematen, Diastereomeren und Paaren von Diastereomeren, 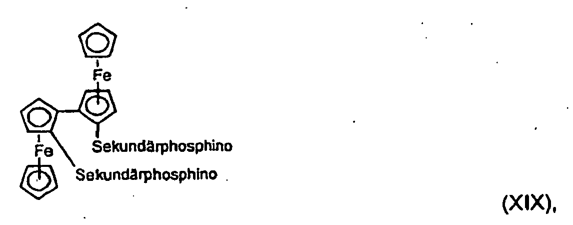 umfassend die Schritte
a) Umsetzung einer Verbindung der Formel XX mit einer Verbindung der Formel XXI, 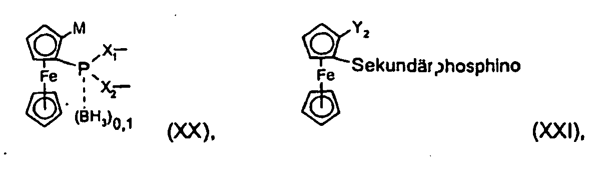 worin
M für -Sn(C₁-C₄-Alkyl)₃ oder -ZnX₃ steht, die Gruppe -P(X₁-)(X₂-)----(BH₃)_{0,1} die in Anspruch 1 angegebene Bedeutung hat und Y₂ für I oder Br steht, in Gegenwart eines Pd-Katalysators zu einer Verbindung der Formel XXII umsetzt, 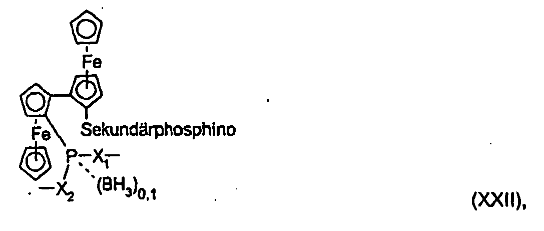
b) Herstellung der Diphosphine der Formel XIX, indem man
b1) aus einer Verbindung der Formel XXII, wenn vorhanden, die Borangruppe entfernt, dann die Reste (Hetero)Kohlenwasserstoff-X₁, (Hetero)Kohlenwasserstoff-X₂, oder X₁-(Hetero)-Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, oder
b2) die Reste (Hetero)Kohlenwasserstoff-X₁, (Hetero)Kohlenwasserstoff-X₂, oder X₁-(Hetero) Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt.

14. Verbindungen der Formeln XXII und XXIII in Form von Racematen, Diastereomeren und Paaren von Diastereomeren, 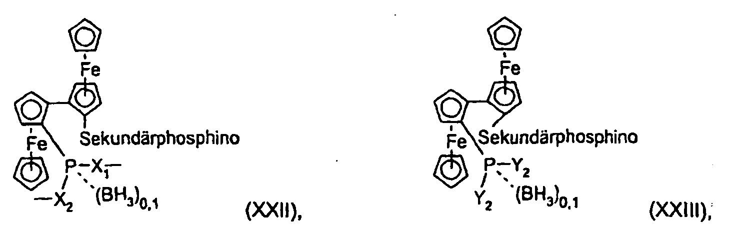 worin die Gruppe -P(X₁-)(X₂-)-(BH₃)_{0,1} die in Anspruch 1 angegebene Bedeutung hat und Y₂ für Cl oder Br steht.

15. Verfahren gemäss Anspruch 9 zur Herstellung von Verbindungen der Formel XXIV in Form von Racematen, Diastereomeren und Paaren von Diastereomeren, 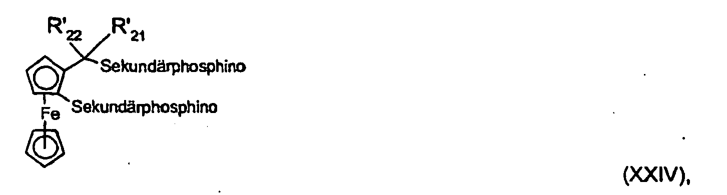 worin
R'₂₁ Wasserstoff oder C₁-C₆-Alkyl bedeutet,
R'₂₂ C₁-C₆-Alkyl, C₃-C₈-Cycloalkyl, gegebenenfalls mit F, C₁-C₆-Alkyl oder C₁-C₆-Alkoxy substituiertes Phenyl oder Benzyl darstellt,
umfassend die Schritte
a) Umsetzung einer Verbindung der Formel XX, 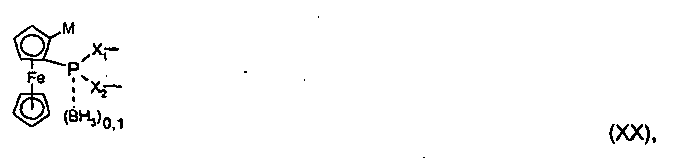 mit einem Aldehyd oder Keton der Formel R'₂₁R'₂₂C(O) zu einer Verbindung der Formel XXV, 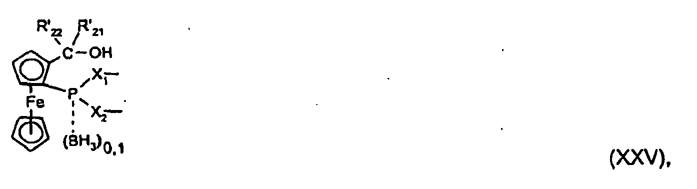
b) Herstellung von Verbindungen der Formel XXVI, 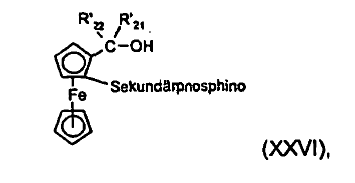 indem man
b1) aus einer Verbindung der Formel XXV, wenn vorhanden, die Borangruppe entfernt, dann die Reste Kohlenwasserstoff(Hetero)Kohlenwasserstoff-X₁, (Hetero)Kohlenwasserstoff-X₂, oder X₁-(Hetero)Kohlenwasserstoff-X₂ unter Bildung einer-PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, oder
b2) die Reste (Hetero)Kohlenwasserstoff-X₁, (Hetero)Kohlenwasserstoff-X₂, oder X₁-(Hetero) Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt.
c) die Verbindung der Formel XXVI acyliert, zum Beispiel mit einem Carbonsäureanhydrid, und
d) die gebildete C₁-C₈-Acyloxygruppe mit einem sekundären Phosphin zu Verbindungen der Formel XXIV substituiert.

16. Verbindungen der Formeln XXVII und XXVIII in Form von Racematen, Diastereomeren und Paaren von Diastereomeren, 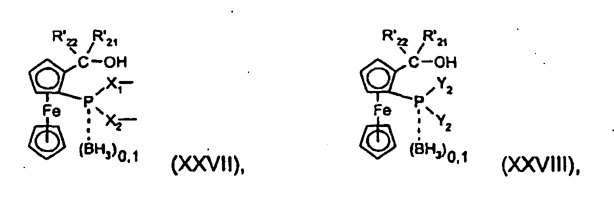 worin R₂₁ und R₂₂ die in Anspruch 15 angegebenen Bedeutungen hat, Y₂ für Cl oder Br steht, und die Gruppe -P(X₁-)(X₂-)----(BH₃)_{0,1} die in Anspruch 1 angegebenen Bedeutungen hat.

17. Verfahren gemäss Anspruch 8 zur Herstellung von Verbindungen der Formel XXIX in Form von Racematen, Diastereomeren und Paaren von Diastereomeren, 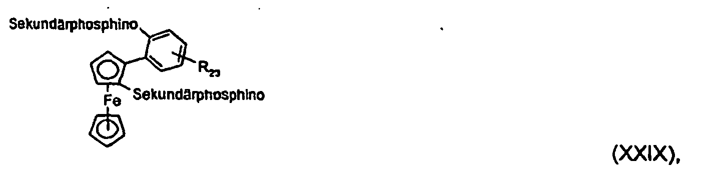 umfassend die Schritte
a) Umsetzung einer Verbindung der Formel XX 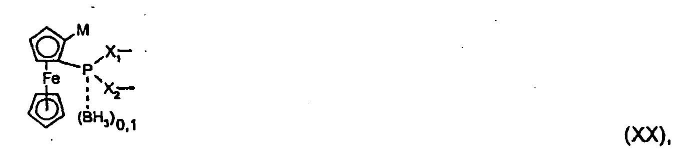 worin M für -Sn(C₁-C₄-Alkyl)₃ oder -ZnX₃ steht, die Gruppe -P(X₁-)(X₂-)----(BH₃)_{0,1} die in Anspruch 1 angegebene Bedeutung hat, in Gegenwart eines Pd-Katalysators mit 1-Brom-2-Iod- oder 1,2-Di-lodbenzol zu einer Verbindung der Formel XXX, 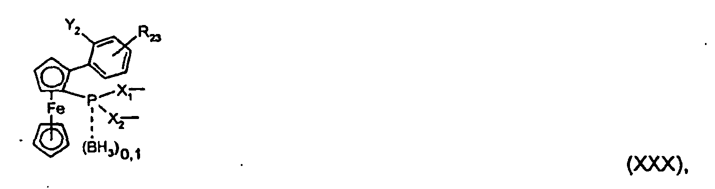 worin Y₂ Brom oder Iod ist,
b) zur Herstellung von Monophosphinen der Formel XXXI 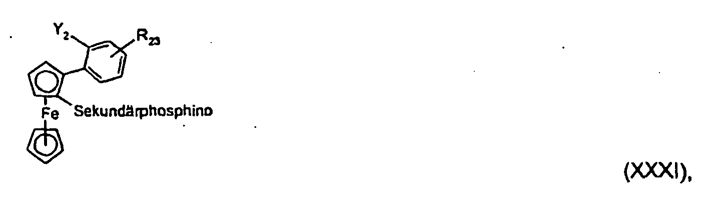
b1) aus einer Verbindung der Formel XXX, wenn vorhanden, die Borangruppe entfernt, dann die Reste (Hetero)Kohlenwasserstoff-X₁, (Hetero)Kohlenwasserstoff-X₂, oder X₁-(Hetero)-Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, oder
b2) die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt, und
c) dann das Brom- oder Iodatom durch Metallierung mit einem Lihiumalkyl (Lithiumbutyl) und nachfolgende Reaktion mit einem Sekundärphosphinhalogenid mit einer Sekundärphosphingruppe substituiert, oder
d) zur Herstellung von Verbindungen der Formel XXXII 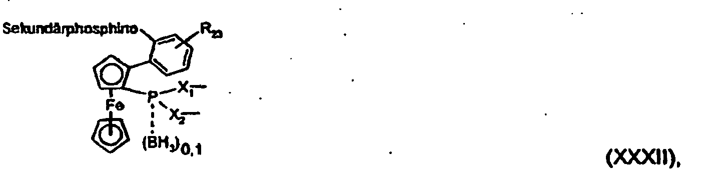 eine Verbindung der Formel XX mit Ortho-sekundärphosphino-benzoliodid in Gegenwart von Metallhalogeniden wie zum Beispiel ZnBr2 und Pd-Katalysatoren umsetzt, und
d1) aus einer Verbindung der Formel XXXII, wenn vorhanden, die Borangruppe entfernt, dann die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, oder
d2) die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt.

18. Verbindungen der Formeln XXX, XXXII, XXXIII und XXXIV in Form von Racematen, Diastereomeren und Paaren von Diastereomeren, 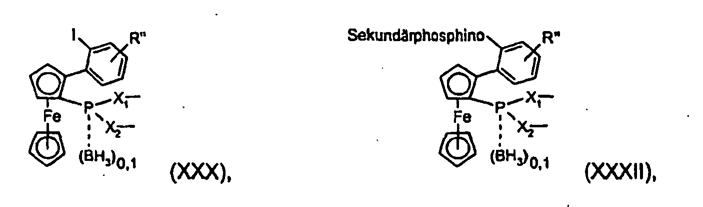 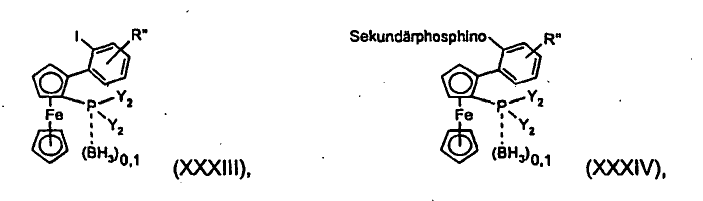 worin die Gruppe -P(X₁-)(X₂-)----(BH₃)_{0,1} die in Anspruch 1 angegebenen Bedeutungen hat, Y₂ Cl oder Br ist, und R" Wasserstoff oder einen Substituenten bedeutet.

19. Verfahren gemäss Anspruch 8 zur Herstellung von Verbindungen der Formel XXXV in Form von Racematen, Diastereomeren und Paaren von Diastereomeren, 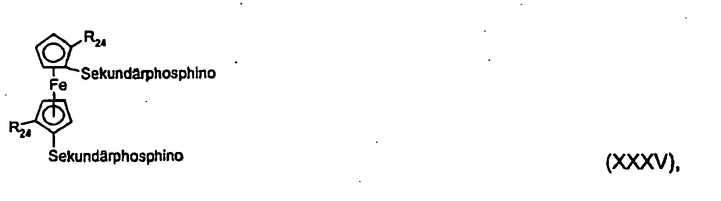 worin
R₂₄ ein Rest der Formel -CR₂₅R₂₆-Y₃ oder eine Gruppe R₂₈ ist,
R₂₅ Wasserstoff, C₁-C₆-Alkyl, C₃-C₈-Cycloalkyl, gegebenenfalls mit F, C₁-C₆-Alkyl oder C₁-C₆-Alkoxy substituiertes Phenyl oder Benzyl bedeutet,
R₂₆ C₁-C₆-Alkyl, C₃-C₈-Cycloalkyl, gegebenenfalls mit F, C₁-C₆-Alkyl oder C₁-C₆-Alkoxy substituiertes Phenyl oder Benzyl darstellt,
Y₃ C₁-C₄-Alkoxy, C₁-C₈-Acyloxy oder Sekundäramino darstellt, und
R₂₈ für C₁-C₆-Alkyl, C₃-C₈-Cycloalkyl, gegebenenfalls mit F, C₁-C₆-Alkyl oder C₁-C₆-Alkoxy substituiertes Phenyl oder Benzyl steht,
umfassend die Schritte
a) Umsetzung einer Verbindung der Formel XXXVI 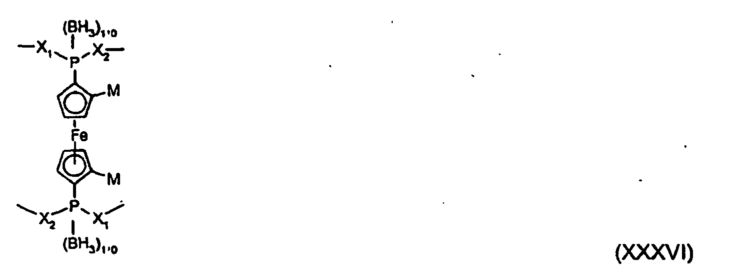 worin
die Gruppe -P(X₁-)(X₂-)----(BH₃)_{0,1} die in Anspruch 1 angegebenen Bedeutungen hat, mit einem Aldehyd, Keton oder Imin der Formel CR₂₅R₂₆=Y₄ umsetzt, worin Y₄ für =O oder =N(C₁-C₄Alkyl) steht, oder mit einem Halogenid R₂₈Y₆, worin Y₆ Cl, Br oder Iod bedeutet, zu Verbindungen der Formel XXXVII 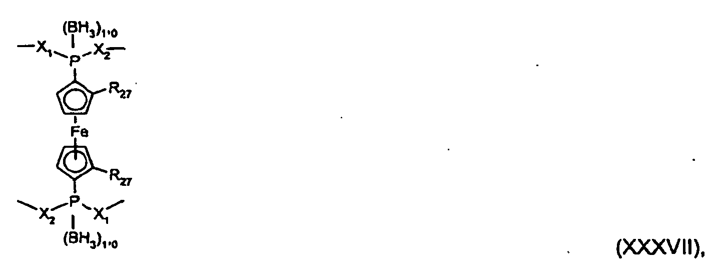 worin
R₂₇ die Gruppe -CR₂₅R₂₆-Y₅ oder R₂₈ bedeutet, worin R₂₅ und R₂₈ die zuvor angegebenen Bedeutungen haben, und Y₅ für -OH oder -NH(C₁-C₄Alkyl) stehen, die NH-Gruppe alkyliert, gegebenenfalls die OH-Gruppe alkyliert oder acyliert und gegebenenfalls die Acyloxygruppe durch Sekundäramino substituiert, und
b) zur Herstellung der Verbindungen der Formel XXXV
b1) aus einer Verbindung der Formel XXXVII, wenn vorhanden, die Borangruppe entfernt, dann die Reste (Hetero)Kohlenwasserstoff-X₁, (Hetero)Kohlenwasserstoff-X₂, oder X₁-(Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, oder
b2) die Reste (Hetero)Kohlenwasserstoff-X₁, (Hetero)Kohlenwasserstoff-X₂, oder X₁-Hetero)Kohlenwasserstoff-X₂ unter Bildung einer -PCl₂-Gruppe oder -PBr₂-Gruppe abspaltet, und danach mit einer metallorganischen Verbindung (Grignardreagenz) die Cl- beziehungsweise Br-Atome mit einem Kohlenwasserstoffrest zum Sekundärphosphin substituiert, und dann die Borangruppe entfernt.

20. Zwischenprodukte in Form von Racematen, Diastereomeren und Paaren von Diastereomeren der Formeln XXXVII und XXXVIII, 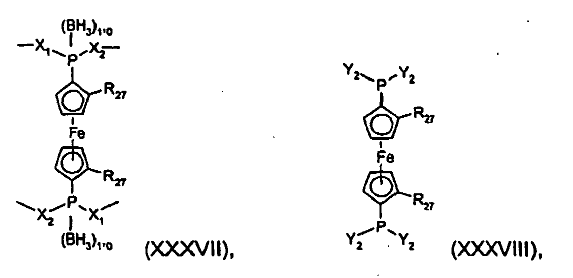 worin
R₂₇ die in Anspruch 19 und die Gruppe -P(X₁-)(X₂-)----(BH₃)_{0,1} die in Anspruch 1 angegebenen Bedeutungen haben, und Y₂ Cl oder Br ist.

## Claims

1. A process for preparing ferrocene, bisindenylferrocene or ruthenocene having a structural element of the formula I in the aromatic hydrocarbon ring, 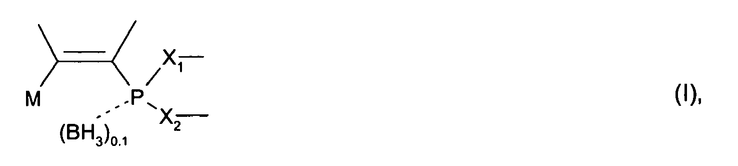 where
M is -Li, -MgX₃, (C₁-C₁₈-alkyl)₃Sn-, -ZnX₃ or -B(O-C₁-C₄-alkyl)₂,
X₁ and X₂ are each, independently of one another, O or N and C-bonded hydrocarbon or heterohydrocarbon radicals are bound to the free bonds of the O or N atoms,
the group -C=C- together with carbon atoms forms a hydrocarbon aromatic and
X₃ is Cl, Br or I,
**characterized in that** a ferrocene, bisindenylferrocene or ruthenocene having a structural element of the formula II in the aromatic ring, 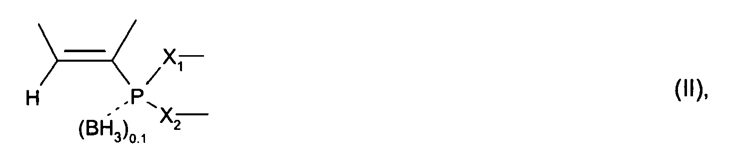
where X₁ and X₂ are as defined above and the group -C=C- together with carbon atoms forms a hydrocarbon aromatic,
is reacted with at least equivalent amounts of alkyllithium, a magnesium Grignard compound or an aliphatic Li sec-amide or X₃Mg sec-amide, and, to prepare compounds of the formula I in which M is -MgX₃, (C₁-C₁₈-alkyl)₃Sn-, -ZnX₃ or -B(O-C₁-C₄-alkyl)₂, a lithium compound of the formula Ia, 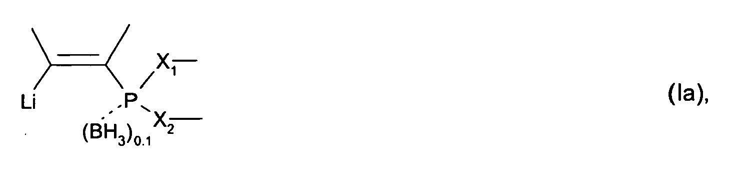
is reacted with at least equivalent amounts of Mg(X₃)₂, Zn(X₃)₂, (C₁-C₁₈-alkyl)₃SnX₃ or B(O-C₁-C₄-alkyl)₃.

2. Ferrocene, bisindenylferrocene or ruthenocene having a structural element of the formula I in the aromatic hydrocarbon ring, 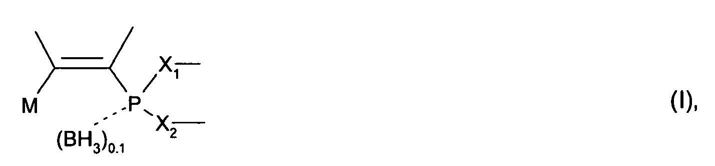 where
M, X₁ and X₂ are as defined in claim 1 and the group -C=C- together with carbon atoms forms a hydrocarbon aromatic.

3. Ferrocene, bisindenylferrocene and ruthenocene as claimed in claim 2, **characterized in that** they have a ferrocene skeleton and correspond to the formula Ib or Ic, 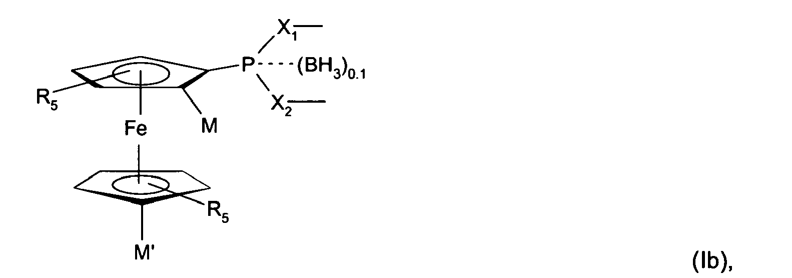 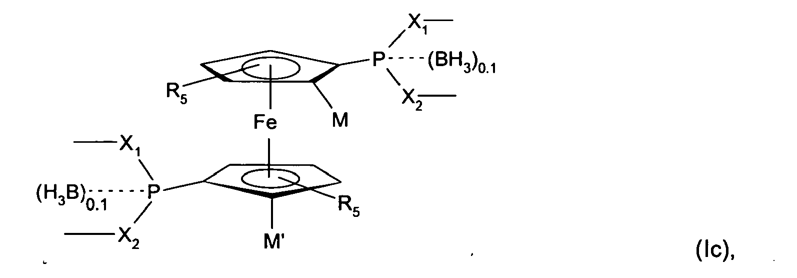 where
R₅ is C₁-C₄-alkyl and preferably a hydrogen atom,
M is -MgCl, -MgBr and preferably Li,
M' is H, -MgCl, -MgBr or Li and
X₁ and X₂ and also the radicals bound to free bonds of X₁ and X₂ have the meanings given in claim 1.

4. A process for preparing ferrocene, bisindenylferrocene or ruthenocene having a structural element of the formula III, 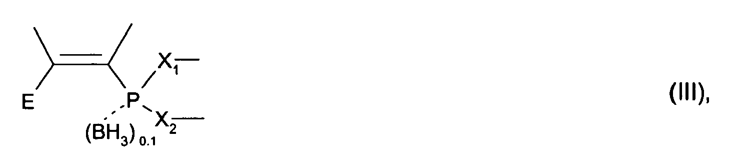 where
X₁ and X₂ and also the radicals bound to free bonds have the meanings given in claim 1 and
E is the radical of a reactive, electrophilic compound which is able to replace a metal bound to hydrocarbon aromatics or a bound metal group,
**characterized in that**
a ferrocene, bisindenylferrocene or ruthenocene having a structural element of the formula I, 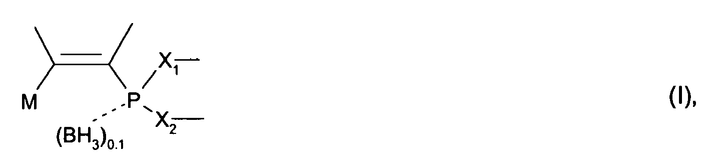 where
M, X₁ and X₂ and the radicals bound to free bonds have the meanings given in claim 1, is reacted with at least equivalent amounts of a reactive electrophilic compound.

5. A metallocene from the group consisting of ferrocene, bisindenylferrocene and ruthenocene having a structural element of the formula III in one or both cyclopentadienyl rings, 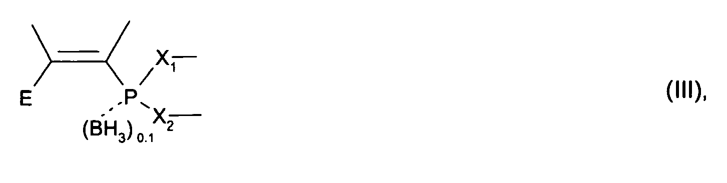 where
E, X₁ and X₂ and hydrocarbon radicals bound to the free bonds of the groups X₁ and X₂ have the meanings given in claims 1 and 4.

6. The metallocene as claimed in claim 5, **characterized in that** it corresponds to the formula IV, 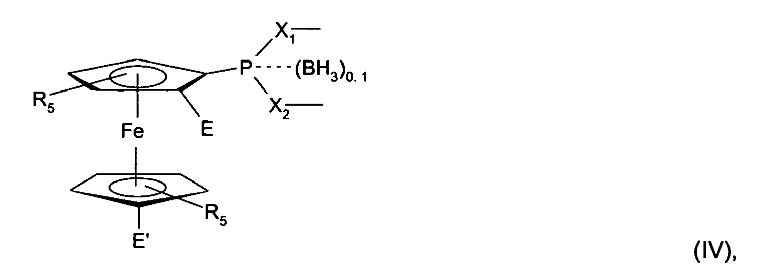 where
R₅ is C₁-C₄-alkyl and preferably a hydrogen atom, E' is H or independently has one of the meanings of E, and E, X₁ and X₂ and hydrocarbon radicals bound to the free bonds of the groups X₁ and X₂ have the meanings given in claim 5.

7. The metallocene as claimed in claim 5, **characterized in that** it corresponds to the formula IVa, 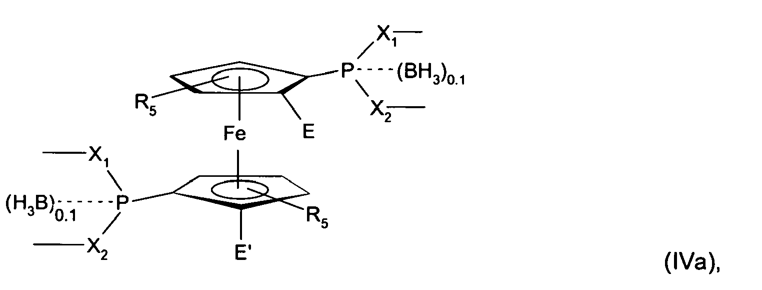 where
E' is H or independently has one of the meanings of E,
R₅ is C₁-C₄-alkyl and preferably a hydrogen atom and
E, X₁ and X₂ and hydrocarbon radicals bound to the free bonds of the groups X₁ and X₂ have the meanings given in claim 5.

8. A process for preparing ferrocene, bisindenylferrocene or ruthenocene diphosphines having structural elements of the formula VI in an aromatic hydrocarbon ring, 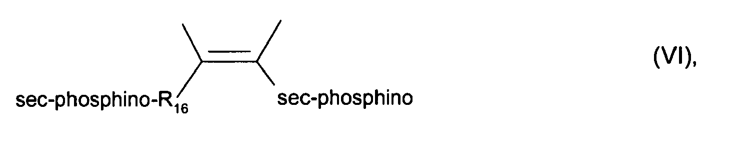 or having structural elements of the formula VIa in each cyclopentadienyl ring of a metallocene, 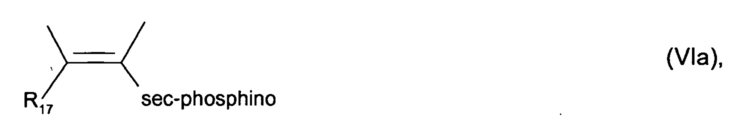 where
R₁₆ is a direct bond or a divalent bridging group, with the sec-phosphino in the bridging group being located in the 1, 2 or 3 position relative to the carbon atom of the aromatic ring, and
R₁₇ is a substituent which is bound via a carbon atom to the aromatic ring, which comprises the steps:
a) reaction of ferrocenes, bisindenylferrocenes or ruthenocenes having structural elements of the formula II 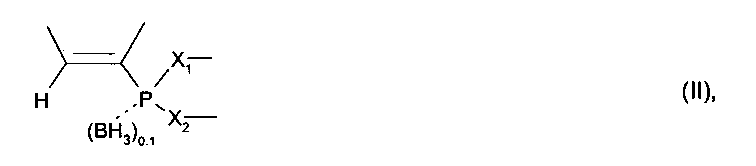 with metalation reagents to form a ferrocene, bisindenylferrocene or ruthenocene having structural elements of the formula I 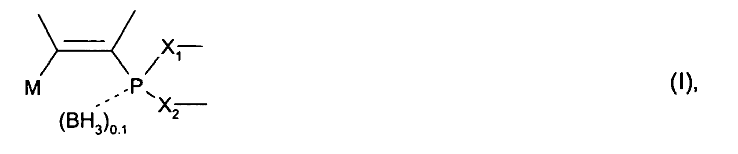 where M, X₁ and X₂ and hydrocarbon radicals bound to the free bonds of the groups X₁ and X₂ have the meanings given in claim 1,
b) reaction of ferrocenes, bisindenylferrocenes or ruthenocenes having structural elements of the formula I with an electrophilic and reactive compound, wherein
b1) the compound of the formula I is reacted with a sec-phosphine halide to introduce sec-phosphino,
b2) the compound of the formula I is reacted with an electrophilic reactive compound which has a reactive group which can be replaced by sec-phosphino in the 1, 2 or 3 position and the product is subsequently reacted with a metal sec-phosphide or a secondary phosphine to introduce the group -R₁₆-sec-phosphino,
b3) the compound of the formula I with an electrophilic organic compound which forms an α-carbon atom to introduce the group -R₁₇,
c) any borane group present is removed from the compounds obtained in steps b1), b2) or b3) and the radicals (hetero)hydrocarbon-X₁, (hetero)hydrocarbon-X₂ or X₁-(hetero)hydrocarbon-X₂ are subsequently split off to form a -PCl₂ group or -PBr₂ group and the Cl or Br atoms are then replaced by a hydrocarbon radical by means of an organometallic compound to form the sec-phosphino group, or
d) the radicals (hetero)hydrocarbon-X₁, (hetero)hydrocarbon-X₂ or X₁-(hetero)hydrocarbon-X₂ are split off to form a -PCl₂ group or -PBr₂ group and the Cl or Br atoms are then replaced by a hydrocarbon radical by means of an organometallic compound (Grignard reagent) to form the sec-phosphino group and the borane group is then removed.

9. The process as claimed in claim 8 for preparing 1-(α-substituted ortho-sec-phosphinobenzyl)-2-sec-phosphinoferrocenes of the formula VII in the form of their racemates, mixtures of diastereomers or essentially pure diastereomers, 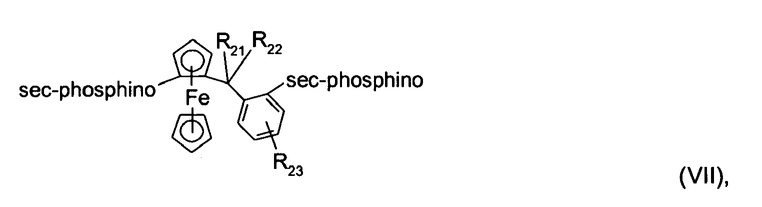 where
R₂₁ is hydrogen, C₁-C₆-alkyl, C₃-C₈-cycloalkyl, unsubstituted or F-, C₁-C₆-alkyl- or C₁-C₆-alkoxy-substituted phenyl or benzyl,
R₂₂ is C₁-C₄-alkoxy, C₁-C₈-acyloxy or sec-amino and
R₂₃ is hydrogen, C₁-C₄-alkyl or C₁-C₄-alkoxy,
which comprises the steps:
a) reaction of a compound of the formula VIII 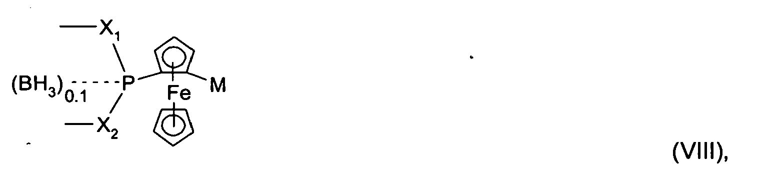 where
M and the group -P(X₁-)(X₂-)----(BH₃)_{0,1} are as defined in claim 1, with a compound of the formula IX 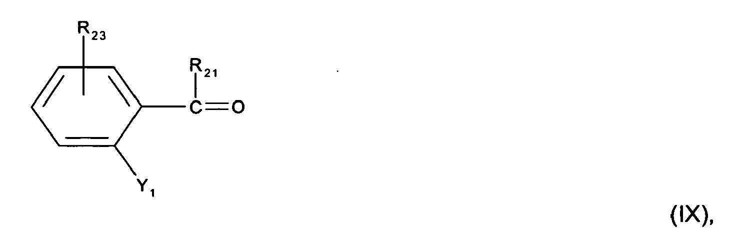
where Y₁ is Cl, Br or I and R₂₃ and R₂₁ are as defined above, to form a compound of the formula X, 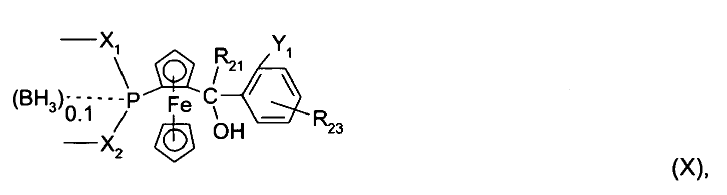
b) C₁-C₄-alkylation or C₁-C₈-acylation of the OH group in the compound of the formula X or replacement of the acyloxy group formed by sec-amino,
c) replacement of the halogen Y₁ in compounds of the formula X by sec-phosphino and subsequent conversion of the group -P(X₁-)(X₂-)----(BH₃)_{0,1} into a sec-phosphino group, or conversion of the group -P(X₁-)(X₂-)----(BH₃)_{0,1} firstly into a sec-phosphino group and subsequent replacement of the halogen Y₁ in compounds of the formula X by sec-phosphino,
d) preparation of the diphosphine of the formula VII, by
d1) removing any borane group present from a compound of the formula X, then splitting off the radicals (hetero)hydrocarbon-X₁, (hetero)hydrocarbon-X₂ or X₁-(hetero)hydrocarbon-X₂ to form a -PCl₂ group or -PBr₂ group and then replacing the Cl or Br atoms by a hydrocarbon radical by means of an organometallic compound (Grignard reagent) to form the sec-phosphino group, or
2) splitting off the radicals (hetero)hydrocarbon-X₁, (hetero)hydrocarbon-X₂ or X₁-(hetero)hydrocarbon-X₂ to form a -PCl₂ group or -PBr₂ group and then replacing the Cl or Br atoms by a hydrocarbon radical by means of an organometallic compound (Grignard reagent) to form the sec-phosphino group and then removing the borane group.

10. A compound of the formula XI in the form of a racemate, diastereomer or pair of diastereomers, 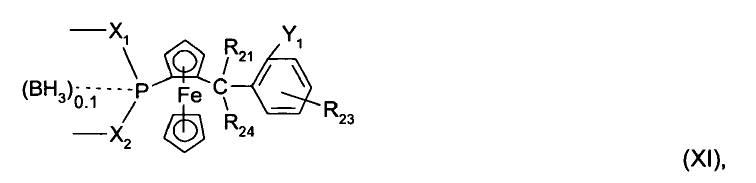 where
the group -P(X₁-)(X₂-)----(BH₃)_{0.1}, R₂₁, R₂₃ and Y₁ are as defined in claims 1 and 9, or (X₁-) and (X₂-) in the group -P(X₁-)(X₂-)----(BH₃)_{0.1} are Cl or Br, and R₂₄ is -OH, C₁-C₄-alkoxy, C₁-C₈-acyloxy or sec-amino.

11. The process as claimed in claim 8 for preparing compounds of the formula XII in the form of racemates, diastereomers and pairs of diastereomers, 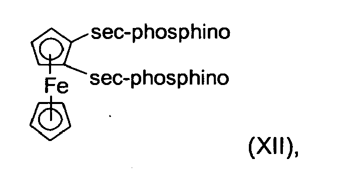 which comprises the steps
a) reaction of a compound of the formula XIV 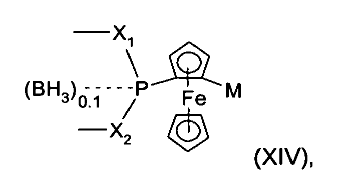 where
M and the group -P(X₁-)(X₂-)----(BH₃)_{0.1} are as defined in claims 1 and 10, with a sec-phosphine halide (chloride or bromide) to produce compounds of the formula XVI, 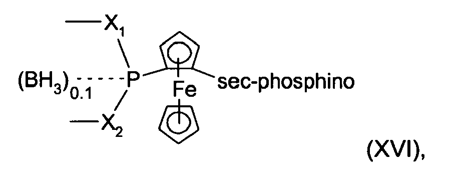
b) preparation of diphosphines of the formulae XII and XIII by
b1) removing any borane group present from a compound of the formula XVI or XVII, then splitting off the radicals (hetero)hydrocarbon-X₁, (hetero)hydrocarbon-X₂ or X₁-(hetero)-hydrocarbon-X₂ to form a -PCl₂ group or -PBr₂ group and then replacing the Cl or Br atoms by a hydrocarbon radical by means of an organometallic compound (Grignard reagent) to form the sec-phosphino group, or
b2) splitting off the radicals (hetero)hydrocarbon-X₁, (hetero)hydrocarbon-X₂ or X₁-(hetero)hydrocarbon-X₂ to form a -PCl₂ group or -PBr₂ group and then replacing the Cl or Br atoms by a hydrocarbon radical by means of an organometallic compound (Grignard reagent) to form the sec-phosphino group and then removing the borane group.

12. A compound of the formula XVI or XVIII in the form of a racemate, diastereomer or pair of diastereomers, 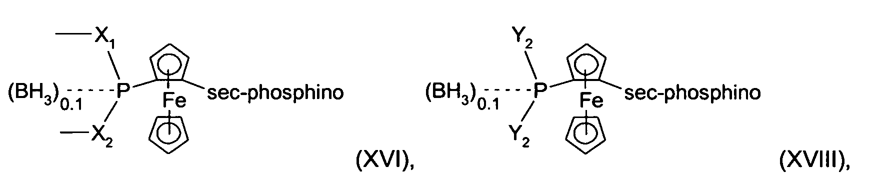 where the group -P(X₁-)(X₂-)----(BH₃)_{0.1} is as defined in claim 1 and Y₂ is Cl or Br.

13. The process as claimed in claim 8 for preparing compounds of the formula XIX in the form of racemates, diastereomers and pairs of diastereomers, 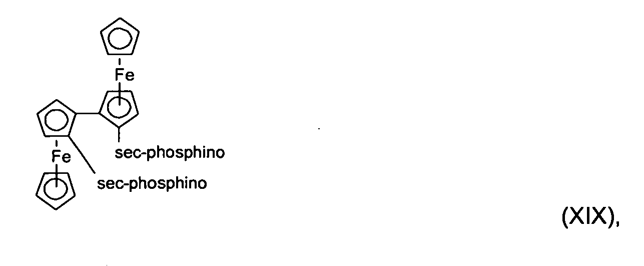 which comprises the steps
a) reaction of a compound of the formula XX with a compound of the formula XXI, 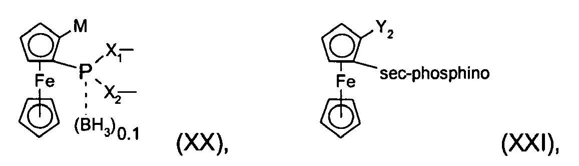 where
M is -Sn(C₁-C₄-alkyl)₃ or -ZnX₃, the group -P(X₁-)(X₂-)----(BH₃)_{0.1} is as defined in claim 1 and Y₂ is I or Br, in the presence of a Pd catalyst to form a compound of the formula XXII 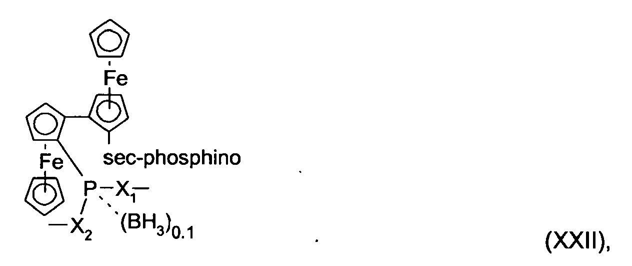
b) preparation of diphosphines of the formula XIX by
b1) removing any borane group present from a compound of the formula XXII, then splitting off the radicals (hetero)hydrocarbon-X₁, (hetero)hydrocarbon-X₂ or X₁-(hetero)hydrocarbon-X₂ to form a -PCl₂ group or -PBr₂ group and then replacing the Cl or Br atoms by a hydrocarbon radical by means of an organometallic compound (Grignard reagent) to form the sec-phosphino group, or
b2) splitting off the radicals (hetero)hydrocarbon-X₁, (hetero)hydrocarbon-X₂ or X₁-(hetero)hydrocarbon-X₂ to form a -PCl₂ group or -PBr₂ group and then replacing the Cl or Br atoms by a hydrocarbon radical by means of an organometallic compound (Grignard reagent) to form the sec-phosphino group and then removing the borane group.

14. A compound of the formula XXII or XXIII in the form of a racemate, diastereomer or pair of diastereomers, 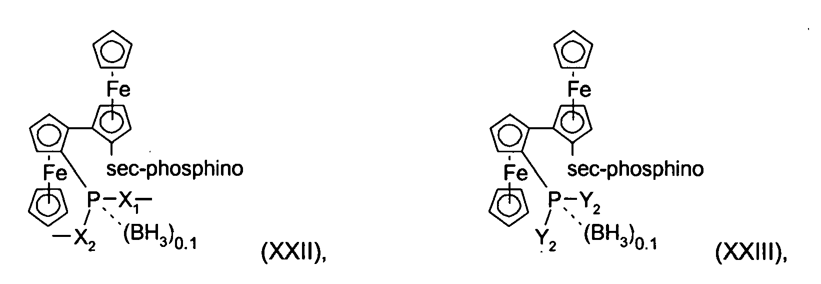 where the group -P(X₁-)(X₂-)----(BH₃)_{0.1} is as defined in claim 1 and Y₂ is Cl or Br.

15. The process as claimed in claim 9 for preparing compounds of the formula XXIV in the form of racemates, diastereomers and pairs of diastereomers, 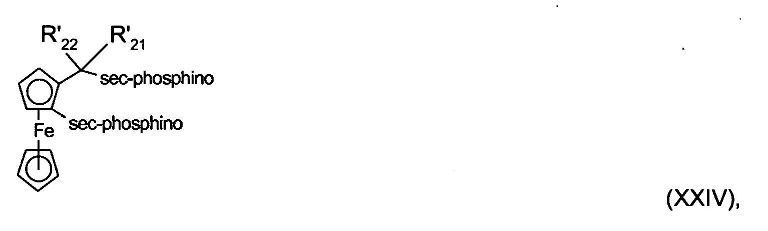 where
R'₂₁ is hydrogen or C₁-C₆-alkyl,
R'₂₂ is C₁-C₆-alkyl, C₃-C₈-cycloalkyl, unsubstituted or F-, C₁-C₆-alkyl- or C₁-C₆-alkoxy-substituted phenyl or benzyl,
which comprises the steps
a) reaction of a compound of the formula XX, 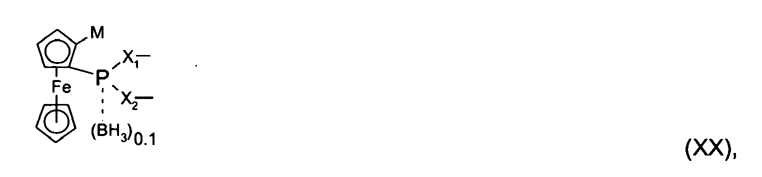 with an aldehyde or ketone of the formula R'₂₁R'₂₂C(O) to form a compound of the formula XXV, 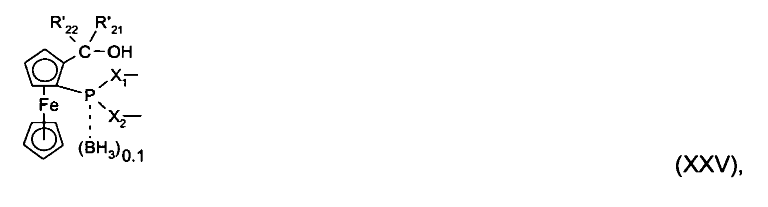
b) preparation of compounds of the formula XXVI, 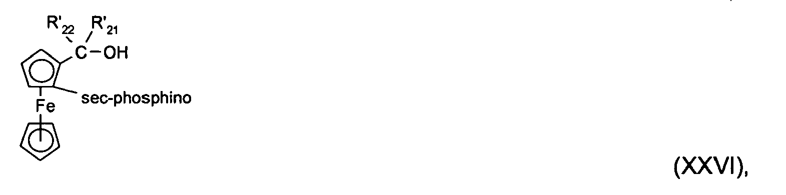 by
b1) removing any borane group present from a compound of the formula XXV, then splitting off the radicals (hetero)hydrocarbon-X₁, (hetero)hydrocarbon-X₂ or X₁-(hetero)hydrocarbon-X₂ to form a -PCl₂ group or -PBr₂ group and then replacing the Cl or Br atoms by a hydrocarbon radical by means of an organometallic compound (Grignard reagent) to form the sec-phosphino group, or
b2) splitting off the radicals (hetero)hydrocarbon-X₁, (hetero)hydrocarbon-X₂ or X₁-(hetero)hydrocarbon-X₂ to form a -PCl₂ group or -PBr₂ group and then replacing the Cl or Br atoms by a hydrocarbon radical by means of an organometallic compound (Grignard reagent) to form the sec-phosphino group and then removing the borane group,
c) acylating the compound of the formula XXVI, for example by means of a carboxylic anhydride, and
d) replacing the C₁-C₈-acyloxy group formed by means of a secondary phosphine to give compounds of the formula XXIV.

16. A compound of the formula XXVII or XXVIII in the form of a racemate, diastereomer or pair of diastereomers, 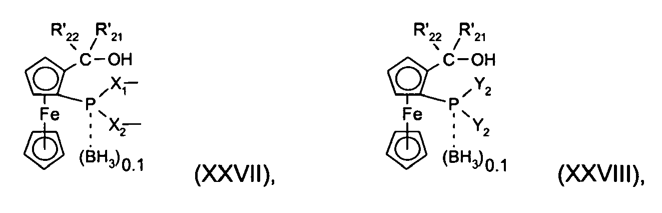 where R₂₁ and R₂₂ are as defined in claim 15, Y₂ is Cl or Br and the group -P(X₁-)(X₂-)-(BH₃)_{0.1} is as defined in claim 1.

17. The process as claimed in claim 8 for preparing compounds of the formula XXIX in the form of racemates, diastereomers and pairs of diastereomers, 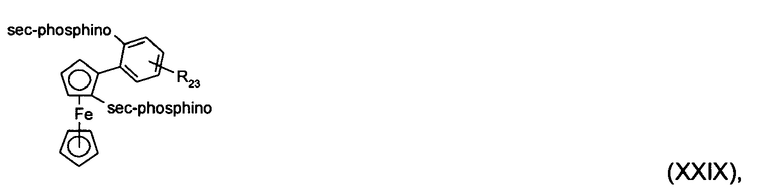 which comprises the steps
a) reaction of a compound of the formula XX 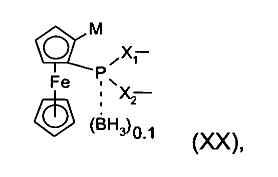 where M is -Sn(C₁-C₄-alkyl)₃ or -ZnX₃, the group -P(X₁-)(X₂-)----(BH₃)_{0.1} is as defined in claim 1, with 1-bromo-2-iodobenzene or 1,2-diiodobenzene in the presence of a Pd catalyst to form a compound of the formula XXX, 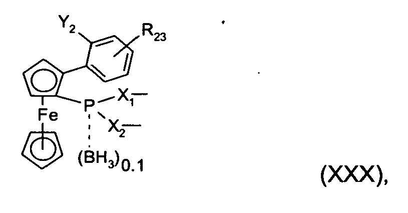 where Y₂ is bromine or iodine,
b) to prepare monophosphines of the formula XXXI 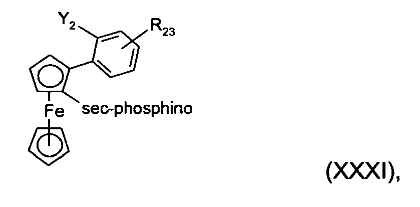
b1) removing any borane group present from a compound of the formula XXX, then splitting off the radicals (hetero)hydrocarbon-X₁, (hetero)hydrocarbon-X₂ or X₁-(hetero)hydrocarbon-X₂ to form a -PCl₂ group or -PBr₂ group and then replacing the Cl or Br atoms by a hydrocarbon radical by means of an organometallic compound (Grignard reagent) to form the sec-phosphino group, or
b2) splitting off the radicals (hetero)hydrocarbon-X₁, (hetero)hydrocarbon-X₂ or X₁-(hetero)hydrocarbon-X₂ to form a -PCl₂ group or -PBr₂ group and then replacing the Cl or Br atoms by a hydrocarbon radical by means of an organometallic compound (Grignard reagent) to form the sec-phosphino group and then removing the borane group, and
c) then replacing the bromine or iodine atom by a sec-phosphino group by metalation by means of a lithium alkyl (butyllithium) and subsequent reaction with a sec-phosphine halide, or
d) to prepare compounds of the formula XXXII 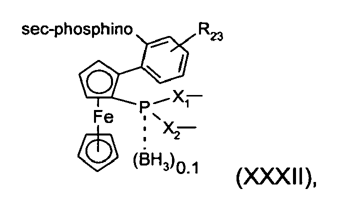 reacting a compound of the formula XX with ortho-sec-phosphinophenyl iodide in the presence of metal halides such as ZnBr₂ and Pd catalysts, and
d1) removing any borane group present from a compound of the formula XXXII, then splitting off the radicals (hetero)hydrocarbon-X₁, (hetero)hydrocarbon-X₂ or X₁-(hetero)hydrocarbon-X₂ to form a -PCl₂ group or -PBr₂ group and then replacing the Cl or Br atoms by a hydrocarbon radical by means of an organometallic compound (Grignard reagent) to form the sec-phosphino group, or
d2) splitting off the radicals (hetero)hydrocarbon-X₁, (hetero)hydrocarbon-X₂ or X₁-(hetero)hydrocarbon-X₂ to form a -PCl₂ group or -PBr₂ group and then replacing the Cl or Br atoms by a hydrocarbon radical by means of an organometallic compound (Grignard reagent) to form the sec-phosphino group and then removing the borane group.

18. A compound of the formula XXX, XXXII, XXXIII or XXXIV in the form of a racemate, diastereomer or pair of diastereomers, 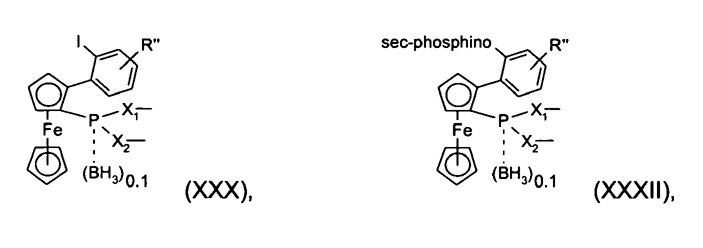 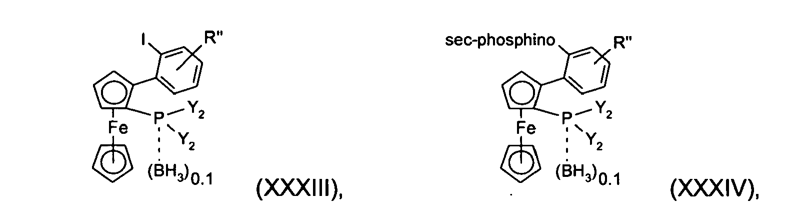 where the group -P(X₁-)(X₂-)----(BH₃)_{0.1} is as defined in claim 1, Y₂ is Cl or Br and R" is hydrogen or a substituent.

19. The process as claimed in claim 8 for preparing compounds of the formula XXXV in the form of racemates, diastereomers and pairs of diastereomers, 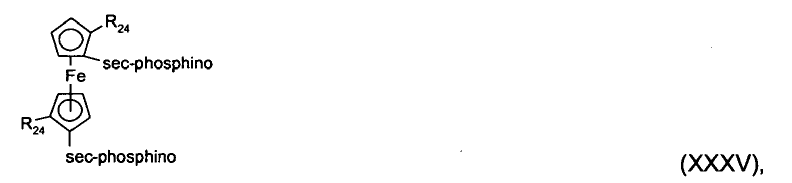 where
R₂₄ is a radical of the formula -CR₂₅R₂₆-Y₃ or a group R₂₈,
R₂₅ is hydrogen, C₁-C₆-alkyl, C₃-C₈-cycloalkyl, unsubstituted or F-, C₁-C₆-alkyl- or C₁-C₆-alkoxy-substituted phenyl or benzyl,
R₂₆ is C₁-C₆-alkyl, C₃-C₈-cycloalkyl, unsubstituted or F-, C₁-C₆-alkyl- or C₁-C₆-alkoxy-substituted phenyl or benzyl,
Y₃ is C₁-C₄-alkoxy, C₁-C₈-acyloxy or sec-amino and
R₂₈ is C₁-C₆-alkyl, C₃-C₈-cycloalkyl, unsubstituted or F-, C₁-C₆-alkyl- or C₁-C₆-alkoxy-substituted phenyl or benzyl,
which comprises the steps
a) reaction of a compound of the formula XXXVI 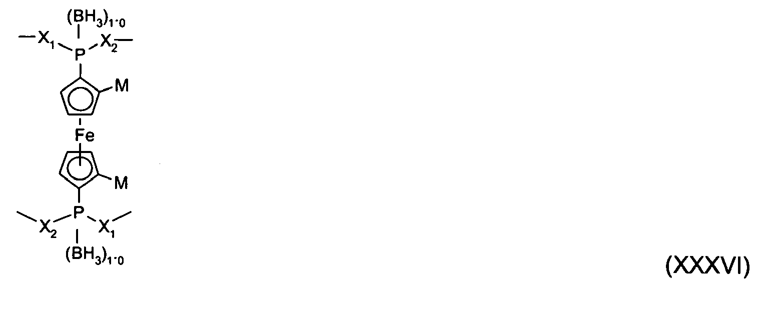 where
the group -P(X₁-)(X₂-)----(BH₃)_{0.1} is as defined in claim 1, with an aldehyde or ketone or imine of the formula CR₂₅R₂₆=Y₄, where Y₄ is =O or =N(C₁-C₄-alkyl), or with a halide R₂₈Y₆, where Y₆ is Cl, Br or iodine, to form compounds of the formula XXXVII 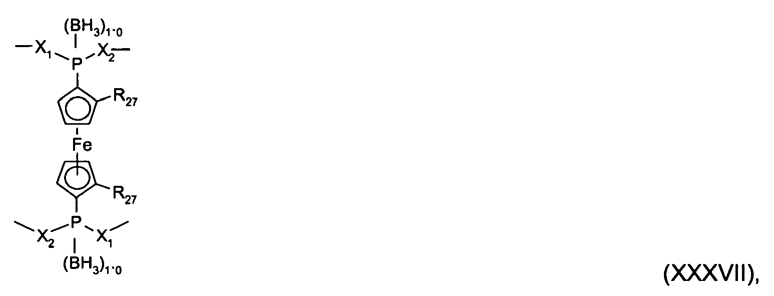
where
R₂₇ is the group -CR₂₅R₂₆-Y₅ or R₂₈, where R₂₅ and R₂₆ are as defined above and Y₅ is -OH or -NH(C₁-C₄-alkyl), alkylating the NH group, if appropriate alkylating or acylating the OH group and, if appropriate, replacing the acyloxy group by sec-amino and
b) to prepare compounds of the formula XXXV
b1) removing any borane group present from a compound of the formula XXXVII, then splitting off the radicals (hetero)hydrocarbon-X₁, (hetero)hydrocarbon-X₂ or X₁-(hetero)-hydrocarbon-X₂ to form a -PCl₂ group or -PBr₂ group and then replacing the Cl or Br atoms by a hydrocarbon radical by means of an organometallic compound (Grignard reagent) to form the sec-phosphino group, or
b2) splitting off the radicals (hetero)hydrocarbon-X₁, (hetero)hydrocarbon-X₂ or X₁-(hetero)hydrocarbon-X₂ to form a -PCl₂ group or -PBr₂ group and then replacing the Cl or Br atoms by a hydrocarbon radical by means of an organometallic compound (Grignard reagent) to form the sec-phosphino group and then removing the borane group.

20. An intermediate in the form of a racemate, diastereomer or pair of diastereomers of the formula XXXVII or XXXVIII, 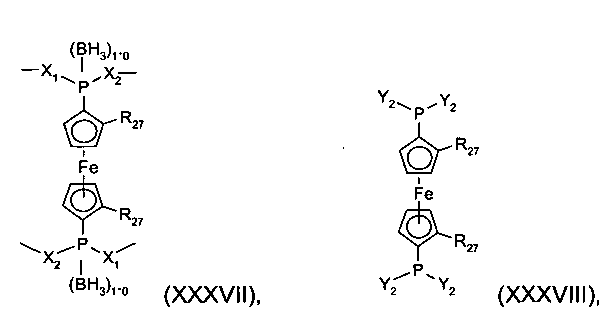 where
R₂₇ is as defined in claim 19 and the group -P(X₁-)(X₂-)---(BH₃)_{0.1} is as defined in claim 1, and Y₂ is Cl or Br.

## Revendications

1. Procédé de préparation de ferrocène, de bis-indénylferrocène et de ruthénocène présentant un élément de structure de formule I dans le cycle hydrocarboné aromatique, 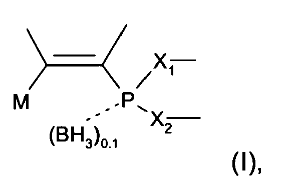 où
M représente -Li, -MgX₃, (C₁-C₁₈-alkyl)₃Sn-, -ZnX₃ ou -B(O-C₁-C₄-alkyle)₂,
X₁ et X₂ signifient, indépendamment l'un de l'autre, O ou N et des radicaux hydrocarbonés ou hétérohydrocarbonés sont liés par C aux liaisons libres des atomes d'O et de N,
le groupe -C=C- représente, ensemble avec des atomes de carbone, un aromatique hydrocarboné, et
X₃ représente Cl, Br ou I,
**caractérisé en ce qu'**on transforme un ferrocène, un bis-indénylferrocène et un ruthénocène avec un élément de structure de formule II dans le cycle aromatique, 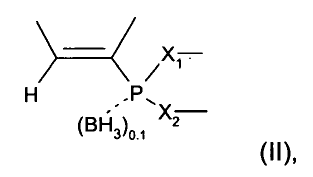 où
X₁ et X₂ présentent les significations indiquées ci-dessus et le groupe -C=C-représente, ensemble avec des atomes de carbone, un aromatique hydrocarboné, avec des quantités au moins équivalentes de lithium-alkyle, un composé de magnésium de Grignard, ou un Li-amide secondaire ou un X₃Mg-amide secondaire aliphatique et, pour la préparation de composés de formule I, où M représente -MgX₃, (C₁-C₁₈-alkyl)₃Sn-, -ZnX₃ ou -B(O-C₁-C₄-alkyle)₂, on transforme un composé du lithium de formule la, 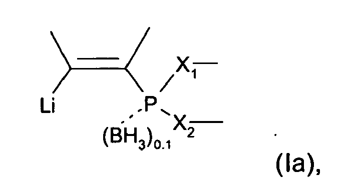 avec des quantités au moins équivalentes de Mg(X₃)₂, Zn(X₃)₂, (C₁-C₁₈-alkyl)₃SnX₃ ou B(O-C₁-C₄-alkyle)₃.

2. Ferrocène, bis-indénylferrocène et ruthénocène présentant un élément de structure de formule I dans le cycle hydrocarboné aromatique, 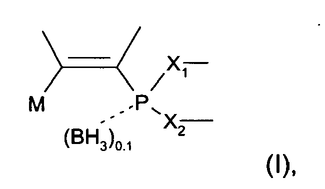 où
M, X₁ et X₂ présentent les significations indiquées dans la revendication 1 et le groupe -C=C- représente, ensemble avec des atomes de carbone, un aromatique hydrocarboné.

3. Ferrocène, bis-indénylferrocène et ruthénocène selon la revendication 2, **caractérisé en ce qu'**il s'agit de composés avec une structure de ferrocène qui correspondent aux formules Ib ou Ic, 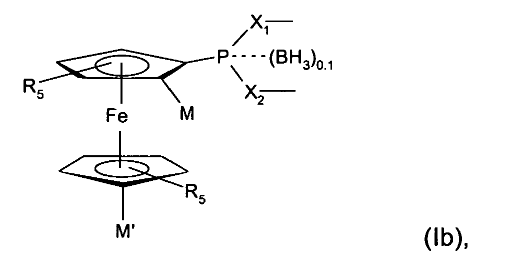 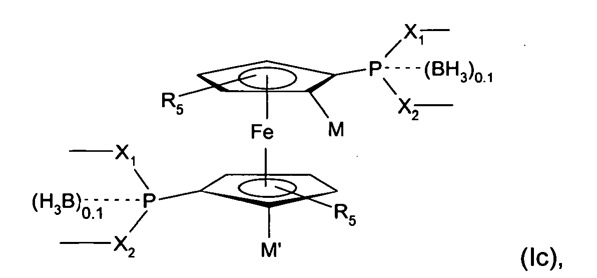 où
R₅ signifie C₁-C₄-alkyle et de préférence un atome d'hydrogène,
M représente -MgCl, -MgBr et de préférence Li,
M' représente H, -MgCl, -MgBr ou Li, et
X₁ et X₂ ainsi que les radicaux liés aux liaisons libres de X₁ et X₂ présentent les significations indiquées dans la revendication 1.

4. Procédé de préparation de ferrocène, de bis-indénylferrocène et de ruthénocène présentant un élément de structure de formule III, 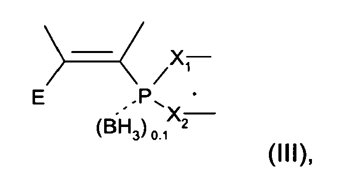 où
X₁ et X₂ ainsi que les radicaux liés aux liaisons libres présentent les significations indiquées dans la revendication 1, et
E représente le radical d'un composé électrophile réactif, qui peut substituer un métal lié à l'aromatique hydrocarboné ou un groupe métallique lié, qui est **caractérisé en ce qu'**on transforme
un ferrocène, un bis-indénylferrocène et un ruthénocène avec un élément de structure de formule I, 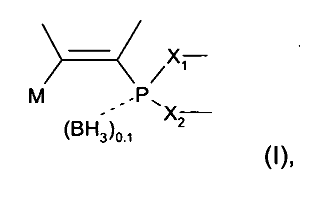 où
M, X₁ et X₂ ainsi que les radicaux liés aux liaisons libres présentent les significations indiquées dans la revendication 1
avec des quantités au moins équivalentes d'un composé électrophile réactif.

5. Métallocènes du groupe formé par ferrocène, bis-indénylferrocène et ruthénocène avec un élément de structure de formule III dans un ou les deux cycles cyclopentadiényle, 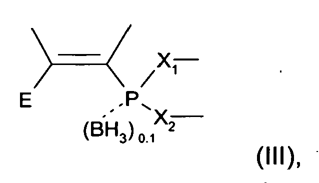 où
E, X₁ et X₂ ainsi que les radicaux hydrocarbonés liés aux liaisons libres de X₁ et X₂ présentent les significations indiquées dans la revendication 1 et 4.

6. Métallocènes selon la revendication 5, **caractérisés en ce qu'**ils correspondent à la formule IV, 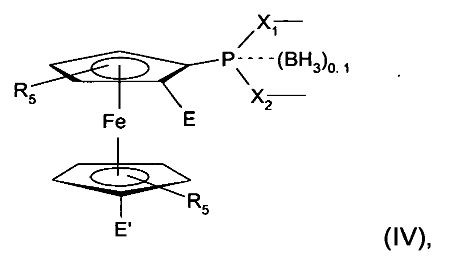 où
R₅ signifie C₁-C₄-alkyle et de préférence un atome d'hydrogène,
E' représente H ou présente, indépendamment, la signification de E, et
E, X₁ et X₂ et les radicaux hydrocarbonés liés aux liaisons libres de X₁ et X₂ présentent les significations indiquées dans la revendication 5.

7. Métallocènes selon la revendication 5, **caractérisés en ce qu'**ils correspondent à la formule IVa, 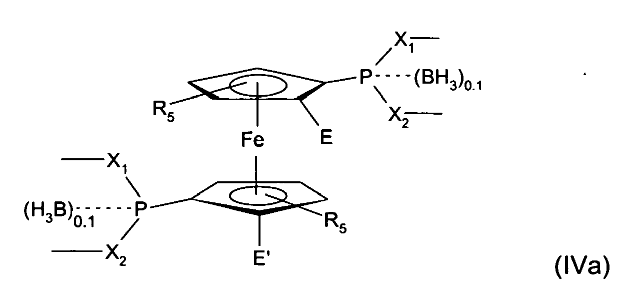 où
E' représente H ou présente, indépendamment, la signification de E,
R₅ signifie C₁-C₄-alkyle et de préférence un atome d'hydrogène, et
E, X₁ et X₂ et les radicaux hydrocarbonés liés aux liaisons libres de X₁ et X₂ présentent les significations indiquées dans la revendication 5.

8. Procédé de préparation de diphosphines de ferrocène, de bis-indénylferrocène et de ruthénocène présentant des éléments de structure de formule VI dans un cycle hydrocarboné aromatique, 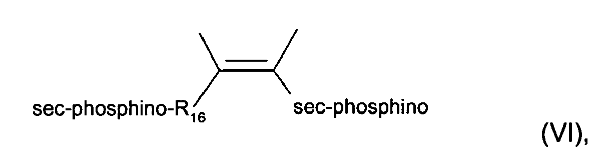 ou des éléments de structure de formule VIa dans à chaque fois un cycle cyclopentadiényle d'un métallocène, 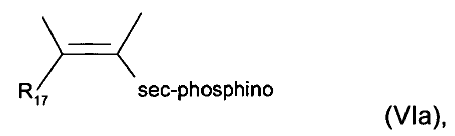 où
R₁₆ représente une liaison directe ou un groupe formant un pont divalent, où le groupe sec-phosphino dans le groupe formant un pont est lié en 1 ère, 2ème ou 3ème position par rapport à l'atome de carbone du cycle aromatique, et
R₁₇ signifie un substituant qui est lié via un atome de carbone au cycle aromatique, comprenant les étapes :
a) transformation d'un ferrocène, d'un bis-indénylferrocène et d'un ruthénocène avec des éléments de structure de formule II, 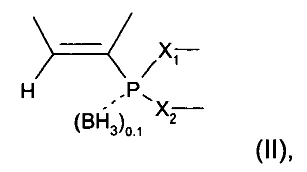 avec des réactifs de métallisation en ferrocène, bis-indénylferrocène et ruthénocène avec des éléments de structure de formule I 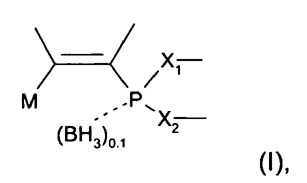 où
M, X₁ et X₂ etet les radicaux hydrocarbonés liés aux liaisons libres de X₁ et X₂ présentent les significations indiquées dans la revendication 1,
b) transformation d'un ferrocène, d'un bis-indénylferrocène et d'un ruthénocène avec des éléments de structure de formule I avec un composé électrophile et réactif, la transformation étant réalisée
b1) avec un halogénure de sec-phosphine pour l'introduction d'un groupe sec-phosphino,
b2) avec un composé électrophile réactif qui contient en 1 ère, 2ème ou 3ème position un groupe réactif pouvant être substitué par une sec-phosphine, et transformation consécutive avec un sec-phosphure de métal ou une sec-phosphine pour l'introduction du groupe -R₁₆-sec-phosphine,
b3) avec un composé organique électrophile formant un atome de carbone α pour l'introduction du groupe -R₁₇,
c) élimination, le cas échéant, des composés obtenus selon les étapes b1), b2) ou b3), du groupe borane, puis dissociation des radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis substitution avec un composé métallo-organique des atomes de Cl ou de Br par un radical hydrocarboné avec formation d'une sec-phosphine, ou
d) dissociation des radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis substitution avec un composé métallo-organique (réactif de Grignard) des atomes de Cl ou de Br par un radical hydrocarboné avec formation d'une sec-phosphine, puis élimination du groupe borane.

9. Procédé selon la revendication 8 pour la préparation de 1-(ortho-sec-phosphinobenzyle substitué en α)-2-sec-phosphinoferrocènes de formule VII sous forme de leurs racémates, mélanges de diastéréo-isomères ou sous forme de diastéréo-isomères essentiellement purs, 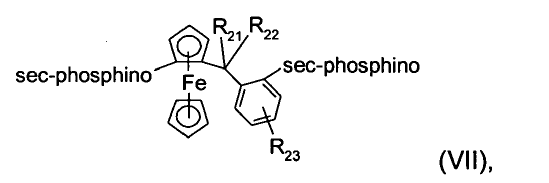 où
R₂₁ signifie hydrogène, C₁-C₆-alkyle, C₃-C₈-cycloalkyle, phényle ou benzyle le cas échéant substitué par F, C₁-C₆-alkyle ou C₁-C₆-alcoxy,
R₂₂ représente C₁-C₄-alcoxy, C₁-C₈-acyloxy ou sec-amino, et
R₂₃ signifie hydrogène, C₁-C₄-alkyle ou C₁-C₄-alcoxy,
comprenant les étapes :
a) transformation d'un composé de formule VIII 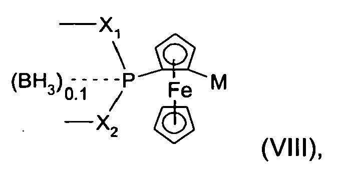 où
M et le groupe -P(X₁-)(X₂-)----(BH₃)_{0,1} présentent les significations indiquées dans la revendication 1, avec un composé de formule IX 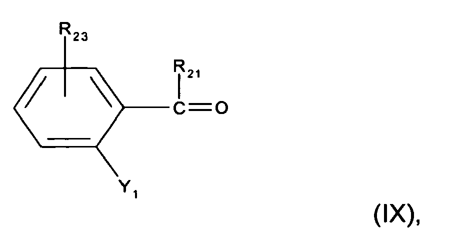
où Y₁ signifie CI, Br ou I et R₂₃ et R₂₁ ont la signification susmentionnée, en un composé de formule X, 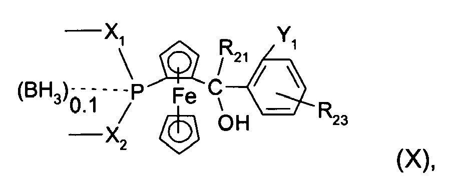
b) C₁-C₄-alkylation ou C₁-C₈-acylation du groupe OH dans le composé de formule X, ou substitution du groupe acyloxy formé par un groupe sec-amino,
c) substitution de l'halogène Y₁ dans les composés de formule X par un groupe sec-phosphino et transformation consécutive du groupe -P(X₁-)(X₂-)----(BH₃)_{0,1} en un groupe sec-phosphino, ou d'abord transformation du groupe -P(X₁-)(X₂-)----(BH₃)_{0,1} en un groupe sec-phosphino et substitution consécutive de l'halogène Y₁ dans les composés de formule X par un groupe sec-phosphino,
d) préparation de la diphosphine de formule VII, en ce qu'on
d1) élimine d'un composé de formule X, le cas échéant, le groupe borane, puis on dissocie les radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis on substitue avec un composé métallo-organique (réactif de Grignard) les atomes de Cl ou de Br par un radical hydrocarboné avec formation d'une phosphine secondaire, ou d2) dissocie les radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis on substitue avec un composé métallo-organique (réactif de Grignard) les atomes de CI ou de Br par un radical hydrocarboné avec formation d'une sec-phosphine, puis on élimine le groupe borane.

10. Composés de formule XI sous forme de racémates, de diastéréo-isomères et de paires de diastéréo-isomères, 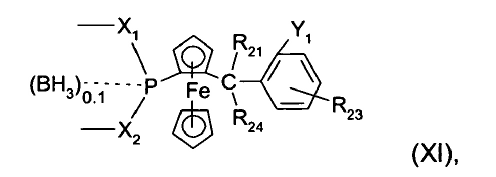 où
le groupe -P(X₁-)(X₂-)----(BH₃)_{0,1}, R₂₁, R₂₃ et Y₁ ont les significations indiquées dans les revendications 1 et 9, ou (X₁-) et (X₂-) dans le groupe -P(X₁-)(X₂-)----(BH₃)_{0,1} signifient Cl ou Br, et R₂₄ représente -OH, C₁-C₄-alcoxy, C₁-C₈-acyloxy ou sec-amino.

11. Procédé selon la revendication 8 pour la préparation de composés des formules XII sous forme de racémates, de diastéréo-isomères et de paires de diastéréo-isomères, 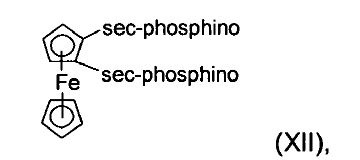 comprenant les étapes :
a) transformation d'un composé de formule XIV 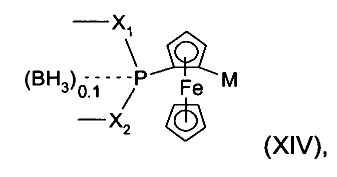 où
M et le groupe -P(X₁-)(X₂-)----(BH₃)_{0,1} présentent les significations indiquées dans les revendications 1 et 10, avec un halogénure de sec-phosphine (chlorure ou bromure) pour la préparation de composés des formules XVI 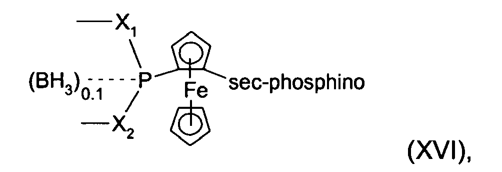
b) préparation des diphosphines des formules XII et XIII, en ce qu'on
b1) élimine d'un composé de formule XVI ou XVII, le cas échéant, le groupe borane, puis on dissocie les radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis on substitue avec un composé métallo-organique (réactif de Grignard) les atomes de CI ou de Br par un radical hydrocarboné avec formation d'une phosphine secondaire, ou b2) dissocie les radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis on substitue avec un composé métallo-organique (réactif de Grignard) les atomes de CI ou de Br par un radical hydrocarboné avec formation d'une sec-phosphine, puis on élimine le groupe borane.

12. Composés des formules XVI et XVIII sous forme de racémates, de diastéréo-isomères et de paires de diastéréo-isomères, 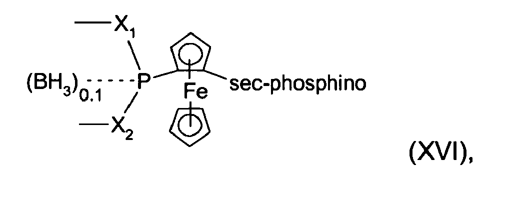 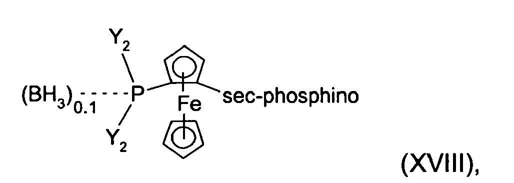 où le groupe -P(X₁-)(X₂-)----(BH₃)_{0,1} présente la signification indiquée dans la revendication 1 et Y₂ représente Cl ou Br.

13. Procédé selon la revendication 8 pour la préparation de composés des formules XIX sous forme de racémates, de diastéréo-isomères et de paires de diastéréo-isomères, 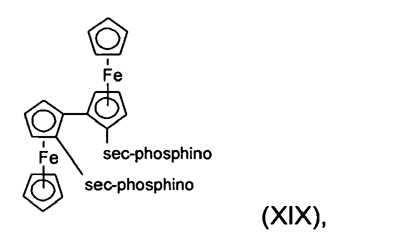 comprenant les étapes :
a) transformation d'un composé de formule XX avec un composé de formule XXI, 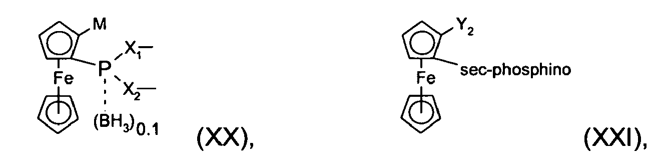 où
M représente -Sn(C₁-C₄-alkyle)₃ ou -ZnX₃, le groupe -P(X₁-)(X₂-)----(BH₃)_{0,1} présente la signification indiquée dans la revendication 1 et Y₂ représente I ou Br, en présence d'un catalyseur de Pd, en un composé de formule XXII, 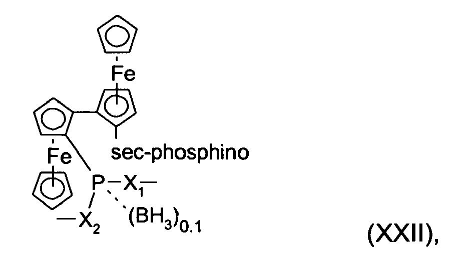
b) préparation des diphosphines de formule XIX, en ce qu'on
b1) élimine d'un composé de formule XXII, le cas échéant, le groupe borane, puis on dissocie les radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis on substitue avec un composé métallo-organique (réactif de Grignard) les atomes de CI ou de Br par un radical hydrocarboné avec formation d'une phosphine secondaire, ou b2) dissocie les radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis on substitue avec un composé métallo-organique (réactif de Grignard) les atomes de CI ou de Br par un radical hydrocarboné avec formation d'une sec-phosphine, puis on élimine le groupe borane.

14. Composés des formules XXII et XXIII sous forme de racémates, de diastéréo-isomères et de paires de diastéréo-isomères, 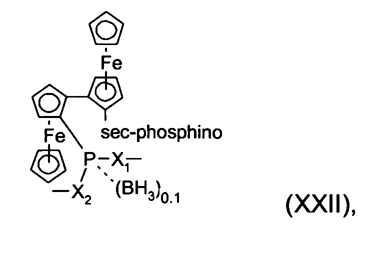 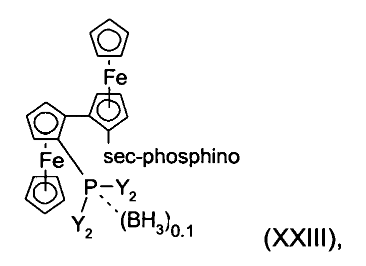 où le groupe -P(X₁-)(X₂-)----(BH₃)_{0,1} présente la signification indiquée dans la revendication 1 et Y₂ représente Cl ou Br.

15. Procédé selon la revendication 9 pour la préparation de composés des formules XXIV sous forme de racémates, de diastéréo-isomères et de paires de diastéréo-isomères, 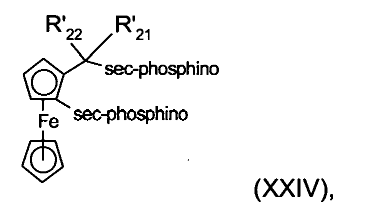 où
R'₂₁ signifie hydrogène ou C₁-C₆-alkyle,
R'₂₂ représente C₁-C₆-alkyle, C₃-C₈-cycloalkyle, phényle ou benzyle le cas échéant substitué par F, C₁-C₆-alkyle ou C₁-C₆-alcoxy,
comprenant les étapes :
a) transformation d'un composé de formule XX, 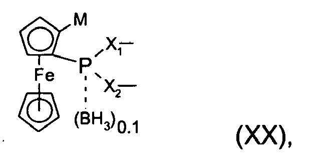 avec un aldéhyde ou une cétone de formule R'₂₁R'₂₂C(O) en un composé de formule XXV, 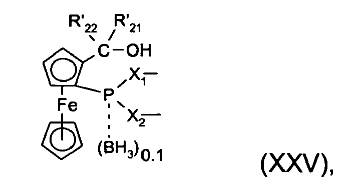
b) préparation de composés de formule XXVI, 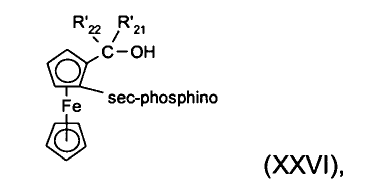 en ce qu'on
b1) élimine d'un composé de formule XXV, le cas échéant, le groupe borane, puis on dissocie les radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis on substitue avec un composé métallo-organique (réactif de Grignard) les atomes de CI ou de Br par un radical hydrocarboné avec formation d'une phosphine secondaire, ou b2) dissocie les radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis on substitue avec un composé métallo-organique (réactif de Grignard) les atomes de CI ou de Br par un radical hydrocarboné avec formation d'une sec-phosphine, puis on élimine le groupe borane,
c) acyle le composé de formule XXVI, par exemple avec un anhydride d'acide carboxylique, et
d) substitue le groupe C₁-C₈-acyloxy formé par une sec-phosphine secondaire avec formation de composés de formule XXIV.

16. Composés des formules XXVII et XXVIII sous forme de racémates, de diastéréo-isomères et de paires de diastéréo-isomères, 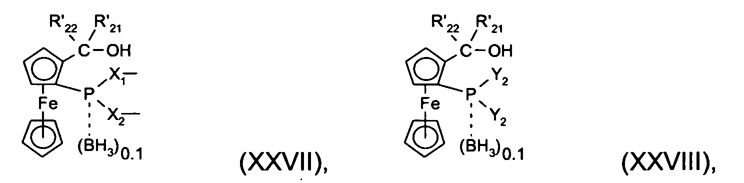 où R₂₁ et R₂₂ ont la signification indiquée dans la revendication 15, Y₂ représente CI ou Br, et le groupe -P(X₁-)(X₂-)----(BH₃)_{0,1} présente les significations indiquées dans la revendication 1.

17. Procédé selon la revendication 8 pour la préparation de composés de formule XXIX sous forme de racémates, de diastéréo-isomères et de paires de diastéréo-isomères, 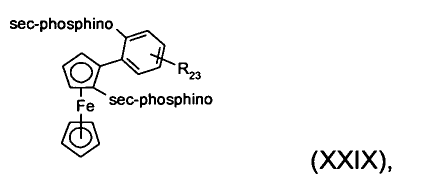 comprenant les étapes :
a) transformation d'un composé de formule XX 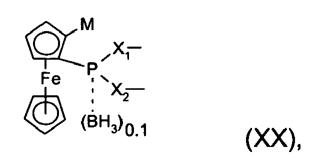 où
M représente -Sn(C₁-C₄-alkyle)₃ ou -ZnX₃, le groupe -P(X₁-)(X₂-)----(BH₃)_{0,1} présente la signification indiquée dans la revendication 1, en présence d'un catalyseur de Pd avec du 1-bromo-2-iodobenzène ou du 1,2-di-iodobenzène en un composé de formule XXX, 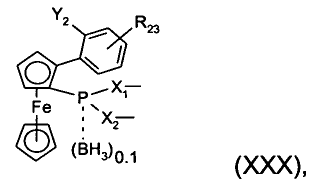
où Y₂ représente brome ou iode,
b) pour la préparation de monophosphines de formule XXXI 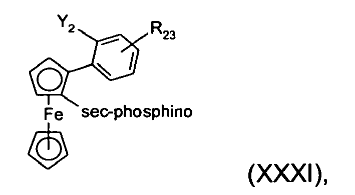
b1) on élimine d'un composé de formule XXX, le cas échéant, le groupe borane, puis on dissocie les radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis on substitue avec un composé métallo-organique (réactif de Grignard) les atomes de Cl ou de Br par un radical hydrocarboné avec formation d'une phosphine secondaire, ou b2) on dissocie les radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis on substitue avec un composé métallo-organique (réactif de Grignard) les atomes de CI ou de Br par un radical hydrocarboné avec formation d'une sec-phosphine, puis on élimine le groupe borane, et
c) on substitue alors l'atome de brome ou d'iode par métallisation par un lithium-alkyle (lithium-butyle) et, par réaction consécutive avec un halogénure de sec-phosphine, par un groupe sec-phosphine, ou
d) pour la préparation de composés de formule XXXII, 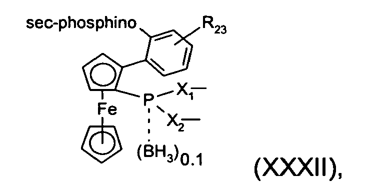 on transforme un composé de formule XX avec un iodure d'ortho-sec-phosphinobenzène en présence d'halogénures de métal, tels que par exemple ZnBr₂ et des catalyseurs de Pd, et
d1) on élimine d'un composé de formule XXXII, le cas échéant, le groupe borane, puis on dissocie les radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis on substitue avec un composé métallo-organique (réactif de Grignard) les atomes de CI ou de Br par un radical hydrocarboné avec formation d'une phosphine secondaire, ou d2) on dissocie les radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis on substitue avec un composé métallo-organique (réactif de Grignard) les atomes de CI ou de Br par un radical hydrocarboné avec formation d'une sec-phosphine, puis on élimine le groupe borane.

18. Composés des formules XXX, XXXII, XXXIII et XXXIV sous forme de racémates, de diastéréo-isomères et de paires de diastéréo-isomères, 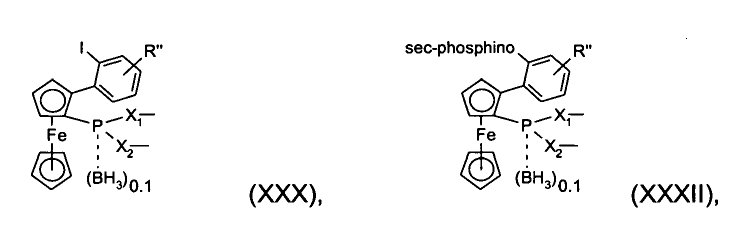 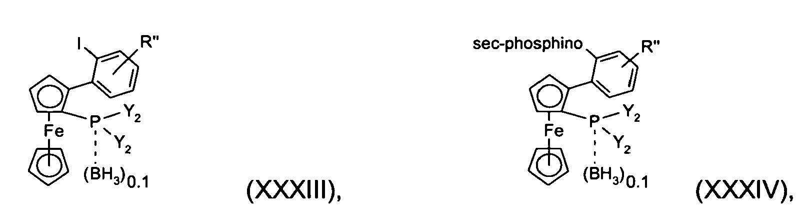 où le groupe -P(X₁-)(X₂-)----(BH₃)_{0,1} présente les significations indiquées dans la revendication 1, Y₂ représente Cl ou Br, et R" signifie hydrogène ou un substituant.

19. Procédé selon la revendication 8 pour la préparation de composés de formule XXXV sous forme de racémates, de diastéréo-isomères et de paires de diastéréo-isomères, 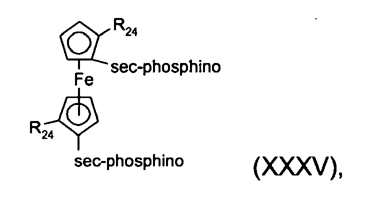 où
R₂₄ représente un radical de formule -CR₂₅R₂₆-Y₃ ou un groupe R₂₈,
R₂₅ signifie hydrogène, C₁-C₆-alkyle, C₃-C₈-cycloalkyle, phényle ou benzyle le cas échéant substitué par F, C₁-C₆-alkyle ou C₁-C₆-alcoxy,
R₂₆ représente C₁-C₆-alkyle, C₃-C₈-cycloalkyle, phényle ou benzyle le cas échéant substitué par F, C₁-C₆-alkyle ou C₁-C₆-alcoxy,
Y₃ représente C₁-C₄-alcoxy, C₁-C₈-acyloxy ou sec-amino, et
R₂₈ représente C₁-C₆-alkyle, C₃-C₈-cycloalkyle, phényle ou benzyle le cas échéant substitué par F, C₁-C₆-alkyle ou C₁-C₆-alcoxy,
comprenant les étapes :
a) transformation d'un composé de formule XXXVI 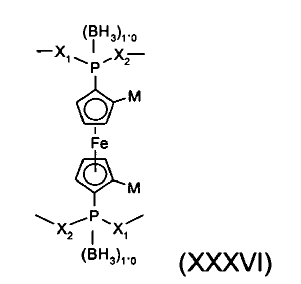 où
le groupe -P(X₁-)(X₂-)----(BH₃)_{0,1} présente les significations indiquées dans la revendication 1, avec un aldéhyde, une cétone ou une imine de formule CR₂₅R₂₆=Y₄, où Y₄ représente =O ou =N(C₁-C₄alkyle), ou avec un halogénure R₂₃Y₆, où Y₆ signifie CI, Br ou iode, en composés de formule XXXVII 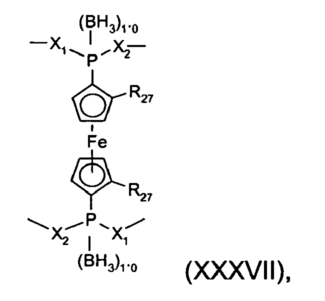 où
R₂₇ signifie le groupe -CR₂₅R₂₆-Y₅ ou R₂₈, où R₂₅ et R₂₆ ont les significations susmentionnées et Y₅ représente -OH ou -NH(C₁-C₄alkyle), alkylation du groupe NH, le cas échéant alkylation ou acylation du groupe OH et le cas échéant substitution du groupe acyloxy par sec-amino, et
b) pour la préparation de composés de formule XXXV
b1) on élimine d'un composé de formule XXXVII, le cas échéant, le groupe borane, puis on dissocie les radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis on substitue avec un composé métallo-organique (réactif de Grignard) les atomes de CI ou de Br par un radical hydrocarboné avec formation d'une phosphine secondaire, ou b2) on dissocie les radicaux (hétéro)hydrocarbure-X₁, (hétéro)hydrocarbure-X₂, ou X₁-(hétéro)hydrocarbure-X₂ avec formation d'un groupe -PCl₂ ou -PBr₂, puis on substitue avec un composé métallo-organique (réactif de Grignard) les atomes de CI ou de Br par un radical hydrocarboné avec formation d'une sec-phosphine, puis on élimine le groupe borane.

20. Produits intermédiaires sous forme de racémates, de diastéréo-isomères et de paires de diastéréo-isomères des formules XXXVII et XXXVIII 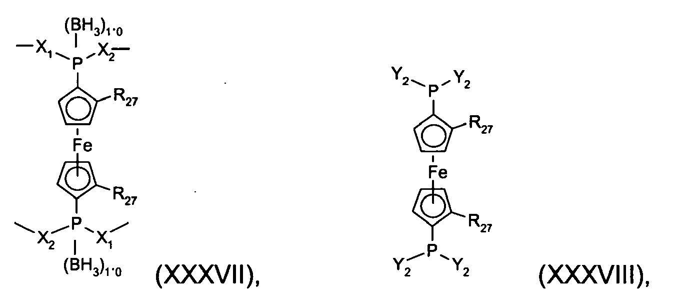 où
R₂₇ présente les significations indiquées dans la revendication 19 et le groupe -P(X₁-)(X₂-)----(BH₃)_{0,1} présente les significations indiquées dans la revendication 1, et Y₂ représente Cl ou Br.
